# EUROPÄISCHE PATENTSCHRIFT

(11) **EP 4 371 272 B1**
(45) Veröffentlichungstag und Bekanntmachung des Hinweises auf die Patenterteilung: **02.09.2026**
(21) Anmeldenummer: 22747974.8
(22) Anmeldetag: 06.07.2022
(51) Int. Cl.: H04L 9/40, H04L 9/08, H04L 9/00, G06Q 20/06, G06Q 20/40, G07D 7/01, G07D 7/004

(54) **REVOZIEREN KRYPTOGRAPHISCHER SCHLÜSSEL MITTELS BLOCKCHAINGESTÜTZTER BANKNOTE**
REVOCATION OF CRYPTOGRAPHIC KEYS BY WAY OF A BLOCKCHAIN-BASED BANKNOTE
RÉVOCATION DE CLÉS CRYPTOGRAPHIQUES AU MOYEN D'UN BILLET DE BANQUE À BASE DE CHAÎNE DE BLOCS

(30) Priorität: 13.07.2021 DE 102021118104
(43) Veröffentlichungstag der Anmeldung: 22.05.2024
(73) Patentinhaber: Bundesdruckerei GmbH, 10969 Berlin (DE)
(72) Erfinder: PETERS, Florian, 10437 Berlin (DE)
(74) Vertreter: Richardt Patentanwälte PartG mbB
(86) Internationale Anmeldenummer: PCT/EP2022/068722
(87) Internationale Veröffentlichungsnummer: WO 2023/285232

(56) Entgegenhaltungen:
- US-A1- 2005 150 740
- US-A1- 2018 183 771
- US-A1- 2019 236 594
- US-A1- 2020 151 682

## Beschreibung

Die Erfindung betrifft ein Verfahren zum Revozieren eines asymmetrischen Schlüsselpaars eines Nutzercomputersystems unter Verwendung einer Banknote sowie ein entsprechendes Nutzercomputersystem zum Revozieren eines asymmetrischen Schlüsselpaars eines Nutzercomputersystems unter Verwendung einer Banknote. Ferner betrifft die Erfindung eine Banknote zum Revozieren eines asymmetrischen Schlüsselpaars eines Nutzercomputersystems sowie ein System, welches ein entsprechendes Nutzercomputersystem und eine entsprechende Banknote zum Ausführen des Verfahrens umfasst.

Im Zuge der zunehmenden Digitalisierung rücken heutzutage mehr und mehr bargeldlose Zahlungsinstrumente in den Vordergrund, insbesondere basierend auf elektronischen Verfahren zur Zahlungsabwicklung. Im bargeldlosen Zahlungsverkehr erfolgt ein Transfer von Zahlungsmitteln, ohne dass dabei Bargeld transferiert wird. Bei Barzahlungen wird Bargeld, d.h. Banknoten oder Münzen, zwischen Zahlungspflichtigem und Zahlungsempfänger ausgetauscht, während es bei einer bargeldlosen Zahlung nicht zu einem solchen Austausch von Bargeld kommt.

Bargeld hat dabei beispielsweise den Vorteil, dass es für jedermann verfügbar ist und schnell sowie überall eingesetzt werden kann. So ist beispielsweise für eine bargeldbasierte Zahlungsabwicklung kein Bankkonto erforderlich. Zudem wird Bargeld von den Besitzern oftmals als Wertaufbewahrungsmittel geschätzt.

Bargeldlose Zahlungsverfahren haben demgegenüber beispielsweise den Vorteil, dass sie eine effiziente Zahlungsabwicklung ermöglichen, selbst wenn sich Zahlungspflichtiger und Zahlungsempfänger an entfernten Orten aufhalten, wie es beispielsweise bei Einkäufen über das Internet der Fall ist. Dies können bekannte Banknoten nicht leisten.

Die US 2020/151682 A1 beschreibt ein Verfahren, welches ein Empfangen einer Anfrage nach digitaler Währung durch einen Zentralrechner umfasst. Die Anfrage umfasst eine Seriennummer und einen Nennwert einer physischen Währung. Der Zentralrechner erzeugt die digitale Währung für den Nennwert und verknüpft diese mit der Seriennummer. Das Erzeugen umfasst ein Aufzeichnen der digitalen Währung auf einer Blockchain. Der Zentralrechner übermittelt eine Benachrichtigung über die Erzeugung der digitalen Währung. Ferner veranlasst der Zentralrechner, dass die physische Währung in einem Fiat-Währungssystem aus dem Umlauf genommen wird.

Die US 2019/236594 A1 beschreibt ein System und ein Verfahren zum Bootstrapping eines kryptographischen Ledgers basierend auf einem Anspruch einer Fiat-Währung. Der Anspruch wird unter Verwendung von Bargeldnachweissystemen überprüft, welche eine Anti-Spoofing-, Anti-Fälschungs- sowie Fernverifizierungs- und Transaktionsfunktionen umfassen. Der Anspruch wird zudem unter Verwendung von Saldonachweissystemen überprüft, bei denen ein oder mehrere Kontostände mithilfe eines Dienstes eines Finanzinstituts oder eines Datenanbieters überprüft werden. Diese Systeme werden verwendet, um eine kryptografische Währung und Anwendungsplattform zu implementieren, die Finanztransaktionen und allgemeine Rechenfunktionen ermöglicht.

Die US 2005/150740 A1 beschreibt ein Blattgut mit einem elektrischen Schaltkreis sowie Vorrichtungen und Verfahren zur Bearbeitung des Blattguts. Das Blattgut weist mindestens einen elektrischen Schaltkreis auf, wobei Informationen und/oder Daten von einer Vorrichtung zu dem elektrischen Schaltkreis und/oder von dem elektrischen Schaltkreis zu der Vorrichtung übertragen werden und zumindest ein Teil der übertragenen Informationen für eine Bearbeitung verwendet wird.

Die US 2018/183771 A1 beschreibt ein Verfahren, bei welchem Signaturbehörde widerrufbare Einmalschlüssel erzeugt, mit denen digitale Signaturen erstellt werden können. Die Signaturbehörde erzeugt einen Satz Einmalschlüssel, wobei jeder Einmalschlüssel über einen geheimen Schlüssel und einen öffentlichen Schlüssel verfügt, der aus einem Hash des Geheimschlüssels abgeleitet ist. Die Signaturbehörde erzeugt einen oder mehrere Sperrwerte, die bei Veröffentlichung beweisen, dass die Signaturbehörde berechtigt ist, entsprechende kryptografische Schlüssel zu widerrufen. Die Signaturbehörde hasht die öffentlichen Schlüssel und die Sperrwerte und ordnet die Hashes in einem Hash-Baum an, wobei die Wurzel des Hash-Baums als öffentlicher Schlüssel der Signaturbehörde fungiert.

Der Erfindung liegt daher die Aufgabe zugrunde, eine Verwendung für eine verbesserte Banknote zu ermöglichen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Revozieren eines ersten asymmetrischen Schlüsselpaars eines ersten Nutzercomputersystems unter Verwendung einer Banknote. Das erste asymmetrische Schlüsselpaar umfasst einen ersten privaten kryptographischen Schlüssel und einen ersten öffentlichen kryptographischen Schlüssel. Das erste asymmetrische Schlüsselpaar ist einer ersten Blockchainadresse in einer Blockchain zugeordnet. Für das erste asymmetrische Schlüsselpaar ist ferner eine Zuordnung zu der Banknote in der Blockchain registriert, welche unter Verwendung eines banknotenindividuellen zweiten privaten kryptographischen Schlüssels eines banknotenindividuellen zweiten asymmetrischen Schlüsselpaars der Banknote signiert ist.

Die Banknote umfasst ein Sicherheitselement mit einem Prozessor und einem Speicher mit Programminstruktionen. In dem Speicher ist eine die Banknote eindeutig identifizierende Identifikationsnummer gespeichert. In einem geschützten Speicherbereich des Speichers ist der zweite private kryptographische Schlüssel gespeichert. Das zweite asymmetrische Schlüsselpaar ist einer banknotenindividuellen zweiten Blockchainadresse in der Blockchain zugeordnet.

Das Verfahren umfasst unter Verwendung eines zweiten Nutzercomputersystems:
- Senden einer Revozierungsanfrage zum Revozieren des ersten asymmetrischen Schlüsselpaars von dem zweiten Nutzercomputersystem an die Banknote,
- in Antwort auf die Revozierungsanfrage, Empfangen eines unter Verwendung des zweiten privaten kryptographischen Schlüssels signierten ersten Kryptogramms von der Banknote durch das zweite Nutzercomputersystem, wobei das erste Kryptogramm die Identifikationsnummer der Banknote und eine Revozierungsbestätigung der Banknote umfasst,
- Weiterleiten des signierten ersten Kryptogramms durch das zweite Nutzercomputersystem an einen Blockchain-Server der Blockchain zur Eintragung der Revozierungsbestätigung der durch die Identifikationsnummer identifizierten Banknote in die Blockchain, wobei durch die Eintragung der Revozierungsbestätigung das erste asymmetrische Schlüsselpaar revoziert und in Folge der Revozierung Eintragungen von Transaktionen in die Blockchain blockiert werden, deren Freigaben auf einer Signatur unter Verwendung des revozierten ersten privaten kryptographischen Schlüssels basiert.

Ausführungsformen können den Vorteil habe, dass mit Banknoten, welche kryptographische Schlüssel umfassen, eine digitale Währung bereitgestellt werden kann, die eng an das Bargeld angelehnt ist. Dieses digitale Bargeld in Form der Banknote bietet neben dem klassischen bargeldlosen Zahlungsablauf mit Übergabe der Banknote zudem eine Möglichkeit über digitale Kommunikationskanäle mit der Außenwelt zu kommunizieren und so eine Zahlung abzuwickeln. Hierbei kann zur Zahlungsabwicklung eine Blockchain verwendet werden, in welcher Transaktionen zwischen Blockchainadressen protokoliert werden, wobei eine der Blockchainadressen der entsprechenden Banknote zugeordnet ist. Beispielsweise ist diese Blockchainadresse an einen öffentlichen kryptographischen Schlüssel der Banknote gekoppelt.

Eine solche Banknote kann für jedermann verfügbar sein und lässt sich schnell sowie überall einsetzen. Selbst bargeldlose Zahlungsabwicklungen sind mit einer solchen Banknote möglich, ohne dass zusätzliche Maßnahmen, wie etwa ein Einrichten eines Bankkontos, erforderlich wären. Vielmehr ist der Banknote selbst eine Blockchainadresse zugeordnet, welche der Nutzer für bargeldlose Zahlungen verwenden kann. Zudem kann sich der Nutzer selbstständig allein unter Verwendung der Banknote weitere Blockchainadressen zur Abwicklung bargeldlose Zahlungen, etwa mit Nutzercomputersystemen, einrichten.

Die Banknote ist beispielsweise mit Prozessor und einem asymmetrischen Schlüsselpaar ausgestattet. Die Banknote ist dazu konfiguriert unter Verwendung asymmetrischen Schlüsselpaars, genauer gesagt des privaten kryptographischen Schlüssels des entsprechenden Schlüsselpaars Signaturen zu erstellen. Ferner ist die Banknote mit einer digitalen Identifikationsnummer, etwa einer digitalen Kopie der Seriennummer, ausgestattet.

Ferner kann eine entsprechende Banknote zum Registrieren von kryptographischen Schlüsseln von Nutzercomputersystemen verwendet werden, womit die entsprechenden kryptographischen Schlüssel der Nutzercomputersysteme wie die kryptographischen Schlüssel der Banknote zur Zahlungsabwicklung mittels der Blockchain verwendet werden können. Voraussetzung hierfür ist beispielsweise eine Registrierung der entsprechenden kryptographischen Schlüssel der Nutzercomputersysteme unter Verwendung der Banknote in der Blockchain. Beispielhafte Zahlungswege mit einem solchem Nutzercomputersystem, etwa einem Smartphone, können Zahlungen an Dritte umfassen, welche über eine auf dem Nutzercomputersystem installierte Zahlungsapplikation unter Verwendung eines privaten kryptographischen Schlüssels eines registrierten asymmetrischen Schlüsselpaars des Nutzercomputersystems ausgelöst werden. Ferner können beispielhafte Zahlungswege direkte Zahlungen mit der Zahlungsapplikation vor Ort über einen sogenannten Point of Sale umfassen. Hierzu stellt das Nutzercomputersystem beispielsweise eine kabellose Kommunikationsverbindung, insbesondere eine verschlüsselte Kommunikationsverbindung, mit einem Computersystem des Point of Sale, etwa einer Kasse, her.

Die Banknote liegt dem Nutzer in physischer Form vor und kann von diesem mit dem Nutzercomputersystem, etwa einem Smartphone verknüpft werden, indem eine Zuordnung eines asymmetrischen Schlüsselpaars des Nutzercomputersystem in der Blockchain registriert wird. Dadurch kann es dem Nutzer ermöglicht werden in komfortabler Weise das Nutzercomputersystem für Zahlungen nutzbar zu machen. Anstelle der Banknote kann der Nutzer auch Zahlungen mit dem Nutzercomputersystem abwickeln. Bei einem Verlust des Nutzercomputersystems, etwa einem Smartphone, bleibt eine Blockchainadresse des mit dem Nutzercomputersystem verlorenen asymmetrischen Schlüsselpaars erhalten. Hierzu ist es nicht erforderlich, dass in der Blockchain Daten zu dem Nutzer, wie etwa ein Name, oder Daten zu dem Nutzercomputersystem, wie etwa eine Gerätenummer, registriert sein müssen. In der Blockchain sind für die Banknoten und Nutzercomputersysteme beispielsweise lediglich Identifikationsnummern der Banknoten und öffentliche kryptographische Schlüssel der Banknoten und Nutzercomputersysteme registriert. In der Blockchain sind für die Banknoten und Nutzercomputersysteme beispielsweise lediglich öffentliche kryptographische Schlüssel der Banknoten und Nutzercomputersysteme registriert. Durch das vorgenannte Verfahren zum Revozieren von asymmetrischen Schlüsselpaaren von Nutzercomputersystemen ist zudem eine komfortable Möglichkeit des Revozierens gegeben. Hierbei kann sowohl ein asymmetrisches Schlüsselpaar eines anderen, etwa verlorenen Nutzercomputersystem als auch ein eigenes asymmetrisches Schlüsselpaar desselben Nutzercomputersystem revoziert werden.

Eine Nutzung eines Nutzercomputersystem für Zahlungen kann vorteilhaft sein, da beispielsweise Protokolle zur Zahlungsabwicklung nicht auf der Banknote implementiert werden müssen. Es reicht beispielsweise aus, dass die entsprechenden Protokolle auf dem Nutzercomputersystem gespeichert sind. Auf der Banknote selbst genügen Protokolle zum Registrieren und zum Revozieren asymmetrischer Schlüsselpaare von Nutzercomputersystemen. In diesem Fall stellt die Banknote beispielsweise keine oder nur eine beschränkte Zahlungsfähigkeit bereit. Ebenso können auf der Banknote beispielsweise aber auch die vollständigen Protokolle zur Zahlungsabwicklung implementiert sein.

Zudem kann mit einer Zahlungsapplikation auf einem Nutzercomputersystem, wie etwa einem Smartphone, eine Zahlungsabwicklung vereinfacht werden. Insbesondere die Eingabe- und Ausgabevorrichtungen eines solchen Nutzercomputersystems vereinfachen die Nutzung. Zudem kann ein entsprechendes Nutzercomputersystem über ein oder mehrere biometrische Sensoren verfügen, welche als Voraussetzung zu einer Zahlung unter Verwendung des Nutzercomputersystems prüfen, ob es sich bei einem aktuellen Nutzer des Nutzercomputersystems auch um einen auf dem Nutzercomputersystem registrierten und damit legitimierten Nutzer handelt. Dadurch kann Missbrauch vorgebeugt werden, ohne dass Daten des Nutzers auf der Banknote oder zentral in der Blockchain gespeichert werden.

Zugleich stellt die Banknote in diesem System den alleinigen Anker und das einzige werthaltende Wertpapier dar. Die asymmetrischen Schlüsselpaare der Nutzercomputersysteme und deren Nutzung in der Blockchain sind von den Banknoten, denen sie zugeordnet sind, abhängig.

Ausführungsformen können den Vorteil haben, dass eine entsprechende Banknote mit Prozessor nicht nur als Bargeldzahlungsmittel im üblichen Sinne verwendet werden kann, sondern zusätzlich auch eine bargeldlose Zahlung mit der Banknote ausgeführt werden kann. Bei einer Verwendung als Bargeldzahlungsmittel im üblichen Sinne wird die Banknote im Zuge des Zahlungsabwicklung von einem Zahlungspflichtigen an einen Zahlungsempfänger übergeben oder der Zahlungsempfänger übergibt die entsprechende Banknote als Wechselgeld im Zuge der Zahlungsabwicklung dem Zahlungspflichtigen. Mit der Übergabe der Banknote geht das Eigentum an der Banknote von dem Übergeber an den Empfänger über. Mit dem Eigentum an der Banknote geht auch das Eigentum an dem aktuellen Nominalwert der Banknote, d.h. dem der Blockchainadresse der Banknote zugeordneten Nominalwert, an den Empfänger über.

Bei einer Verwendung für eine bargeldlose Zahlung, d.h. ohne Übergabe der Banknote bzw. Übergang des Eigentums an der Banknote, erfolgt die Zahlung durch ein Bereitstellen eines zahlungsindividuellen Kryptogramms durch die Banknote. Dieses Kryptogramm gibt eine Transaktion frei, bei welcher der zu zahlende Betrag von der Blockchainadresse der Banknote an eine Blockchainadresse des Zahlungsempfängers transferiert bzw. der Blockchainadresse des Zahlungsempfängers zugeordnet wird.

Ein Bereitstellen eines asymmetrischen Schlüsselpaars auf einem Nutzercomputersystem, für welches eine Zuordnung zu der Banknote in der Blockchain registriert ist, erlaubt es die bargeldlose Zahlungsfunktionalität der Banknote auf das entsprechende Nutzercomputersystem zu übertragen. Dabei ist das asymmetrische Schlüsselpaar und damit die Blockchainadresse des Nutzercomputersystems infolge der registrierten Zuordnung von der Banknote und deren individueller Blockchainadresse abhängig. Abhängig ist die Blockchainadresse des Nutzercomputersystems von der Banknote insofern, als das Eintragungen von Transaktionen, deren Freigaben auf einer Signatur unter Verwendung des privaten kryptographischen Schlüssels des Nutzercomputersystems basieren, in die Blockchain nur möglich sind, falls in der Blockchain eine valide Registrierung einer Zuordnung des asymmetrischen Schlüsselpaars zu der Banknote eingetragen ist. Falls keine solche Registrierung in der Blockchain eingetragen ist oder eine eingetragene Registrierung revoziert wurde, werden Eintragungen von Transaktionen des Nutzercomputersystems blockiert, deren Freigaben auf einer Signatur unter Verwendung des privaten kryptographischen Schlüssels des Nutzercomputersystems basieren. Beispielsweise prüft ein für die Eintragung der entsprechenden Transaktion zuständiger Blockchain-Server, ob für den privaten kryptographischen Schlüssel des Nutzercomputersystems, auf dessen Signatur die Freigabe der Transaktion basiert, eine valide Registrierung einer Zuordnung zu der Banknote in der Blockchain eingetragen ist. Beispielsweise führt der Blockchain-Server einen Smart Contract aus, welcher dazu konfiguriert ist, dass er bei Ausführen durch den Blockchain-Server bzw. dessen Prozessor den Blockchain-Server dazu veranlasst, das Vorhandensein einer entsprechenden validen Registrierung zu prüfen. Nur wenn eine solche valide Registrierung vorliegt, wird eine entsprechende Transaktion eingetragen, andernfalls wird die Eintragung blockiert. Die Registrierung unter Verwendung der Banknote ist somit Voraussetzung für die Nutzung des asymmetrischen Schlüsselpaars des Nutzercomputersystems für Transaktionen mit der Blockchainadresse des Nutzercomputersystems und damit für die Nutzung der entsprechenden Blockchainadresse selbst.

Im Ergebnis gewährt eine Verfügungshoheit über die Banknote bzw. dessen privaten kryptographischen Schlüssel also zugleich auch eine Verfügungshoheit über die Blockchainadresse des Nutzercomputersystems, da mit der Banknote das asymmetrische Schlüsselpaar des Nutzercomputersystem in der Blockchain zur Nutzung registriert und eine entsprechende Registrierung auch wieder revoziert werden kann. Wer die Banknote besitzt kann die Blockchainadresse freischalten und wieder sperren durch Registrierung bzw. Revozierung des entsprechenden asymmetrischen Schlüsselpaars des Nutzercomputersystems.

Beispielsweise resultiert eine Revozierung der Blockchainadresse der Banknote automatisch in einer Revozierung des entsprechenden Kontos. Dies kann beispielsweise dadurch implementiert werden, dass eine valide Registrierung der Zuordnung des asymmetrischen Schlüsselpaars des Nutzercomputersystems zu der Banknote in der Blockchain, nicht nur voraussetzt, dass die entsprechende Zuordnung von der Banknote, d.h. unter Verwendung des privaten kryptographischen Schlüssels der Banknote, signiert in der Blockchain eingetragen und nicht revoziert ist, sondern dass zugleich eine valide Registrierung der Banknote selbst in der Blockchain eingetragen ist. Diese Registrierung der Banknote umfasst beispielsweise einen Registrierungseintrag mit der individuellen Identifikationsnummer der Banknote und/oder dem öffentlichen kryptographischen Schlüssel der Banknote. Der Registrierungseintrag bzw. die von dem Registrierungseintrag umfassten Daten sind beispielsweise unter Verwendung eines privaten kryptographischen Schlüssels eines Ausstellercomputersystems oder Herstellercomputersystems eines Ausstellers bzw. Herstellers der Banknote signiert. Zum Revozieren der Banknote kann das Ausstellercomputersystem/Herstellercomputersystem beispielsweise eine Revozierungsbestätigung einer Revozierung der Bankknote mit der individuellen Identifikationsnummer der Banknote und/oder mit dem öffentlichen kryptographischen Schlüssel der Banknote erstellen und unter Verwendung des privaten kryptographischen Schlüssels des Ausstellercomputersystems/Herstellercomputersystems signieren. Die signierte Revozierungsbestätigung zum Revozieren der Banknote wird von dem Ausstellercomputersystem/Herstellercomputersystem beispielsweise an einen Blockchain-Server zum Eintragen in die Blockchain gesendet. Durch die Eintragung der Revozierungsbestätigung zum Revozieren der Banknote wird die Banknote bzw. das zweite asymmetrische Schlüsselpaar der Banknote revoziert und in Folge der Revozierung werden Eintragungen von Transaktionen in die Blockchain blockiert, deren Freigaben auf einer Signatur unter Verwendung des revozierten zweitem privaten kryptographischen Schlüssels basiert. Ferner wird in Folge der Revozierung der Banknote beispielsweise das erste asymmetrische Schlüsselpaar revoziert, da für dieses nun die valide Registrierung wegfällt. Alternativer Weise könnte eine Revozierung der Banknote auch durch ein anderes dazu berechtigtes Computersystem, welches einen entsprechenden privaten kryptographischen Schlüssel zum Nachweis dieser Berechtigung umfasst, erfolgen. Bei einem solchen berechtigten Computersystem könnte es sich beispielsweise um ein Computersystem der die Banknote ausgebenden Zentralbank handeln.

Ausführungsformen können den Vorteil haben, dass eine Banknote dazu genutzt werden kann eine Blockchainadresse für ein Nutzercomputersystem, insbesondere ein mobiles tragbares Endgerät, wie etwa ein Smartphone, und damit ein auf der Blockchain basierendes Konto einzurichten, welches von der Banknote bzw. von deren Freigabe abhängig ist. Der private kryptographische Schlüssel der Banknote dient dabei als ein Generalschlüssel. Dieser ist auf der Banknote sicher gespeichert und kann unabhängig von dem Nutzercomputersystem aufbewahrt werden. Besteht die Notwendigkeit für ein Nutzercomputersystem eine Nutzung der Blockchain bzw. einer Blockchainadresse freizugeben, kann dies unter Verwendung des Generalschlüssels der Banknote erfolgen, mit welchem eine Zuordnung eines asymmetrischen Schlüsselpaars des Nutzercomputersystems signiert wird und dadurch zur Registrierung in der Blockchain bestätigt wird. Soll das entsprechende asymmetrische Schlüsselpaar des Nutzercomputersystems bzw. dessen Nutzung in der Blockchain revoziert werden, kann dies ebenfalls unter Verwendung des Generalschlüssels erfolgen.

Wird die Banknote unabhängig von dem Nutzercomputersystem aufbewahrt, beispielsweise in einem Safe oder Schließfach, kann die Wahrscheinlichkeit eines gleichzeitigen Kompromittierens oder einer gleichzeitigen Beschädigung sowohl des Nutzercomputersystems als auch der Banknote deutlich reduziert werden. Die Banknote dient somit als ein Sicherheitsanker.

Ausführungsformen können den Vorteil haben, dass eine einfache, komfortable und sichere Nutzung eines Kontos in Form einer Blockchainadresse mittels des Nutzcomputersystems, wie etwa einem Smartphone, ermöglicht wird: Für eine solche Blockchainadresse, sind außer des öffentlichen kryptographischen Schlüssels des Nutzercomputersystems beispielsweise keine Daten des Nutzercomputersystems oder des Nutzers desselben in der Blockchain hinterlegt. Eine solche Blockchainadresse erlaubt es dem Nutzercomputersystem somit anonyme Zahlungen auszuführen. Handelt es sich bei dem Nutzercomputersystem um ein mobiles tragbares Endgerät, wie etwa ein Smartphone, sind entsprechende anonyme Zahlungen überall und jederzeit möglich. Zugleich wird ein hohes Maß an Sicherheit geboten, da die Banknote selbst als Backup dient.

Selbst bei einem Verlust des Nutzercomputersystems oder einer Beschädigung desselben, besteht für den Nutzer unter Verwendung der Banknote eine Möglichkeit zum eigenständigen Revozieren des asymmetrischen Schlüsselpaars des Nutzercomputersystems und damit zum Revozieren der Nutzung der Blockchain. Dieses Revozieren erfolgt im Falle eines Verlusts oder einer Beschädigung des Nutzercomputersystems beispielsweise durch ein weiteres Nutzercomputersystem des Nutzers. Beispielsweise kann mit dem weiteren Nutzercomputersystem durch den Nutzer eigenständig ein neues asymmetrisches Schlüsselpaar erzeugt und unter Verwendung der Banknote in der Blockchain registriert werden. Dieses neue asymmetrische Schlüsselpaar, welchem eine neue Blockchainadresse in der Blockchain zugeordnet ist, kann zum Ersetzen des revozierten asymmetrischen Schlüsselpaars verwendet werden. Ebenso kann bei einer Kompromittierung des asymmetrischen Schlüsselpaars, etwa im Falle einer Sicherheitslücke, dasselbe revoziert werden. In diesem Fall kann das Revozieren beispielsweise unter Verwendung des Nutzercomputersystems erfolgen. Beispielsweise kann mit dem weiteren Nutzercomputersystem durch den Nutzer eigenständig ein neues asymmetrisches Schlüsselpaar erzeugt und unter Verwendung der Banknote in der Blockchain registriert werden. Dieses neue asymmetrische Schlüsselpaar des weiteren Nutzercomputersystems, welchem eine neue Blockchainadresse in der Blockchain zugeordnet ist, kann zum Ersetzen des revozierten asymmetrischen Schlüsselpaars verwendet werden.

Zudem kann eine Banknote, etwa bei Implementierung eines Level 3 Merkmals, eine hohe Sicherheit bei Beschädigungen bieten, da sie selbst bei Beschädigung ersetzt werden kann. Beispielsweise kann die Zentralbank Zugriff auf die Blockchainadresse der Banknote und/oder auf die abhängigen Blockchainadressen von asymmetrischen Schlüsselpaaren von Nutzercomputersystemen besitzen, für welche eine Registrierung einer Zuordnung zu der Banknote in der Blockchain eingetragen ist. Damit kann die Zentralbank dem Nutzer beispielsweise selbst im Falle einer Beschädigung der Banknote und/oder des Nutzercomputersystemen Zugriff auf sein Geld gewähren kann.

Beispielsweise kann unter Verwendung einer Banknote mit Prozessor für ein Smartphone ein asymmetrisches Schlüsselpaar des Smartphones in der Blockchain registriert und so eine Nutzung eines dem asymmetrischen Schlüsselpaar zugeordnete Blockchainadresse ermöglicht werden. Ferner ermöglicht die Banknote mit Prozessor ein Revozieren der Registrierung bzw. des asymmetrischen Schlüsselpaars, etwa im Falle eines Verlusts des Smartphones, womit auch eine Nutzung des asymmetrischen Schlüsselpaars blockiert werden kann.

Beispielsweise zieht ein Nutzer eine entsprechende Banknote mit Prozessor aus einem Geldautomaten. Der Nutzer lädt eine Applikation zum Registrieren und Revozieren von asymmetrischen Schlüsselpaaren in der Blockchain unter Verwendung einer Banknote auf sein Nutzercomputersystem, etwa ein Smartphone. Der Nutzer stellt eine kabellose Kommunikationsverbindung zwischen der Banknote und dem Nutzercomputersystem her. Beispielsweise wird die Banknote an einer NFC-Schnittstelle des Nutzercomputersystems angeordnet. Nach einem Registrierungsprozess eines asymmetrischen Schlüsselpaars des Nutzercomputersystems in der Blockchain unter Verwendung der Applikation sowie der Banknote, kann der Nutzer beispielsweise direkt mit seinem Nutzercomputersystem, etwa einem Smartphone, unter Verwendung des registrierten asymmetrischen Schlüsselpaars bezahlen. Falls der Nutzer das Nutzercomputersystem beispielsweise verliert, dieses gestohlen wird oder einen Defekt aufweist, kann der Nutzer das bisherige Nutzercomputersystem durch ein neues Nutzercomputersystem ersetzen. Beispielsweise kauft er sich ein neues Computersystem, etwa ein neues Smartphone. Der Nutzer lädt die Applikation zum Registrieren und Revozieren von asymmetrischen Schlüsselpaaren in der Blockchain unter Verwendung einer Banknote auf sein neues Nutzercomputersystem, stellt eine kabellose Kommunikationsverbindung zu der Banknote her und revoziert das bisherige asymmetrische Schlüsselpaar des bisherigen Nutzercomputersystems. Ferner kann der Nutzer, wie bereits oben beschrieben, den Registrierungsprozess für ein neues asymmetrisches Schlüsselpaar des neuen Nutzercomputersystems in der Blockchain unter Verwendung der Applikation sowie der Banknote wiederholen. Die Registrierung des neuen asymmetrisches Schlüsselpaars ermöglicht es dem Nutzer beispielsweise direkt mit seinem neuen Nutzercomputersystem, etwa einem Smartphone, unter Verwendung des registrierten neuen asymmetrischen Schlüsselpaars zu bezahlen. Auf diese Weise können unter Verwendung einer Banknote beispielsweise asymmetrische Schlüsselpaare verschiedener Nutzercomputersysteme, wie etwa Smartphone, Smartwatch, Tablet, Laptop oder Desktop PC, registriert, zum Zahlen genutzt und ggf. revoziert werden.

Falls dem Nutzer das Smartphone mit dem asymmetrischen Schlüsselpaar, für welches eine Zuordnung zu der Banknote in der Blockchain registriert ist, abhandenkommt, etwa durch Verlust oder Diebstahl, besitzt der Nutzer nach wie vor die Banknote. Diese wird beispielsweise unabhängig von dem Smartphone an einem sicheren Ort verwahrt. Es besteht beispielsweise die Möglichkeit genau ein asymmetrisches Schlüsselpaar für ein Nutzercomputersysteme unter Verwendung der Banknote in der Blockchain zu registrieren. Es besteht beispielsweise die Möglichkeit mehrere asymmetrischen Schlüsselpaare für ein oder mehrere Nutzercomputersysteme unter Verwendung ein und derselben Banknote in der Blockchain zu registrieren. Der Nutzer kann nunmehr beispielsweise ein weiteres Nutzercomputersystem, etwa ein Smartphone, nutzen, um den oder die registrierten asymmetrischen Schlüsselpaare zu revozieren. Der Nutzer öffnet auf dem weitere Nutzercomputersystem eine Applikation zum Revozieren von kryptographischen Schlüsseln für die entsprechenden Bankkonten. Zum Initiieren des Vorgangs tippt der Nutzer beispielsweise in einer graphischen Benutzeroberfläche auf eine Schaltfläche, etwa "Revozieren ALLER zugeordneter Schlüssel" bzw. "Revoke ALL associated keys". Der Nutzer legt die Banknote an das Nutzercomputersystem an. Die auf dem Nutzercomputersystem bereitgestellte Applikation kann nun direkt die Banknote bzw. deren privaten kryptographischen Schlüssel zum Signieren einer Revozierungsbestätigung zum Revozieren der der Banknote zugeordneten asymmetrischen Schlüsselpaare nutzen, deren Registrierungen unter Verwendung des privaten kryptographischen Schlüssels der Banknote signiert sind. Somit könnten die der Banknote zugeordneten asymmetrischen Schlüsselpaare und damit die entsprechenden Blockchainadressen revoziert werden. Die den entsprechenden Blockchainadressen zugeordneten Guthaben bzw. Geldbeträge können beispielsweise zurück an die Banknote bzw. die der Banknote zugeordneten Blockchainadresse überwiesen werden. Alternativ kann der Nutzer beispielsweise auch eine IBAN angeben, um das Geld von zugeordneten, zu revozierenden Blockchainadressen an die IBAN zu überweisen. Dies würde es allerdings notwendig machen, dass mit der IBAN zusätzliche Informationen bereitgestellt werden müssen und damit die Anonymität aufhoben wird. Demgegenüber hätte eine Überweisung an eine Blockchainadresse den Vorteil, dass die Anonymität gewahrt bleiben kann.

Der private kryptographische Schlüssel der Banknote ist sicher in einem Sicherheitselement der Banknote gespeichert, sodass er beispielsweise nicht ausgelesen werden kann. Ist der private kryptographische Schlüssel der Banknote nicht auslesbar, können Transaktionen von dem Banknotenkonto nur unter unmittelbar Beteiligung durch die Banknote erfolgen und nicht über eine dritte Anwendung. Ein Registrieren eines asymmetrischen Schlüsselpaars eines Nutzercomputersystems, wie etwa ein Smartphone, und damit dessen Freigabe zur Nutzung in der Blockchain ermöglicht Transaktionen ohne direkte Beteiligung der Banknote. Hierzu kann beispielsweise eine auf dem Smartphone bereitgestellte Anwendung in Form einer entsprechenden Applikation bzw. Zahlungsapplikation verwendet werden. Zudem kann die Banknote mit Prozessor selbst sowohl als bargeldbasiertes Zahlungsmittel als auch als bargeldloses Zahlungsmittel verwendet werden.

Insbesondere lassen sich die Vorteile eines bargeldlosen Zahlens mit der Banknote durch das Registrieren eines asymmetrischen Schlüsselpaars eines Nutzercomputersystems in der Blockchain auf das entsprechende Nutzercomputersystem, wie etwa ein Smartphone, übertragen. Die Blockchainadresse der Banknotenkonto, welche lediglich der Identifikationsnummer der Banknote zugeordnet ist, wie auch die Blockchainadresse des asymmetrischen Schlüsselpaars des Nutzercomputersystems, welche lediglich der Identifikationsnummer der Banknote zugeordnet ist, sind zu demselben Grad anonym wie Bargeld. Zudem können diese prinzipiell beliebig weitergeben werden: Die Banknote kann wie übliche Banknoten weitergeben werden. Auch das asymmetrische Schlüsselpaar des Nutzercomputersystems könnte grundsätzlich weitergegeben werde. Allerdings kann dadurch die Sicherheit des privaten kryptographischen Schlüssels des asymmetrische Schlüsselpaars reduziert werden. Beispielsweise werden vor und/oder nach einer Übergabe der Banknote alle der Banknote zugeordneten asymmetrischen Schlüsselpaare revoziert.

Ausführungsformen stellen insbesondere einen Sicherungsmechanismus für den Fall eines Verlusts des Nutzercomputersystems mit dem der Banknote zugeordneten privaten kryptographischen Schlüssel bereit. So kann beispielsweise ein Smartphone verloren gehen, schwer beschädigt werden, zerstört werden oder in die falschen Hände geraten. Zwar sind moderne Smartphones und insbesondere deren Sicherheitselemente gegen unberechtigte Zugriffe mit PINs und biometrischen Prüfverfahren, wie etwa FacelD, geschützt, ein Restrisiko bleibt aber dennoch besteht.

Die elektronische Zahlung mittels der Banknote basiert auf einer Blockchain. Beispielsweise wird auf dem Nutzercomputersystem, etwa einem Smartphone, ein asymmetrisches kryptographisches Schlüsselpaar generiert. Dieses hat zunächst beispielsweise keine Verbindung zu der Banknote. Beispielsweise stellt eine Applikation auf dem Nutzercomputersystem eine Signaturanfrage an die Banknote mit dem erzeugten öffentlichen kryptographischen Schlüssel zum Signieren des öffentlichen kryptographischen Schlüssels und Bereitstellen der Identifikationsnummer der Banknote, damit eine seitens der Banknote mit der Signatur bestätigte Zuordnung des erzeugten asymmetrischen Schlüsselpaars in der Blockchain registriert werden kann. Die Banknote erstellt ein Kryptogramm mit dem signierten öffentlichen kryptographischen Schlüssel des Nutzercomputersystems und mit der Identifikationsnummer der Banknote. Das Nutzercomputersystem bzw. die auf dem Nutzercomputersystem installierte Applikation empfängt das Kryptogramm von der Banknote, beispielsweise via NFC, und leitet dieses zum Registrieren der Zuordnung in die Blockchain mittels eines entsprechenden Eintrags an die einen Blockchain-Server zum Eintragen weiter. Durch die Eintragung des entsprechenden Kryptogramms in die Blockchain wird die Zuordnung des asymmetrischen Schlüsselpaars des Nutzercomputersystems zu der Identifikationsnummer der Banknote in der Blockchain registriert. In Folge der Registrierungen werden Eintragungen von Transaktionen in die Blockchain ermöglicht, deren Freigaben auf einer Signatur unter Verwendung des registrierten privaten kryptographischen Schlüssels des Nutzercomputersystems basiert.

Beispielsweise bestimmt das Nutzercomputersystem bzw. die Applikation eine zu dem registrierten asymmetrischen Schlüsselpaar zugehörige Blockchainadresse, etwa unter Verwendung des öffentlichen kryptographischen Schlüssels. Diese Blockchainadresse wird von dem Nutzercomputersystem fortan beispielsweise für Zahlungen verwendet. Anschließend kann beispielsweise durch Zahlung, insbesondere durch eine einmalige Zahlung, der Banknote von der Blockchainadresse der Banknotenkonto an die Blockchainadresse des Nutzercomputersystems bzw. dessen asymmetrischen Schlüsselpaars Geld transferiert werden. Mit dem Geld, welches in Folge der Zahlung der Banknote der Blockchainadresse des Nutzercomputersystems zugeordnete wurde, ist das Nutzercomputersystem nunmehr in die Lage versetzt selbstständig Zahlungen und Transaktionen unter Verwendung der Blockchain zu tätigen, ohne hierzu die Banknote oder deren kryptographischen Schlüssel zu benötigen.

Geht das registrierte asymmetrische Schlüsselpaar des Nutzercomputersystems bzw. das Nutzercomputersystem beispielsweise verloren oder wird kompromittiert, kann der Nutzer die Banknote bzw. den in der Banknote sicher gespeicherten privaten kryptographischen Schlüssel zum Revozieren, d.h. zum Sperren, des registrierten asymmetrischen Schlüsselpaars verwenden.

Nach Ausführungsformen ist das erste asymmetrische Schlüsselpaar des ersten Nutzercomputersystems und insbesondere der erste öffentliche und/oder private kryptographische Schlüssel des ersten asymmetrischen Schlüsselpaars unabhängig von dem zweiten asymmetrischen Schlüsselpaars der Banknote, d.h., insbesondere dem zweiten öffentlichen und/oder privaten kryptographischen Schlüssel des zweiten asymmetrischen Schlüsselpaars. Unabhängig heißt in diesem Kontext, dass aus dem vorliegenden zweiten öffentlichen und/oder privaten kryptographischen Schlüssel nicht der erste öffentliche und/oder private kryptographische Schlüssel abgeleitet bzw. erzeugt werden kann. Das erste asymmetrische Schlüsselpaar wird beispielsweise vielmehr unabhängig von der Banknote und dem zweiten asymmetrischen Schlüsselpaar selbstständig durch das erste Nutzercomputersystem generiert, ohne das weitere Hilfsmittel notwendig sind.

Nach Ausführungsformen handelt es sich bei der ersten Blockchainadresse um den ersten öffentlichen kryptographischen Schlüssel oder eine aus dem ersten öffentlichen kryptographischen Schlüssel abgeleitete Blockchainadresse.

Nach Ausführungsformen handelt es bei der zweiten Blockchainadresse um den zweiten öffentlichen kryptographischen Schlüssel oder eine aus dem zweiten öffentlichen kryptographischen Schlüssel abgeleitete Blockchainadresse.

Nach Ausführungsformen ist die Identifikationsnummer der Banknote unabhängig von dem öffentlichen kryptographischen Schlüssel der Banknote. Beispielsweise handelt es sich bei der Identifikationsnummer der Banknote um eine Seriennummer der Banknote.

Nach Ausführungsformen ist die Identifikationsnummer der Banknote abhängig von dem öffentlichen kryptographischen Schlüssel der Banknote. Nach Ausführungsformen handelt es sich bei der Identifikationsnummer um den öffentlichen kryptographischen Schlüssel der Banknote oder eine aus dem öffentlichen kryptographischen Schlüssel der Banknote abgeleitete Nummer.

Nach Ausführungsformenhandelt es sich bei der Identifikationsnummer um eine Seriennummer der Banknote oder eine aus der Seriennummer der Banknote abgeleitete Nummer.

Nach Ausführungsformen umfasst die Revozierungsbestätigung ferner einen Zeitstempel. Nach Ausführungsformen wird die Revozierungsbestätigung mit einem dem Eintrag zugeordneten Zeitstempel in die Blockchain eingetragen. Beispielsweise umfasst ein von dem Blockchain-Server erstellter Block der Blockchain, welcher die Eintragung der Revozierungsbestätigung umfasst, einen Zeitstempel.

Ausgehend von entsprechender Zeitstempel kann beispielsweise festgelegt werden, welche Zuordnungen von asymmetrischen Schlüsseln bzw. zugeordneten asymmetrischen Schlüsseln durch die Revozierungsbestätigung revoziert werden. Beispielsweise können durch die Revozierungsbestätigung alle zugeordneten asymmetrischen Schlüssel revoziert werden, deren Zuordnungsregistrierung zeitlich vor der Revozierungsbestätigung liegt. Dabei wird der für die Revozierung relevante Zeitpunkt durch den entsprechenden Zeitstempel identifiziert. Alternativ können die letzten ein oder mehreren zugeordneten asymmetrischen Schlüssel revoziert werden, deren Zuordnungsregistrierung zeitlich vor der Revozierungsbestätigung liegt.

Nach Ausführungsformen werden durch die Eintragung der Revozierungsbestätigung alle asymmetrischen Schlüsselpaare revoziert, für deren öffentlichen kryptographischen Schlüssel zum Zeitpunkt der Eintragung eine Zuordnung zu der Banknote in der Blockchain registriert ist, welche unter Verwendung des banknotenindividuellen zweiten privaten kryptographischen Schlüssels signiert ist. Infolge der Revozierungen werden Eintragungen von Transaktionen in die Blockchain blockiert, deren Freigaben auf einer Signatur unter Verwendung eines privaten kryptographischen Schlüssels eines der revozierten asymmetrischen Schlüsselpaare basiert.

Ausführungsformen können den Vorteil haben, dass durch einen entsprechende Revozierung alle zugeordneten asymmetrischen Schlüsselpaare revoziert werden und somit sichergestellt werden, dass beim Revozieren keine zugeordneten asymmetrischen Schlüssel übersehen werden. Dies gilt insbesondere, falls der entsprechenden Banknote eine Mehrzahl von asymmetrischen Schlüsselpaaren von ein oder mehreren Nutzercomputersystemen zugeordnet sind. In diesem Fall müssen beispielsweise die zu revozierenden Schlüssel nicht näher identifiziert werden. Es werden beispielsweise alle bisher, z.B. bis zu dem durch den Zeitstempel der Revozierungsbestätigung identifizierten Zeitpunkt, zugeordneten asymmetrischen Schlüsselpaare revoziert. Im Zuge einer Eintragung einer Transaktion in die Blockchain wird beispielsweise geprüft, etwa von einem die Eintragung vornehmenden Blockchain-Server, ob eine Freigabe der Transaktion auf einer Signatur unter Verwendung eines privaten kryptographischen Schlüssels beruht, seit dessen Registrierung eine Revozierung aller bisheriger asymmetrischer Schlüsselpaare für die entsprechende Banknote in die Blockchain eingetragen wurde. Falls dies der Fall ist, gilt der entsprechende private kryptographische Schlüssel als revoziert und die Eintragung wird blockiert. Falls dies nicht der Fall ist, ist der entsprechende private kryptographische Schlüssel nach wie vor valide und die Eintragung kann erfolgen.

Nach Ausführungsformen werden durch die Eintragung der Revozierungsbestätigung bis zu einer vordefinierten maximalen Anzahl alle asymmetrischen Schlüsselpaare revoziert, für deren öffentlichen kryptographischen Schlüssel zum Zeitpunkt der Eintragung eine Zuordnung zu der Banknote in der Blockchain registriert ist, welche unter Verwendung des banknotenindividuellen zweiten privaten kryptographischen Schlüssels signiert ist.

Ausführungsformen können den Vorteil haben, dass nicht notwendigerweise alle zugeordneten asymmetrischen Schlüsselpaare revoziert werden, sondern höchsten bis zu der vordefinierten maximalen Anzahl. Beispielsweise könnten die zuletzt zugeordneten (und noch nicht revozierten) maximal N asymmetrischen Schlüsselpaare revoziert werden, wobei N eine natürliche Zahl ist. Alternativerweise könnten die ältesten zugeordneten (und noch nicht revozierten) N asymmetrischen Schlüsselpaare revoziert werden, wobei N eine natürliche Zahl ist.

Nach Ausführungsformen beträgt die vordefinierte maximale Anzahl, d.h. N, an asymmetrischen Schlüsselpaare ein oder mehr asymmetrische Schlüsselpaare, beispielsweise zwei, drei, vier, fünf, sechs, sieben, acht, neun, zehn, oder mehr asymmetrische Schlüsselpaare.

Abhängig von der tatsächlichen Anzahl an asymmetrischen Schlüsselpaaren, für deren öffentlichen kryptographischen Schlüssel zum Zeitpunkt der Eintragung der Revozierungsbestätigung eine unter Verwendung des banknotenindividuellen zweiten privaten kryptographischen Schlüssels signierte Zuordnung zu der Banknote in der Blockchain registriert ist, ist die Anzahl der revozierten asymmetrischen Schlüsselpaaren somit kleiner oder gleich der vordefinierten maximalen Anzahl.

Nach Ausführungsformen erfolgt die Revozierung bis zu der vordefinierten maximalen Anzahl an asymmetrischen Schlüsselpaaren in zeitlich aufsteigender Reihenfolge beginnenden mit dem asymmetrischen Schlüsselpaaren, für dessen öffentlichen kryptographischen Schlüssel eine zeitlich früheste Zuordnung zu der Banknote in der Blockchain registriert und das nicht revoziert ist. Dabei werden beispielsweise die maximal N ältesten zugeordneten (und noch nicht revozierten) asymmetrischen Schlüsselpaare revoziert werden, wobei N eine natürliche Zahl ist.

Nach Ausführungsformen erfolgt die Revozierung bis zu der vordefinierten maximalen Anzahl an asymmetrischen Schlüsselpaaren in zeitlich absteigender Reihenfolge beginnenden mit dem asymmetrischen Schlüsselpaaren, für dessen öffentlichen kryptographischen Schlüssel eine zeitlich späteste Zuordnung in der Blockchain registriert und das nicht revoziert ist. Dabei werden beispielsweise die maximal N jüngsten zugeordneten (und noch nicht revozierten) asymmetrischen Schlüsselpaare revoziert werden, wobei N eine natürliche Zahl ist.

Nach Ausführungsformen werden durch die Eintragung der Revozierungsbestätigung alle asymmetrischen Schlüsselpaare revoziert, für deren öffentlichen kryptographischen Schlüssel eine Zuordnung zu der Banknote in der Blockchain innerhalb eines bestimmten Zeitintervalls registriert ist und die Zuordnung unter Verwendung des banknotenindividuellen zweiten privaten kryptographischen Schlüssels signiert ist.

Das entsprechende Zeitintervall kann sich beispielsweise von einem Anfangszeitpunkt bis zu einem Endzeitpunkt erstrecken. Beispielsweise können Anfangszeitpunkt und Endzeitpunkt innerhalb des Zeitintervalls gewählt werden von der Registrierung der entsprechenden Banknote in der Blockchain bis zum Zeitpunkt der Revozierung.

Beispielsweise kann als Anfangszeitpunkt der Zeitpunkt der Registrierung der entsprechenden Banknote in der Blockchain und als Endzeitpunkt der Zeitpunkt der Revozierung gewählt werden. Damit können beispielsweise alle der Banknote zugeordneten asymmetrischen Schlüsselpaare revoziert werden. Beispielsweise kann als Anfangszeitpunkt der Zeitpunkt der Registrierung der entsprechenden Banknote in der Blockchain und als Endzeitpunkt ein Zeitpunkt gewählt werden, welcher älter als der Zeitpunkt der Revozierung ist. Damit können beispielsweise alle der Banknote zugeordneten asymmetrischen Schlüsselpaare revoziert werden, deren Zuordnung älter als der gewählte Endzeitpunkt ist.

Beispielsweise kann als Anfangszeitpunkt ein Zeitpunkt älter als der Zeitpunkt der Revozierung und als Endzeitpunkt der Zeitpunkt der Revozierung gewählt werden. Damit können beispielsweise alle der Banknote zugeordneten asymmetrischen Schlüsselpaare revoziert werden, deren Zuordnung jünger als der gewählte Anfangszeitpunkt ist. Beispielsweise können alle der Banknote zugeordneten asymmetrischen Schlüsselpaare revoziert werden, deren Zuordnung erfolgt ist innerhalb der letzten Stunde, der letzten Stunden, des letzten Tages, der letzten Tage, der letzten Woche, der letzten Wochen, des letzten Monats, der letzten Monate, des letzten Jahres, der letzten Jahre.

Nach Ausführungsformen umfasst die Revozierungsbestätigung den ersten öffentlichen kryptographischen Schlüssel, welcher das revozierte erste asymmetrische Schlüsselpaar identifiziert. Ausführungsformen können den Vorteil haben, dass durch die Revozierungsbestätigung das asymmetrische Schlüsselpaar identifiziert wird, welches revoziert wird. Somit kann eine schlüsselpaarindividuelle Revozierung erfolgen.

Nach Ausführungsformen umfasst die Revozierungsanfrage den ersten öffentlichen kryptographischen Schlüssel zum Identifizieren des durch die Banknote zu revozierenden ersten asymmetrischen Schlüsselpaars. Ausführungsformen können den Vorteil haben, dass durch die Revozierungsanfrage definiert wird, welches asymmetrische Schlüsselpaar zu revozieren ist. Somit kann eine schlüsselpaarindividuelle Revozierung angefragt werden. Zudem kann der Banknote ein Identifikator des zu revozierenden asymmetrischen Schlüsselpaars in Form des entsprechenden öffentlichen kryptographischen Schlüssels bereitgestellt werden. Somit muss der entsprechende öffentliche kryptographische Schlüssel beispielsweise nicht auf der Banknote hinterlegt sein.

Beispielsweise kann die Banknote dazu konfiguriert sein, etwa auf Anfrage eines Nutzercomputersystems, eine mit dem privaten kryptographischen Schlüssel der Banknote signierte Blockchainabfrage auszugeben, die abfragt, welche asymmetrischen Schlüsselpaare der entsprechenden Banknote zugeordnet sind. Zur Identifikation der Banknote umfasst die Blockchainabfrage beispielsweise die Identifikationsnummer der Banknote oder die Identifikationsnummer der Banknote wird von der Banknote beispielsweise zusammen mit der signierten Blockchainabfrage bereitgestellt. Das Nutzercomputersystem leitet die Blockchainabfrage beispielsweise an einen Blockchain-Server weiter, welcher in Antwort auf die Blockchainabfrage bestimmt, für welche asymmetrischen Schlüsselpaare eine Zuordnung zu der entsprechenden Banknote in der Blockchain gespeichert ist. Die entsprechenden asymmetrischen Schlüsselpaare werden beispielsweise anhand des jeweiligen öffentlichen kryptographischen Schlüssels identifiziert. Beispielsweise empfängt das Nutzercomputersystem in Antwort auf das Weiterleiten die öffentlichen kryptographischen Schlüssel der bestimmten asymmetrischen Schlüsselpaare. Beispielsweise werden von dem Blockchain-Server zusätzlich die Zeitpunkte der Eintragungen der Zuordnungen bestimmt und zusammen mit den öffentlichen kryptographischen Schlüsseln an das Nutzercomputersystem gesendet.

Nach Ausführungsformen ist der erste öffentliche kryptographische Schlüssel in dem Speicher der Banknote gespeichert. Ausführungsformen können den Vorteil haben, dass die Banknote über Informationen verfügt, welche asymmetrischen Schlüsselpaare ihr zugeordnet sind. Beispielsweise wird im Zuge jeder Zuordnung jeweils der öffentliche kryptographische Schlüssel des entsprechenden asymmetrischen Schlüsselpaars in dem Speicher der Banknote gespeichert. Beispielsweise gibt die Banknote auf Anfrage an, etwa auf Anfrage eines Nutzercomputersystems, welche öffentlichen kryptographischen Schlüssel ihr zugeordnet sind.

Ferner ist in dem Speicher der Banknote beispielsweise jeweils ein Zeitpunkt der Zuordnung für die asymmetrischen Schlüsselpaare gespeichert, welcher auf Anfrage jeweils zusammen mit dem öffentlichen kryptographischen Schlüssel des entsprechenden asymmetrischen Schlüsselpaars ausgegeben wird.

Beispielsweise wird in dem Speicher der Banknote auf eine Revozierung eines asymmetrischen Schlüsselpaars bzw. auf ein Erstellen einer Revozierungsbestätigung für ein asymmetrisches Schlüsselpaar hin der öffentliche kryptographische Schlüssel des entsprechenden asymmetrischen Schlüsselpaars in dem Speicher der Banknote gelöscht.

Nach Ausführungsformen ist in dem Speicher der Banknote eine Zuordnung des ersten öffentlichen kryptographischen Schlüssels zu dem ersten Nutzercomputersystem gespeichert. Die Zuordnung umfasst einen Identifikator des ersten Nutzercomputersystems , wobei die Revozierungsanfrage den Identifikator des ersten Nutzercomputersystems zum Identifizieren des durch die Banknote zu revozierenden ersten asymmetrischen Schlüsselpaars.

Ausführungsformen können den Vorteil haben, dass anhand des Identifikators des Nutzercomputersystems identifiziert werden kann, welches bzw. welche asymmetrischen Schlüsselpaare zu revozieren sind. Beispielsweise werden alle asymmetrischen Schlüsselpaare des von dem Identifikator identifizierten Nutzercomputersystem gelöscht. Hierbei werden die Identifikatoren von Nutzercomputersystemen beispielsweise nur lokal auf der Banknote gespeichert, welche sich im Besitz des Nutzers befindet. In der Blockchain werden beispielsweise keine Identifikatoren von Nutzercomputersystemen gespeichert.

Nach Ausführungsformen handelt es sich bei dem ersten Nutzercomputersystem und dem zweiten Nutzercomputersystem um dasselbe Nutzercomputersystem. Ausführungsformen können den Vorteil haben, dass unter Verwendung der Banknote von dem ersten Nutzercomputersystem selbst eine Revozierung des ersten asymmetrischen Schlüsselpaars initiiert und gesteuert werden kann. Dies kann beispielsweise notwendig werden falls das entsprechende asymmetrisch Schlüsselpaar, insbesondere der erste private kryptographische Schlüssel kompromittiert wurde. Dabei kann beispielsweise sichergestellt werden, dass auch eine Revozierung eines eigenen asymmetrischen Schlüsselpaars für die Nutzung in der Blockchain durch ein Nutzercomputersystem nur unter Verwendung der Banknote erfolgen kann, welcher das entsprechenden asymmetrische Schlüsselpaar zugeordnet ist.

Nach Ausführungsformen handelt es sich bei dem ersten Nutzercomputersystem und dem zweiten Nutzercomputersystem um verschiedene Nutzercomputersystem. Ausführungsformen können den Vorteil haben, dass das zweite Nutzercomputersystem zum Revozieren des asymmetrischen Schlüsselpaars des ersten Nutzercomputersystems verwendet werden kann. Dies kann beispielsweise von Vorteil sein, falls das erste Nutzercomputersystem nicht mehr funktioniert, etwa aufgrund eines Defekts, oder nicht mehr zur Verfügung steht, etwa aufgrund eines Verlusts oder eines Diebstahls.

Nach Ausführungsformen handelt es sich bei dem ersten Nutzercomputersystem um ein erstes mobiles tragbares Endgerät, beispielsweise ein Smart Device, wie etwa ein Smartphone oder eine Smartwatch.

Nach Ausführungsformen handelt es sich bei dem zweiten Nutzercomputersystem um ein zweites mobiles tragbares Endgerät, beispielsweise ein Smart Device, wie etwa ein Smartphone oder eine Smartwatch.

Nach Ausführungsformen handelt es sich bei der Blockchain um eine von einer die Banknote ausgebenden Zentralbank verwaltete Blockchain. Ausführungsformen können den Vorteil haben, dass es sich bei der Blockchain um eine offizielle von der Zentralbank bereitgestellte technische Infrastruktur zur Nutzung der digitale Zahlungsmöglichkeiten der ausgegebenen Banknoten handelt. Nach Ausführungsformen handelt es sich bei den Blockchain-Servern um einen Server der die Banknote ausgebenden Zentralbank. Ausführungsformen können den Vorteil haben, dass Eintragungen in die Blockchain somit beispielsweise nur über technische Infrastrukturkomponenten der Zentralbank möglich sind.

Bei der vorliegenden von einer der Zentralbank verwalteten Blockchain handelt es sich beispielsweise um eine öffentliche zugriffbeschränkte Blockchain ("public permissioned blockchain") oder eine private Blockchain ("private blockchain"), welche auf Blockchain-Servern der Zentralbank verwaltet wird. Beispielsweise erfolgt ein Eintragen neuer Blöcke ausschließlich durch diese von der Zentralbank verwalteten Blockchain-Server. In diesem Fall können beispielsweise rechenintensiven Prozess bei Hinzufügen zusätzlicher Blöcke entfallen. Beispielsweise ist für ein hinzufügen zusätzlicher Blöcke lediglich eine Signatur mit einem der Zentralbank zugeordneten Signaturschlüssel notwendig. Im Falle einer private Blockchain dürfen beispielsweise ausschließlich ausgewählte Teilnehmer auf die Blockchain zugreifen, welche hierzu eine Berechtigung nachweisen müssen. Beispielsweise darf eine Banknote nur auf ihre Blockchainadresse und/oder Blockchainadressen von ihr zugeordneten asymmetrischen Schlüsselpaaren zugreifen. Zudem darf eine Banknote beispielsweise nur Zuordnungen von asymmetrischen Schlüsselpaaren zu sich selbst registrieren. Ein Nutzercomputersystem mit einem asymmetrischen Schlüsselpaar darf beispielsweise nur auf die dem entsprechenden asymmetrischen Schlüsselpaar zugeordnete Blockchainadresse zugreifen. Im Falle einer öffentlichen zugriffbeschränkten Blockchain sind beispielsweise Lesezugriffe unbeschränkt möglich. Beispielsweise sind Lesezugriffe unbeschränkt für bestimmte Kategorien von Daten zulässig. Beispielsweise ist ein unbeschränkter Lesezugriff auf Registrierungsdaten von Banknoten zulässig, um etwa zu prüfen, welche Banknoten in der Blockchain registriert sind. Beispielsweise sind Schreibzugriffe allgemein und/oder Lesezugriffe auf bestimmte Kategorien von Daten nur unter Nachweis einer entsprechenden Berechtigung zulässig. Schreibzugriffe bzw. Anfragen zum Eintragen bestimmter Daten, etwa Transaktionen und/oder Registrierungen, setzten beispielsweise einen Nachweis einer entsprechenden Berechtigung voraus. Eine solche Berechtigung kann beispielsweise mittels einer Signatur mit einem privaten kryptographischen Schlüssel nachgewiesen werden, dessen zugehöriger öffentlicher kryptographischen Schlüssel in der Blockchain zusammen mit einer Zuordnung registriert ist, zu welcher Art von Schreibzugriffen Signaturen mit dem entsprechenden privaten kryptographischen Schlüssel berechtigen. Beispielsweise ist auf Transaktionsdaten und/oder Zuordnungsdaten von Zuordnungen zwischen Blockchainadressen von Banknoten und Blockchainadressen von Nutzercomputersystemen nur ein beschränkter Lesezugriff gegeben, für welchen eine Berechtigungsnachweis notwendig ist.

Nach Ausführungsformen wird ein der ersten Blockchainadresse zum Zeitpunkt der Revozierung des ersten asymmetrischen Schlüsselpaars zugeordneter Geldbetrag an die zweite Blockchainadresse der Banknote transferiert.

Ausführungsformen können den Vorteil haben, dass im Falle eines Revozierens des asymmetrischen Schlüsselpaars Geld, welches der Blockchainadresse des revozierten asymmetrischen Schlüsselpaars zugeordnet ist, dem Nutzer weiterhin zur Verfügung steht, auch wenn Transaktionen, deren Freigaben auf einer Signatur unter Verwendung des revozierten privaten kryptographischen Schlüssels basieren, blockiert werden. Indem das Geld an die Blockchainadresse der Banknote transferiert wird kann der Nutzer unter Verwendung der Banknote weiterhin über das Geld verfügen.

Beispielsweise kann im Falle eines Revozierens des asymmetrischen Schlüsselpaars ein Transferieren des Geldbetrags automatisch erfolgen. Das Transferieren des Geldbetrags an die Blockchainadresse der Banknote kann beispielsweise auf einer Transaktionsfreigabe der Banknote beruhen, falls die Banknote Verfügungsgewalt über die Blockchainadresse des ihr zugeordneten asymmetrischen Schlüsselpaars besitzt. Das Transferieren des Geldbetrags an die Blockchainadresse der Banknote kann beispielsweise auf einer Transaktionsfreigabe der Zentralbank beruhen, falls die Zentralbank als die die Blockchain verwaltende Entität Verfügungsgewalt über die Blockchainadresse des ihr zugeordneten asymmetrischen Schlüsselpaars besitzt.

Nach Ausführungsformen besitzt die Banknote Verfügungsgewalt über die erste Blockchainadresse des ihr zugeordneten ersten asymmetrischen Schlüsselpaars. Beispielsweise werden auch Transaktionen von zu zahlenden Beträgen von der ersten Blockchainadresse an andere Blockchainadressen in die Blockchain eingetragen, falls die Transaktion von der Banknote freigegeben ist, d.h., unter Verwendung des zweiten privaten kryptographischen Schlüssels der Banknote signiert ist.

Nach Ausführungsformen umfasst das Verfahren ferner ein Herstellen der Banknote, wobei das Herstellen umfasst:
- Empfangen der Identifikationsnummer durch die Banknote,
- Speichern der Identifikationsnummer in dem Speicher der Banknote,
- Erzeugen des zweiten asymmetrischen Schlüsselpaars durch das Sicherheitselement der Banknote,
- Speichern des zweiten privaten kryptographischen Schlüssels in dem geschützten Speicherbereich des Speichers der Banknote,
- Speichern des zweiten öffentlichen kryptographischen Schlüssels in dem Speicher der Banknote,
- Erzeugen einer unter Verwendung des zweiten privaten kryptographischen Schlüssels signierten Registrierungsanfrage durch die Banknote, wobei die Registrierungsanfrage die Identifikationsnummer und den zweiten öffentlichen kryptographischen Schlüssel der Banknote umfasst,
- in Antwort auf das Empfangen der Identifikationsnummer, Senden der Registrierungsanfrage zum Registrieren der Identifikationsnummer und des zweiten öffentlichen kryptographischen Schlüssels in der Blockchain durch einen Blockchain-Server.

Ausführungsformen können den Vorteil haben, dass im Zuge des Herstellens die Identifikationsnummer und der öffentliche kryptographische Schlüssel der Banknote in der Blockchain registriert werden. Eine erfolgreiche Registrierung der Banknote in der Blockchain ist beispielsweise Voraussetzung für eine Nutzung der Blockchain durch die Banknote. Eine Nutzung der Blockchain durch die Banknote umfasst beispielsweise ein Transferieren von Geldbeträgen von einer Blockchainadresse der Banknote an andere Blockchainadressen, ein Empfangen von Geldtransaktionen mit der Blockchainadresse der Banknote von anderen Blockchainadressen, ein Registrieren von Zuordnungen von asymmetrischen Schlüsselpaaren zu der Banknote sowie ein Revozieren von zugeordneten asymmetrischen Schlüsselpaaren, d.h. ein Revozieren der Zuordnungen der asymmetrischen Schlüsselpaare zu der Banknote.

Nach Ausführungsformen kann das Erzeugen und Speichern des zweiten asymmetrischen Schlüsselpaars durch die Banknote vor oder nach dem Empfangen der Identifikationsnummer erfolgen.

Nach Ausführungsformen sendet ein Herstellercomputersystem eines Herstellers der Banknote die Identifikationsnummer an die Banknote und empfängt die Registrierungsanfrage in Antwort auf das Senden der Identifikationsnummer. Das Herstellercomputersystem umfasst einen Prozessor und einen Speicher mit Programminstruktionen. In einem geschützten Speicherbereich des Speichers ist ein dritter privater kryptographischer Schlüssel eines dritten asymmetrischen Schlüsselpaars gespeichert, welches einer dritten Blockchainadresse des Herstellers in einer Blockchain zugeordnet ist.

Das Verfahren umfasst ferner:
- Signieren der Registrierungsanfrage unter Verwendung des dritten privaten kryptographischen Schlüssels durch das Herstellercomputersystem,
- Weiterleiten der von dem Herstellercomputersystem signierten Registrierungsanfrage an einen Blockchain-Server zum Registrieren der Identifikationsnummer und des zweiten öffentlichen kryptographischen Schlüssels in der Blockchain.

Durch das Weiterleiten der Registrierungsanfrage an den Blockchain-Server initiiert das Herstellercomputersystem das Registrieren der Identifikationsnummer und des zweiten öffentlichen kryptographischen Schlüssels in der Blockchain. Für eine valide Registrierungsanfrage ist beispielsweise eine Signatur eines zum Stellen von Registrierungsanfragen berechtigten Herstellercomputersystems notwendig. Somit kann sichergestellt werden, dass nur offizielle Banknoten in die Blockchain eingetragen werden, welche von einer Zentralbank ausgegeben werden. Beispielsweise ist das Herstellercomputersystem, etwa von der Zentralbank, in der Blockchain als Herstellercomputersystem registriert. Die entsprechende Registrierung umfasst beispielsweise einen öffentlichen kryptographischen Schlüssel des Herstellercomputersystems. Die entsprechende Registrierung umfasst beispielsweise eine Signatur mit einem privaten kryptographischen Schlüssel der Zentralbank.

Nach Ausführungsformen erfolgt die Registrierung der Identifikationsnummer und des zweiten öffentlichen kryptographischen Schlüssels unter einer dritten Blockchainadresse des Herstellers der Banknote. Nach Ausführungsformen handelt es bei der dritten Blockchainadresse um den dritten öffentlichen kryptographischen Schlüssel oder eine aus dem dritten öffentlichen kryptographischen Schlüssel abgeleitete Blockchainadresse.

Nach Ausführungsformen umfasst das Verfahren ferner das Registrieren der Zuordnung des ersten asymmetrischen Schlüsselpaars zu der Banknote in der Blockchain. Das Registrieren umfasst:
- Erzeugen des ersten asymmetrischen Schlüsselpaars durch das erste Nutzercomputersystem,
- Speichern des ersten privaten kryptographischen Schlüssels in einem geschützten Speicherbereich eines Speichers des ersten Nutzercomputersystems,
- Speichern des ersten öffentlichen kryptographischen Schlüssels in dem Speicher des ersten Nutzercomputersystems,
- Senden einer Signaturanfrage zum Signieren des ersten öffentlichen kryptographischen Schlüssels an die Banknote, wobei die Signaturanfrage den ersten öffentlichen kryptographischen Schlüssel umfasst,
- in Antwort auf die Signaturanfrage, Empfangen eines zweiten Kryptogramms mit dem signierten ersten öffentlichen kryptographischen Schlüssel und mit der Identifikationsnummer der Banknote, wobei der erste öffentliche kryptographische Schlüssel mit dem zweiten privaten kryptographischen Schlüssel der Banknote signiert ist,
- Weiterleiten des zweiten Kryptogramms an einen Blockchain-Server der Blockchain zur Eintragung, wobei durch die Eintragung des zweiten Kryptogramms die Zuordnung des ersten asymmetrischen Schlüsselpaars zu der Identifikationsnummer der Banknote in der Blockchain registriert wird und in Folge der Registrierung Eintragungen von Transaktionen in die Blockchain ermöglicht werden, deren Freigaben auf einer Signatur unter Verwendung des registrierten ersten privaten kryptographischen Schlüssels basiert.

Ausführungsformen können den Vorteil haben, dass asymmetrische Schlüsselpaare von Nutzercomputersystemen unter Verwendung der Banknote in der Blockchain registriert werden können. Dabei werden die asymmetrischen Schlüsselpaare der Nutzercomputersysteme der registrierenden Banknote zugeordnet. Dies ermöglicht es einem Nutzer, welcher über eine entsprechende Banknote verfügt, ein oder mehrere asymmetrische Schlüsselpaare auf ein oder mehreren Nutzercomputersystemen zu erzeugen und zur Nutzung in der Blockchain unter Verwendung seiner Banknote zu registrieren. Die registrierten asymmetrischen Schlüsselpaare sind von der Banknote beispielsweise insofern abhängig, als dass sie der Banknote zugeordnet sind und von der Banknote revoziert werden können. Den asymmetrischen Schlüsselpaaren werden beispielsweise jeweils eine Blockchainadresse zugeordnet. Bei dieser Blockchainadresse kann es sich beispielsweise um den öffentlichen kryptographischen Schlüssel des jeweiligen asymmetrischen Schlüsselpaars handeln oder die Blockchainadresse kann aus dem entsprechenden öffentlichen kryptographischen Schlüssel abgeleitete sein. Für eine Nutzung einer entsprechenden Blockchainadresse ist beispielsweise eine Registrierung des entsprechenden öffentlichen kryptographischen Schlüssels notwendig. Soll eine Transaktion von oder an eine Blockchainadresse erfolgen, wird beispielsweise geprüft, ob ein entsprechender öffentlicher kryptographischer Schlüssel in der Blockchain registriert ist.

Nach Ausführungsformen umfasst eine Zahlung eines Betrags unter Verwendung des ersten privaten kryptographischen Schlüssels des ersten Nutzercomputersystems:
- Erstellen einer Transaktionsfreigabe durch das erste Nutzercomputersystem für eine Transaktion des zu zahlenden Betrags von der ersten Blockchainadresse an eine vierte Blockchainadresse eines Zahlungsempfängers, wobei die Transaktionsfreigabe die erste Blockchainadresse, welcher der erste private kryptographische Schlüssel zugeordnet ist, die vierte Blockchainadresse des Zahlungsempfängers und den zu zahlenden Betrag umfasst,
- Signieren der Transaktionsfreigabe mit dem ersten privaten kryptographischen Schlüssel des ersten Nutzercomputersystems,
- Senden der signierten Transaktionsfreigabe an einen Blockchain-Server der Blockchain zur Eintragung der Transaktion in die Blockchain, wobei durch die Eintragung der Transaktion der zu zahlenden Betrag der vierten Blockchainadresse des Zahlungsempfängers zugeordnet wird.

Ausführungsformen können den Vorteil haben, dass mit dem entsprechenden asymmetrischen Schlüsselpaar Zahlungen in Form von Transaktionen in der Blockchain ausgeführt werden können. Hierzu ist beispielsweise lediglich das Nutzercomputersystem, etwa ein Smartphone, mit dem entsprechenden privaten kryptographischen Schlüssel notwendig, um Zahlungen auszuführen. Das Nutzercomputersystem kann beispielsweise als mobiles tragbares Endgerät von dem Nutzer mit sich mitgeführt und zu Zahlungen verwendet werden. Falls das Nutzercomputersystem und/oder private kryptographische Schlüssel beispielsweise verloren gehen, gestohlen, kompromittiert oder beschädigt werden, kann die Banknote zum Revozieren des entsprechenden asymmetrischen Schlüsselpaars verwendet werden. Anschließend kann beispielsweise ein neues asymmetrisches Schlüsselpaar als Ersatz für das revozierte asymmetrische Schlüsselpaar registriert und in der Folge für Zahlungen mittels der Blockchain verwendet werden. Dabei kann es sich bei dem neuen asymmetrischen Schlüsselpaar ein asymmetrisches Schlüsselpaar desselben oder eines anderen Nutzercomputersystems handeln, d.h. der private kryptographische Schlüssel des entsprechenden asymmetrischen Schlüsselpaars kann in einem geschützten Speicherbereich eines Speichers desselben oder eines anderen Nutzercomputersystems gespeichert sein.

Nach Ausführungsformen umfasst das Verfahren ferner ein Empfangen einer Zahlungsanfrage für die Zahlung des zahlenden Betrags durch den ersten Nutzercomputersystem, wobei die Zahlungsanfrage den zu zahlenden Betrag und die vierte Blockchainadresse des Zahlungsempfängers angibt. Eine entsprechende Zahlungsanfrage kann das Nutzercomputersystem beispielsweise über ein Netzwerk, wie etwa das Internet, empfangen. Dies kann beispielsweise bei einem Onlinekauf der Fall sein. Ebenso kann das Nutzercomputersystem eine entsprechende Zahlungsanfrage beispielsweise auch über eine kabellose Kommunikationsverbindung, etwa mittels NFC, empfangen. Dies kann beispielsweise bei einer Zahlung vor Ort an einem Point of Sale mit dem Nutzercomputersystem, etwa einem Smartphone oder einer Smartwatch, der Fall sein.

Nach Ausführungsformen handelt es bei der vierten Blockchainadresse um einen vierten öffentlichen kryptographischen Schlüssel eines vierten asymmetrischen Schlüsselpaars des Zahlungsempfängers oder eine aus dem vierten öffentlichen kryptographischen Schlüssel abgeleitete Blockchainadresse.

Ausführungsformen umfassen ferner ein Nutzercomputersystem zum Revozieren eines ersten asymmetrischen Schlüsselpaars eines weiteren Nutzercomputersystems unter Verwendung einer Banknote. Das erste asymmetrische Schlüsselpaar umfasst einen ersten privaten kryptographischen Schlüssel und einen ersten öffentlichen kryptographischen Schlüssel. Das erste asymmetrische Schlüsselpaar ist einer ersten Blockchainadresse in einer Blockchain zugeordnet. Das Nutzercomputersystem umfasst einen Prozessor und einen Speicher mit Programminstruktionen.

Für das erste asymmetrische Schlüsselpaar ist ferner eine Zuordnung zu der Banknote in der Blockchain registriert, welche unter Verwendung eines banknotenindividuellen zweiten privaten kryptographischen Schlüssels eines banknotenindividuellen zweiten asymmetrischen Schlüsselpaars der Banknote signiert ist.

Die Banknote umfasst ein Sicherheitselement mit einem Prozessor und einem Speicher mit Programminstruktionen. In dem Speicher ist eine die Banknote eindeutig identifizierende Identifikationsnummer gespeichert. In einem geschützten Speicherbereich des Speichers ist der zweite private kryptographische Schlüssel gespeichert. Das zweite asymmetrische Schlüsselpaar ist einer banknotenindividuellen zweiten Blockchainadresse in der Blockchain zugeordnet.

Ein Ausführen der Programminstruktionen durch den Prozessor veranlasst den Prozessor dazu, das Nutzercomputersystem zum Revozieren des ersten asymmetrischen Schlüsselpaars zu steuern. Das Revozieren umfasst:
- Senden einer Revozierungsanfrage zum Revozieren des ersten asymmetrischen Schlüsselpaars von dem Nutzercomputersystem an die Banknote,
- in Antwort auf die Revozierungsanfrage, Empfangen eines unter Verwendung des zweiten privaten kryptographischen Schlüssels signierten Kryptogramms von der Banknote durch das Nutzercomputersystem, wobei das Kryptogramm die Identifikationsnummer der Banknote und eine Revozierungsbestätigung der Banknote umfasst,
- Weiterleiten des signierten Kryptogramms durch das Nutzercomputersystem an einen Blockchain-Server der Blockchain zur Eintragung der Revozierungsbestätigung der durch die Identifikationsnummer identifizierten Banknote in die Blockchain, wobei durch die Eintragung der Revozierungsbestätigung das erste asymmetrische Schlüsselpaar revoziert und in Folge der Revozierung Eintragungen von Transaktionen in die Blockchain blockiert werden, deren Freigaben auf einer Signatur unter Verwendung des revozierten ersten privaten kryptographischen Schlüssels basiert.

Nach Ausführungsformen ist das Nutzercomputersystem dazu konfiguriert jede der zuvor beschriebenen Ausführungsformen eines Revozierens eines asymmetrischen Schlüsselpaars eines weiteren Nutzercomputersystems unter Verwendung einer Banknote auszuführen.

Ausführungsformen umfassen ferner eine Banknote zum Revozieren eines ersten asymmetrischen Schlüsselpaars eines ersten Nutzercomputersystems unter Verwendung eines zweiten Nutzercomputersystems. Das erste asymmetrische Schlüsselpaar umfasst einen ersten privaten kryptographischen Schlüssel und einen ersten öffentlichen kryptographischen Schlüssel. Das erste asymmetrische Schlüsselpaar ist einer ersten Blockchainadresse in einer Blockchain zugeordnet. Für das erste asymmetrische Schlüsselpaar ist ferner eine Zuordnung zu der Banknote in der Blockchain registriert, welche unter Verwendung eines banknotenindividuellen zweiten privaten kryptographischen Schlüssels eines banknotenindividuellen zweiten asymmetrischen Schlüsselpaars der Banknote signiert ist.

Die Banknote ein Sicherheitselement umfasst mit einem Prozessor und einem Speicher mit Programminstruktionen. In dem Speicher ist eine die Banknote eindeutig identifizierende Identifikationsnummer gespeichert. In einem geschützten Speicherbereich des Speichers ist der zweite private kryptographische Schlüssel gespeichert. Das zweite asymmetrische Schlüsselpaar ist einer banknotenindividuellen zweiten Blockchainadresse in der Blockchain zugeordnet.

Ein Ausführen der Programminstruktionen durch den Prozessor veranlasst den Prozessor dazu, die Banknote zum Revozieren des ersten asymmetrischen Schlüsselpaars zu steuern. Das Revozieren umfasst:
- Empfangen einer Revozierungsanfrage zum Revozieren des ersten asymmetrischen Schlüsselpaars von dem zweiten Nutzercomputersystem durch die Banknote,
- Erzeugen eines unter Verwendung des zweiten privaten kryptographischen Schlüssels signierten Kryptogramms von der Banknote durch die Banknote, wobei das Kryptogramm die Identifikationsnummer der Banknote und eine Revozierungsbestätigung der Banknote umfasst
- in Antwort auf die Revozierungsanfrage, Senden des signierten Kryptogramms von der Banknote an das zweite Nutzercomputersystem zum Weiterleiten an einen Blockchain-Server der Blockchain zur Eintragung der Revozierungsbestätigung der durch die Identifikationsnummer identifizierten Banknote in die Blockchain, wobei durch die Eintragung der Revozierungsbestätigung das erste asymmetrische Schlüsselpaar revoziert und in Folge der Revozierung Eintragungen von Transaktionen in die Blockchain blockiert werden, deren Freigaben auf einer Signatur unter Verwendung des revozierten ersten privaten kryptographischen Schlüssels basiert.

Nach Ausführungsformen ist die Banknote dazu konfiguriert jede der zuvor beschriebenen Ausführungsformen eines Revozierens eines asymmetrischen Schlüsselpaars eines ersten Nutzercomputersystems durch ein zweites Nutzercomputersystem auszuführen.

Ausführungsformen umfassen ferner ein System zum Revozieren eines ersten asymmetrischen Schlüsselpaars eines ersten Nutzercomputersystems, wobei das System ein zweites Nutzercomputersystem gemäß einer der zuvor beschriebenen Ausführungsformen und eine Banknote gemäß einer der zuvor beschriebenen Ausführungsformen umfasst.

Nach Ausführungsformen ist das System dazu konfiguriert jede der zuvor beschriebenen Ausführungsformen eines Revozierens eines asymmetrischen Schlüsselpaars eines ersten Nutzercomputersystems unter Verwendung des zweiten Nutzercomputersystem und der Banknote auszuführen.

Nach Ausführungsformen umfasst das System ferner einen Blockchain-Server. Der Blockchain-Server umfasst einen Prozessor und einen Speicher mit Programminstruktionen. Ein Ausführen der Programminstruktionen durch den Prozessor veranlasst den Prozessor dazu den Blockchain-Server zum Revozieren des ersten asymmetrischen Schlüsselpaars zu steuern.

Das Revozieren umfasst:
- Empfangen des signierten Kryptogramms von dem Nutzercomputersystem durch den Blockchain-Server zur Eintragung der Revozierungsbestätigung der durch die Identifikationsnummer identifizierten Banknote in die Blockchain,
- Prüfen der Signatur des Kryptogramms durch den Blockchain-Server unter Verwendung des zweiten öffentlichen kryptographischen Schlüssels,
- auf ein erfolgreiches Prüfen hin, Eintragen der Revozierungsbestätigung in die Blockchain, wobei durch die Eintragung der Revozierungsbestätigung das erste asymmetrische Schlüsselpaar revoziert und in Folge der Revozierung Eintragungen von Transaktionen in die Blockchain blockiert werden, deren Freigaben auf einer Signatur unter Verwendung des revozierten ersten privaten kryptographischen Schlüssels basiert.

Nach Ausführungsformen ist der Blockchain-Server dazu konfiguriert jede der zuvor beschriebenen Eintragungen in die Blockchain vorzunehmen.

Nach Ausführungsformen umfasst das System ferner das erste Nutzercomputersystem.

Nach Ausführungsformen ist das erste Nutzercomputersystem dazu konfiguriert jede der zuvor beschriebenen Ausführungsformen von Verfahrensschritten eines Nutzercomputersystem mit einem zu registrierenden und/oder einem registrierten asymmetrischen Schlüsselpaars auszuführen.

Eine erfindungsgemäße Banknote kann auch selbst zum Zahlen unter Verwendung der Blockchain konfiguriert sein. Der Prozessor der Banknote ist dazu konfiguriert bei Ausführen entsprechender Programminstruktionen ein Zahlungsverfahren mit der Banknote auszuführen. Das Zahlungsverfahren umfasst:
- Empfangen einer Zahlungsanfrage für eine Zahlung mit der Banknote in Form einer Transaktion eines zu zahlenden Betrags von der Blockchainadresse der Banknote an eine Blockchainadresse eines Zahlungsempfängers, wobei die Zahlungsanfrage den zu zahlenden Betrag und die Blockchainadresse des Zahlungsempfängers angibt,
- Signieren der Transaktionsfreigabe mit dem privaten kryptographischen Schlüssel der Banknote, wobei die Transaktionsfreigabe die Blockchainadresse der Banknote, die Blockchainadresse des Zahlungsempfängers und den zu zahlenden Betrag umfasst,
- Senden der signierten Transaktionsfreigabe.

Nach Ausführungsformen wird mit der signierten Transaktionsfreigabe zusammen ferner ein weiterer transaktionsindividueller Wert gesendet. Beispielsweise ist der weitere transaktionsindividuelle Wert von der Signatur der Transaktionsfreigabe mitumfasst und/oder an die signierte Transaktionsfreigabe angehängt. Bei dem weiteren transaktionsindividuellen Wert handelt es sich beispielsweise um einen Zeitstempel und/oder eine Zufallszahl.

Nach Ausführungsformen umfasst die Banknote beispielsweise eine visuelle Angabe einer die Banknote eindeutig identifizierenden Seriennummer. Nach Ausführungsformen umfasst die Banknote beispielsweise eine visuelle Angabe eines der Banknote zugeordneten initialen Nominalwerts.

Ausführungsformen können den Vorteil haben, dass die Banknote nicht nur als Bargeldzahlungsmittel verwendet werden verwendet kann, sondern dass mit der Banknote zusätzlich auch eine bargeldlose Zahlung über die Blockchain ausgeführt werden kann.

Beispielsweise definiert sich die im Umlauf befindliche und sowohl bargeldbasiert als auch bargeldlos transferierbare Geldmenge durch die Geldmenge bzw. der Summe der Nominalwerte, welche Blockchainadressen von Banknoten in der von der Zentralbank verwalteten Blockchain zugeordnet sind. Beispielsweise bleibt die im Umlauf befindliche Geldmenge gleich, falls die im Umlauf befindlichen Banknoten beibehalten werden. Das bedeutet beispielsweise, dass im Umlauf befindlichen Banknoten gleichbleiben können, sich aber in Folge von Transaktionen die den individuellen Banknoten zugeordneten Nominalwerte ändern können. Beispielsweise wäre es auch möglich die den Banknoten zugeordnete Geldmenge ohne die im Umlauf befindlichen Banknoten zu ändern, falls die Zentralbank Zahlungstransfers von der Blockchain in andere Systeme, wie etwa das GIRO SEPA System, zulassen würde. Zum Transferieren von Geld aus der Blockchain könnten beispielsweise spezielle Blockchainadressen vorgesehen sein, an welche Zahlungen nur gesendet werden können und von denen es nicht möglich ist Zahlungen zu senden. Beispielsweise könnte es sich hierbei um von der Zentralbank erstellte Blockchainadressen handeln, welche beispielsweise der Zentralbank zugeordnet sind. Die entsprechende Blockchainadressen könnten auch anderen rechtliche oder natürlichen Personen zugeordnet sind. Beispielsweise erstellt die Zentralbank die entsprechenden Blockchainadressen, vernichtet bzw. löscht aber die zugehörigen privaten kryptographischen Schlüssel, deren Signaturen für Transaktionen von den entsprechenden Blockchainadressen notwendig wären. Beispielsweise ist einer solchen Blockchainadressen ein Konto in einem anderen System zugeordnet. Wird Geld an die entsprechende Blockchainadresse transferiert, transferiert die Zentralbank beispielsweise einen identischen Betrag an das zugehörige Konto des andern Systems.

Geld kann der Blockchain beispielsweise durch ein Initialisieren von zusätzlichen Banknoten bzw. den zusätzlichen Banknoten zugeordneten Blockchainadressen durch die Zentralbank zugeführt werden. Ferner könnte die Zentralbank beispielsweise über ein oder mehrere ihr zugeordnete Blockchainadressen, welche keinen Beschränkungen hinsichtlich der transferierbaren Menge an Geld unterworfen sind, zum Senden von Zahlungen an andere Blockchainadressen verfügen. Beispielsweise sendet die Zentralbank Geld an eine Blockchainadresse, falls anderen System ein identischer Betrag an ein dafür vorgesehenes Konto der Zentralbank, etwa mit der entsprechenden Blockchainadresse, als Verwendungszweck gesendet wurde.

Da weder die Banknote noch deren Blockchainadresse einer rechtlichen oder natürlichen Peron zugeordnet sind, ermöglich die Banknote beispielsweise sowohl bargeldbasierte als auch bargeldlose anonyme Zahlungen, wie sie aktuell nur mit Bargeld möglich sind. Um Missbrauch vorzubeugen könnten beispielsweise zusätzlich Beschränkungen in der Blockchain bzw. dem zugrundeliegenden Blockchain-Netzwerk implementiert werden, welche transferierbare Geldmengen limitieren und/oder ab bestimmten Geldbeträgen zusätzliche Prüfmechanismen vorsehen. Entsprechende Prüfmechanismen könnten beispielsweise eine Bestätigung der Transaktion durch die Zentralbank auf Basis einer Prüfung zusätzlicher als notwendig festgelegter Angaben zu der entsprechenden Transaktion erfordern.

Die Banknote und damit deren Nominalwert gemäß Blockchain kann beispielsweise durch händische physische Übergabe weitergegeben werden, d.h. eine digitale Währung kann übergeben werden. Dafür ist beispielsweise kein Konto im klassischen Sinne, d.h. ein einer rechtlichen oder natürlichen Person zugeordnetes Konto, notwendig. Es kann beispielsweise Material und Aufwand gespart werden durch Reduzieren der rein analogen Währung. Insbesondere kann der Aufwand beim physischen Transfer und Transport von Banknoten reduziert werden. Eine solche Banknote kann beispielsweise aufgewertet und zur direkten Kontaktloszahlung genutzt werden, ohne oder nur mit beschränkter Kontrolle oder Nachverfolgen, da eine individuelle Banknote wie im Falle klassischen Bargelds jederzeit weitergeben werden kann.

Beispielsweise ist der aktuelle Nominalwert der Banknote zusätzlich in dem Speicher des Sicherheitselements hinterlegt. Ausschlaggeben für den tatsächlichen Nominalwert der Banknote ist deren Nominalwert gemäß Blockchain. Beispielsweise kann der in der Banknote hinterlegte Nominalwert zu einer offline Bestimmung des aktuellen Nominalwerts verwendet werden. Beispielsweise wird der in der Banknote hinterlegte Nominalwert aktualisiert, wenn zum Abschluss einer Transaktion eine von der Zentralbank signierte Transaktionsbestätigung und/oder Eintragungsbestätigung an die Banknote weitergeleitet wird. Beispielsweise verfügt das Sicherheitselement über einen Signaturprüfschlüssel zum Prüfen digitaler Signaturen der Zentralbank.

Die Banknote kann beispielsweise papier- und/oder kunststoffbasiert sein. Beispielsweise umfasst die Banknote ein oder mehrere Materialschichten. Als Materialien für die Materialschichten können beispielsweise Papier, Kunststoffe und/oder Metallfolien Verwendung finden. Ein Materialschicht kann auch Kombinationen mehreren dieser Materialen umfassen. Beispielsweise sind die Materialschichten zusammenlaminiert. Die Materialschichten können insbesondere elektronische Komponenten, etwa ein Sicherheitselement mit Prozessor und Speicher, eine Antenne, ein Display, eine Eingabevorrichtung und/oder Sensoren, umfassen oder in Kombination miteinander bilden. Die Banknote ist beispielsweise flexibel.

Die Banknote umfasst beispielsweise eine Mehrzahl von Sicherheitsmerkmale, welche es ermöglichen die Authentizität und Validität der Banknoten zu prüfen. Die Mehrzahl von Sicherheitsmerkmale kann beispielsweise ein oder mehrere Level 1, Level 2 und/oder Level 3 Sicherheitsmerkmale umfassen. Level 1 Sicherheitsmerkmale sind Sicherheitsmerkmale, welche vom Menschen direkt erkannt und ohne weitere Hilfsmittel überprüft werden können. Level 2 Sicherheitsmerkmale sind maschinenlesbare Sicherheitsmerkmale, welche beispielsweise für kommerzielle Anforderungen zur Echtheitsprüfung von Banknoten verwendet werden. Level 3 Sicherheitsmerkmale sind Sicherheitsmerkmale, welche nur der ausgebenden Zentralbank bekannt. Zentralbanken verwenden solche geheim gehaltenen maschinenlesbaren Sicherheitsmerkmale, um die Integrität des Bargeldkreislaufs sicherzustellen und zu garantieren, nur echte Banknoten wieder in den Umlauf zu geben. Ferner verwenden Zentralbanken solche Level 3 Sicherheitsmerkmale, um echte Banknoten gegebenenfalls aus dem Umlauf zu nehmen und kontrolliert zu vernichten, falls die Umlauffähigkeit der entsprechenden Banknoten, beispielsweise aufgrund von Verschmutzung und/oder Verschleiß, nicht mehr ausreicht.

Die Sicherheitsmerkmale können beispielsweise taktile, akustische oder sichtbare Merkmale umfassen. Beispielsweise werden zur Herstellung der Banknote Materialien, wie etwa Sicherheitspapieren, mit einem charakteristischen haptischen Eindruck und/oder einem charakteristischen Klang beim Reiben und/oder Knüllen verwendet. Beispielsweise werden haptisch erfassbare Prägungen in die Banknote eingebracht. Beispielsweise werden visuell erfassbare Sicherheitsmerkmale, wie etwa Wasserzeichen, Durchsichtfenster, Durchsichtsregister, Passerdruckelemente, Folienelemente, Guillochen, Irisdruckelemente, Anti-Kopier-Raster, Melierfasern, Mikro-Perforationen, Mikroschriften, optisch variable Druckfarben, Perlglanzstreifen, Sicherheitsfaden und/oder Sonderfarben verwendet. Beispielsweise werden Sicherheitselemente wie etwa Metamerie-Farbkombinationen, Fluoreszierende Farben, diffraktive optische Elemente und/oder Scrambled-Indicia-Mikrodruckmuster verwendet.

Beispielsweise werden maschinenlesbare Sicherheitselemente verwendet, wie etwa Infraroteigenschaften der Druckfarbe, phosphoreszierende Farben, magnetische Elemente, Elemente mit charakteristischer elektrischer Leitfähigkeit und/oder Kopierschutzelemente, wie etwa ein digitales Wasserzeichen und/oder standardisierte Muster, beispielsweise eine EURion-Konstellation oder Omron-Ringe.

Beispielsweise umfasst die Banknote ein oder mehrere Sicherheitsmerkmale, welche nur der ausgebenden Zentralbank bekannt und/oder von dieser prüfbar sind, d.h. Level 3 Sicherheitsmerkmale, wie etwa das M-Feature der EZB.

Sicherheitsmerkmale, insbesondere Level 1 und Level 2 Sicherheitsmerkmale, können den Vorteil haben, dass sie es den Beteiligten ermöglichen eine Banknote ohne viel Aufwand auf ihre Echtheit, d.h. Authentizität und Validität, hin zu prüfen. Dies ermöglicht eine Verwendung der Banknote für Barzahlungen, welche eine Übergabe der Banknote von einem Zahlungspflichtigen an einen Zahlungsempfänger umfassen.

Unter einer "Blockchain" wird hier und im Folgenden eine geordnete Datenstruktur verstanden, welche eine Mehrzahl von miteinander verketteten Datenblöcken umfasst. Insbesondere wird unter einer Blockchain eine geordnete Datenstruktur verstanden, bei welcher jeder der Blöcke (außer dem ersten Block) einen Prüfwert, beispielsweise einen Hash-Wert, seines Vorgängerblocks umfasst und somit anhand jedes Blocks die Gültigkeit aller seiner Vorgängerblocks geprüft und ggf. bestätigt werden kann. Für Beispiele einer Blockchain vergleiche https://en.wikipedia.org/wiki/Block_chain_(database) und "Mastering Bitcoin", Chapter 7, The Blockchain, Seite 161 ff. Das Konzept der Blockchain wurde beispielsweise im Jahre 2008 in einem White Paper unter dem Pseudonym Satoshi Nakamoto zu Bitcoin beschrieben ("Bitcoin: Peer-to-Peer Electronic Cash System" (https://bitcoin.org/bitcoin.pdf)). Die darin beschriebene Blockchain besteht aus einer Reihe von Datenblöcken, in denen jeweils ein oder mehrere Einträge bzw. Transaktionen zusammengefasst und mit einer Prüfsumme in Form eines Hashwerts versehen sind. Zusätzliche Blöcke der Blockchain werden beispielsweise in einem rechenintensiven Prozess erzeugt, der auch als sogenanntes Mining bezeichnet wird. Diese zusätzlich erzeugten Blöcke werden anschließend der Blockchain hinzugefügt und über ein Netzwerk an alle Teilnehmer, bzw. Knoten des Netzwerks, verbreitet.

Ausführungsformen können den Vorteil haben, dass die Blockchain durch die Speicherung kryptografischer Prüfsumme, d.h. Hashwerten, des vorangehenden Blocks im jeweils nachfolgenden Block ein hohes Maß an Sicherheit gegenüber nachträglichen Manipulationen bietet. Das Verketten der Blöcke kann dann unter Verwendung dieser Root-Hashwerte überprüft werden. Jeder Block der Blockchain enthält in seinem Header den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke bzw. einzelner Einträge praktisch ausgeschlossen ist, da hierfür die Hashwerte aller nachfolgenden Blöcke in kurzer Zeit ebenfalls neu berechnet werden müssten.

Eine Blockchain kann beispielsweise auch in Form einer Blockchain implementiert werden, wobei nur eine ausgewählte Gruppe von Teilnehmern eine Berechtigung zum Hinzufügen gültiger Blöcke besitzt. Eine entsprechende Berechtigung kann beispielsweise mittels einer Signatur unter Verwendung eines privaten kryptographischen Schlüssels nachgewiesen werden. Der private kryptographische Schlüssel kann zu einem asymmetrischen Schlüsselpaar gehören, zu welchem auch ein öffentlicher kryptographischer Schlüssel gehört, mit dem die Signatur geprüft werden kann. Dem asymmetrischen Schlüsselpaar kann zudem beispielsweise ein Zertifikat zugeordnet sein, welches die Berechtigung zum Erzeugen eines gültigen Blocks der Blockchain belegt. Dieses Zertifikat kann ferner einer PKI zugeordnet sein, welche die Authentizität des Zertifikats belegt. Nach einer weiteren Ausführungsform kann beispielsweise für weitere Teilnehmer, welche der ausgewählten Gruppe hinzugefügt werden sollen, ein öffentlicher Schlüssel in der Blockchain in einem Initialisierungseintrag hinterlegt werden. Anhand dieser öffentlichen Schlüssel kann geprüft werden, ob Signaturen von Blöcken und damit die entsprechenden Blöcke selbst gültig sind. Öffentliche Schlüssel ursprünglicher Teilnehmer der ausgewählten Gruppe können beispielsweise in einem Genesisblock der Blockchain hinterlegt sein.

Bei der vorliegenden von einer der Zentralbank verwalteten Blockchain handelt es sich beispielsweise um eine private oder eine öffentliche zugriffsbeschränkte Blockchain, welche auf Blockchain-Servern der Zentralbank verwaltet wird. Beispielsweise erfolgt ein Eintragen neuer Blöcke ausschließlich durch diese von der Zentralbank verwalteten Blockchain-Server. In diesem Fall können beispielsweise rechenintensiven Prozess bei Hinzufügen zusätzlicher Blöcke entfallen. Beispielsweise ist für ein Hinzufügen zusätzlicher Blöcke lediglich eine Signatur mit einem der Zentralbank zugeordneten Signaturschlüssel notwendig.

Ein Konsens kann auch auf andere Weise in einer Blockchain implementiert werden. So kann etwa ein Konsens erreicht werden, indem über eine Aufnahme vorgeschlagener Einträge in die Blockchain abgestimmt wird. Beispielsweise führt jeder Teilnehmer bzw. Blockchain-Server eine eindeutige Liste anderer Teilnehmer, welchen er als Gruppe vertraut. Jeder Teilnehmer kann zusätzliche Einträge vorschlagen, die in einen zusätzlichen Block der Blockchain aufgenommen werden sollen. Über die Aufnahme und damit die Anerkennung der Gültigkeit der vorgeschlagenen Einträge wird abgestimmt. So stimmt beispielsweise jeder Teilnehmer nur über diejenigen Vorschläge ab, welche von Teilnehmer seiner Liste stammen. Mit anderen Worten werden für die Entscheidung, ob ein Vorschlag für einen zusätzlichen Eintrag als gültig anerkannt wird, d.h. ob bezüglich der Gültigkeit dieses Eintrages ein Konsens zwischen den Teilnehmern besteht, nur die Stimmen derjenigen Teilnehmer berücksichtigt, die von der Liste desjenigen Teilnehmers umfasst sind, der den entsprechenden Vorschlag macht. Damit ein Vorschlag für einen Eintrag als gültig angenommen wird, muss ein bestimmter Minimumanteil an stimmberechtigten Teilnehmern mit Ja stimmen, beispielsweise 80%, 90%, 95% oder 100%. Alle vorgeschlagenen Einträge, die dieses Kriterium erfüllen, werden in die Blockchain aufgenommen. Eine solche Abstimmung kann mehrere Runden umfassen. Alle anderen Vorschläge, die das zuvor genannte Kriterium nicht erfüllen, werden verworfen oder bei der Abstimmung über den nächsten Block der Blockchain erneut zur Abstimmung gestellt. Die zuvor genannten Listen stellen Untergruppen des Blockchain-Netzwerks dar, denen der Teilnehmer, welcher die jeweilige Liste führt, als Gruppe insgesamt traut, ohne dass dies erfordert, dass er jedem einzelnen Teilnehmer der Liste traut. Ein Beispiel für ein solches Konsensverfahren bietet der Ripple Protokoll Konsens Algorithmus (David Schwartz et al.: "The Ripple Protocol Consensus Algorithm", Ripple Labs Inc., 2014, https://ripple.com/files/ripple_consensus_whitepaper.pdf).

Unter einer "Kommunikationsschnittstelle" wird hier beispielsweise eine Schnittstelle verstanden, über die Daten empfangen und gesendet werden können, wobei die Kommunikationsschnittstelle kontaktbehaftet oder kontaktlos konfiguriert sein kann.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein digitales privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Eine kontaktlose Kommunikation mit der Banknote ist beispielsweise mittels Near Field Communication (NFC) möglich. Hierbei handelt es sich um eine auf der RFID-Technologie basierende Kommunikation zum kontaktlosen Austausch von Daten per elektromagnetischer Induktion mittels loser gekoppelter Spulen über kurze Strecken, von beispielsweise wenigen Zentimetern. NFC kann beispielsweise gemäß einer der Normen ISO 14443, 18092, 21481, ECMA 340, 352, 356, 362 bzw. ETSI TS 102 190 implementiert sein.

Die Kommunikationsschnittstelle der Banknote umfasst beispielsweise eine Antenne zur kontaktlosen Kommunikation. Die Antenne umfasst beispielsweise eine Induktionsspule. Die Induktionsspule kann ferner konfiguriert sein zur externen Energieversorgung der Banknote, beispielsweise mittels Energy Harvesting. Beispielsweise ist die Induktionsspule dazu konfiguriert, dass ein Terminal Energie in die Banknote einkoppelt.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Ein Prozessor umfasst beispielsweise ein Rechenwerk, ein Steuerwerk, Register und Datenleitungen zur Kommunikation mit anderen Komponenten. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" wird hier insbesondere ein nichtflüchtiger Speicher verstanden. Unter einem "nichtflüchtigen Speicher" wird hier beispielsweise ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des Sicherheitselements möglich ist. Beispielsweise ist auf den geschützten Speicherbereich kein externer Zugriff möglich, d.h. Daten können hierher weder von außen eingebracht werden, noch nach außen ausgegeben werden. Beispielsweise können Daten über den Prozessor nach außen aus den geschützten Speicherbereich ausgelesen werden. Beispielsweise können Daten über den Prozessor von außen in den geschützten Speicherbereich eingebracht werden. Nach Ausführungsformen ist der Zugriff von dem bzw. über den mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln. Eine solche Prüfung kann beispielsweise auf einer elektronischen Signatur mit einem Signaturschlüssel beruhen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte weitergegeben werden darf, sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln und digitale mit dem privaten Schlüssel erstellte Signaturen zu prüfen. Ein privater Schlüssel ermöglicht es seinem Inhaber, mit dem öffentlichen Schlüssel verschlüsselte Daten zu entschlüsseln oder digitale Signaturen zu erstellen. Eine mit einem privaten Schlüssel erstellte Signatur kann mit dem zugehörigen öffentlichen Schlüssel verifiziert werden.

Die Erstellung einer digitalen Signatur, im Folgenden auch lediglich als "Signatur" bezeichnet, ist ein kryptographisches Verfahren, bei dem zu beliebigen Daten ein weiterer Datenwert, welcher als "Signatur" bezeichnet wird, berechnet wird. Bei einer Signatur kann es sich zum Beispiel um eine mit einem privaten kryptographischen Schlüssel verschlüsselten Hashwert der Ausgangsdaten handeln.

Unter eine Sicherheitselement wird hier beispielsweise eine elektronische Komponente verstanden, welche einen Prozessor und einen Speicher umfasst, und auf welche nur bestimmte vordefinierte Zugriffe ermöglicht werden. Beispielsweise können nur bestimmte Datenwerte, welche etwa in bestimmten Bereichen des Speichers abgelegt sind ausgelesen werden. Beispielsweise können in einem geschützten Speicherbereich abgelegt Datenwerte nicht ausgelesen werden. Beispielsweise ist zum Schreiben eines Datenwerts in den Speicher des Sicherheitselements eine digitale Signatur notwendig, deren Prüfschlüssel in dem Sicherheitselement hinterlegt ist. Beispielsweise besitz nur der Prozessor Schreibrechte zum Schreiben von Daten in einen geschützten Speicherbereich.

Das Sicherheitselement stellt ferner beispielsweise kryptographische Kernroutinen in Form von kryptographischen Programminstruktionen mit kryptographischen Algorithmen für Signaturerstellung und/oder -prüfung, Schlüsselgenerierung, und/oder Zufallszahlengenerierung bereit und kann ferner als sicherer Speicher für kryptographische Schlüssel dienen.

Beispielsweise sind zumindest Teile des Sicherheitselements signiert. Vor einer Nutzung des Sicherheitselements wird geprüft, ob die Signatur bzw. die Signaturen, valide sind. Wenn eine der Signaturen nicht valide ist, wird die Nutzung des Sicherheitselements beispielsweise gesperrt.

Beispielsweise weist das Sicherheitselement physikalisch beschränkten Zugriffsmöglichkeiten. Zudem kann das Sicherheitselement zusätzliche Maßnahmen gegen Missbrauch aufweisen, insbesondere gegen unberechtigte Zugriffe auf Daten im Speicher des Sicherheitselement. Beispielsweise umfasst ein Sicherheitselement Sensoren zur Überwachung des Zustands des Sicherheitselements sowie von dessen Umgebung, um Abweichungen vom Normalbetrieb zu erkennen, welche auf Manipulationsversuche hinweisen können. Entsprechende Sensortypen umfassen beispielweise einen Taktfrequenzsensor, einen Spannungssensor und/oder einen Lichtsensor. Taktfrequenzsensoren und Spannungssensoren erfassen beispielweise Abweichungen der Taktfrequenz, Temperatur und/oder Spannung nach oben oder unten von einem vordefinierten Normalbereich. Insbesondere kann ein Sicherheitselement nichtflüchtige Speicher mit einem geschützten Speicherbereich umfassen.

Beispielsweise umfassen die Mittel zum Schutz des Sicherheitselements gegen unbefugte Manipulationen mechanische Mittel, die z.B. das Öffnen des Sicherheitselements oder seiner Teile verhindern sollen, oder die bei dem Versuch eines Eingriffs in das Sicherheitselement dieses unbrauchbar machen, beispielsweise indem ein Datenverlust eintritt. Beispielsweise können hierzu zumindest Teile des Sicherheitselements in ein Material eingeschlossen, eingegossen und/oder einlaminiert sein, dessen versuchte Entfernung zu einer unvermeidlichen Zerstörung der entsprechenden Teile des Sicherheitselements führt.

Bei den visuellen Angaben handelt es sich beispielsweise um Informationen, welche in einer optisch lesbaren Form in die Banknote eingebracht sind. Beispielsweise sind diese Informationen auf die Banknote und/oder eine Materialschicht der Banknote aufgedruckt, eingeprägt, eingraviert, aus dieser ausgestanzt, ausgeschnitten oder auf eine sonstige optisch erfassbare Weise eingebracht. Diese visuellen Merkmale sind beispielsweise mit einem optischen Sensor, wie etwa einer Kamera, erfassbar.

Beispielsweise kann bei einer Zahlungsabwicklung zunächst der aktuelle Nominalwert der Banknote geprüft werden. Dabei wird beispielsweise eine Blockchainabfrage nach dem aktuellen Nominalwert der Blockchainadresse der Banknote verwendet. Als Antwort auf die Abfrage wird ein der Blockchainadresse der Banknote zugeordneter aktueller Nominalwert empfangen. Zum Erstellen der Abfrage kann beispielsweise die Seriennummer der Banknote elektronisch erfasst werden, d.h. aus dem Speicher der Banknote ausgelesen, und/oder eine visuelle Angabe der Seriennummer mit einem optischen Sensor erfasst werden. Beispielsweise kann auch beides erfolgen, d.h. ein Auslesen aus dem Speicher und ein Scannen der visuellen Angabe, mit einem anschließenden Abgleich des Ergebnisses aus beiden Erfassungsverfahren. Stimmt die ausgelesene Seriennummer mit der eingescannten Seriennummer überein, wird diese akzeptiert ansonsten nicht. Dies kann einen Schutz gegen Manipulationen der Banknote bieten. Insbesondere könnte somit verhindert werden, dass bei einer gefälschten Banknote mit einer visuellen Angabe einer Seriennummer, deren Blockchainadresse ein hoher aktueller Nominalwert zugeordnet ist, ein Sicherheitselement einer anderen Banknote mit einer andern Seriennummer eingebracht wird, deren Blockchainadresse ein viel niedriger aktueller Nominalwert zugeordnet ist. Bei einer Bargeldzahlung mit einer solchen manipulierten Banknote bestünde sonst die Gefahr, dass der Zahlungsempfänger bei Empfang der Banknote von einem aktuellen Nominalwert der Bank ausgeht, welcher wesentlich höher ist als der tatsächliche Nominalwert der Banknote. Die Seriennummer der Banknote ist der Blockchainadresse der Banknote beispielsweise in einem Initialisierungseintrag der Blockchainadresse in der Blockchain zugeordnet.

Anstelle der Seriennummer kann auch ein anderer Identifikator der Blockchainadresse der Banknote in der zuvor beschrieben Weise erfasst und verwendet werden. Bei dem entsprechenden Identifikator kann es sich beispielsweise um den öffentlichen kryptographischen Schlüssel der Banknote handeln, aus welchem die Blockchainadresse beispielsweise unter Verwendung einer Hashfunktion abgeleitet werden kann. Bei dem entsprechenden Identifikator kann es sich beispielsweise um die entsprechende Blockchainadresse selbst handeln.

Der tatsächliche Nominalwert einer Banknote wird beispielsweise alleine von dem Nominalwert der Blockchainadresse bestimmt, welche der Banknote zugeordnet ist. Um über den der entsprechenden Blockchainadresse zugeordneten Nominalwert verfügen zu können, ist der Besitz einer echten Banknote mit einem der entsprechenden Blockchainadresse zugeordneten privaten kryptographischen Schlüssel notwendig.

Bei einem Zahlungsverfahren mit der Banknote können vor einem Senden einer Zahlungsanfrage auch ein oder mehrere Sicherheitsmerkmale der Banknote geprüft werden, um sicherzustellen, dass es sich bei der Banknote um eine echte, d.h. eine authentische und valide Banknote handelt.

Beispielsweise kann auf Basis des ermittelten aktuelle Nominalwerts entschieden werden, ob eine Bargeldzahlung oder eine bargeldlose Zahlung mit der Banknote erfolgen soll. Ist der aktuelle Nominalwert identisch mit dem zu zahlenden Betrag, erfolgt beispielsweise eine Bargeldzahlung, bei welcher die Banknote an den Zahlungsempfänger übergeben wird und das Eigentum an dieser an den Zahlungsempfänger übergeht. Ist der aktuelle Nominalwert größer als der zu zahlenden Betrag, erfolgt beispielsweise eine Bargeldlosezahlung. Bei der Bargeldlosezahlung wird beispielsweise eine entsprechende Zahlungsanfrage an die Banknote gesendet für eine Zahlung in Form einer Transaktion eines zu zahlenden Betrags von der Blockchainadresse der Banknote an eine Blockchainadresse eines Zahlungsempfängers. Die Banknote kann diese Transaktion mit einer signierten Transaktionsfreigabe autorisieren.

Ist der aktuelle Nominalwert größer als der zu zahlenden Betrag, wäre es ebenso möglich, dass eine Bargeldzahlung erfolgt und der überzählige Betrag als Wechselgeld, beispielsweise in Form von Bargeld, etwa Banknoten mit passendem Nominalwert, von dem Zahlungsempfänger zurückgezahlt wird.

Beispielsweise kann der aktuelle Nominalwert jeden positiven Wert einschließlich Null annehmen. Beispielsweise kann der aktuelle Nominalwert jeden Wert zwischen Null und einem vorgegebene Maximalnominalwert annehmen. Beispielsweise kann der aktuelle Nominalwert jeden Wert größer oder gleich einem vorgegebene Mindestnominalwert annehmen. Beispielsweise kann der aktuelle Nominalwert jeden Wert von einschließlich einem vorgegebene Mindestnominalwert bis einschließlich einem vorgegebene Maximalnominalwert annehmen.

Beispielsweise kann der Nominalwert der Banknote einen garantierten Mindestnominalwert und einen variablen Zusatznominalwertanteil umfassen. Der Mindestnominalwert kann beispielsweise nur in Form einer Bargeldzahlung mit Übergabe der Banknote gezahlt werden, während der variable Zusatznominalwertanteil im Zuge einer bargeldbasierten oder bargeldlosen Zahlungsabwicklung verwendet werden kann. Mit anderen Worten könnten mit der Banknote nur bargeldlose Zahlungen erfolgen, bei welchen der verbleidende Nominalwert der Banknote größer oder gleich dem Mindestnominalwert ist. Soll mit der Banknote ein Betrag gezahlt werden, welcher in einem verbleidenden Nominalwert resultieren würde, der kleiner dem Mindestnominalwert wäre, wird eine bargeldlose Zahlung über die Blockchain beispielsweise blockiert. Es muss mithin beispielsweise eine bargeldbasierte Zahlung erfolgen, bei welcher die Banknote übergeben wird. Ist der aktuelle Nominalwert der Banknote größer als der zu zahlende Betrag, so kann der Differenzbetrag beispielsweise in Form von Wechselgeld durch den Zahlungsempfänger rückerstattet werden.

Beispielsweise ist der initiale Nominalwert für die Banknote bzw. deren Blockchainadresse in der Blockchain eingetragen. Beispielsweise sind die visuelle Gestaltung, die eingebrachten Sicherheitsmerkmale und/oder das Format der Banknote abhängig von deren initialem Nominalwert. Somit unterscheiden sich Banknoten mit unterschiedlichem initialem Nominalwert beispielsweise hinsichtlich ihrer visuellen Gestaltung, der eingebrachten Sicherheitsmerkmale und/oder des Formats voneinander. Banknoten mit identischem initialem Nominalwert weisen beispielsweise abgesehen von ein oder mehreren banknotenindividuellen Angaben, wie etwa Seriennummer, Angaben zum Ausstellungjahr etc., eine identische visuelle Gestaltung, identische Sicherheitsmerkmale und/oder Formate auf.

Beispielsweise umfasst die Banknote eine visuelle Angabe des Mindestnominalwerts. Beispielsweise ist der Mindestnominalwert für die Banknote bzw. deren Blockchainadresse in der Blockchain eingetragen. Beispielsweise sind die visuelle Gestaltung, die eingebrachten Sicherheitsmerkmale und/oder das Format der Banknote abhängig von deren Mindestnominalwert. Somit unterscheiden sich Banknoten mit unterschiedlichen Mindestnominalwerten beispielsweise hinsichtlich ihrer visuellen Gestaltung, der eingebrachten Sicherheitsmerkmale und/oder des Formats voneinander. Banknoten mit identischen Mindestnominalwerten weisen beispielsweise abgesehen von ein oder mehreren banknotenindividuellen Angaben, wie etwa Seriennummer, Angaben zum Ausstellungjahr etc., eine identische visuelle Gestaltung, identische Sicherheitsmerkmale und/oder Formate auf.

Beispielsweise handelt es sich bei dem der Banknote zugeordneten initialen Nominalwert, welchen die Banknote als visuelle Angabe umfasst, um den gesamten Nominalwert, welcher der Banknote im Zuge ihrer Initialisierung in der Blockchain zugeordnet wird. Beispielsweise handelt es sich bei dem gesamten der Banknote initial zugeordneten Nominalwert um den garantierten Mindestnominalwert und einen initialen Zusatznominalwertanteil. Der Zusatznominalwertanteil ist beispielsweise variable in Abhängigkeit von den Transaktionen, welche unter Verwendung der Blockchain Adresse der Banknote ausgeführt werden. Beispielsweise handelt es sich bei dem visuell angegebenen initialen Nominalwert um einen Anteil des gesamten Nominalwerts, welcher der Banknote im Zuge ihrer Initialisierung in der Blockchain zugeordnet wird. Beispielsweise handelt es sich bei dem entsprechenden Anteil um den Mindestnominalwert, wobei der tatsächliche gesamte Nominalwert initial größer sein kann, d.h. einen initialen Zusatznominalwertanteil umfassen kann. Beispielsweise ist der gesamte Nominalwert, welcher der Banknote im Zuge ihrer Initialisierung in der Blockchain zugeordnet wird, ein Mindestnominalwert der Banknote, welcher beispielsweise visuell auf der Banknote angegeben ist. In diesem Fall handelt es sich bei der visuellen Angabe des initialen Nominalwerts beispielsweise zugleich um eine visuelle Angabe des Mindestnominalwerts der Banknote. Beispielsweise unterscheidet sich der Mindestnominalwert von dem initialen Nominalwert. In diesem Fall umfasst die Banknote beispielsweise eine visuelle Angabe des Mindestnominalwerts zusätzlich zu der visuellen Angabe des initialen Nominalwerts.

Ein Hinzufügen eines variablen Zusatznominalwertanteils oder eine Erhöhung eines bestehenden variablen Zusatznominalwertanteils erfolgt beispielsweise durch eine Transaktion eines entsprechenden Betrags an die Blockchainadresse der Banknote. Die Transaktion kann von einer anderen Blockchainadresse, etwa einer Blockchainadresse einer anderen Banknote oder der Zentralbank, stammen. Beispielsweise ist variable Zusatznominalwertanteil unbegrenzt erhöhbar. Beispielsweise ist der variable Zusatznominalwertanteil in Abhängigkeit von dem Mindestnominalwert und/oder dem initialen Nominalwert erhöhbar. Beispielsweise ist ein maximal zulässiger variabler Zusatznominalwertanteil in der Blockchain für die Blockchainadresse der entsprechenden Banknote eingetragen. Beispielsweise beträgt der maximal zulässiger variabler Zusatznominalwertanteil der Banknote 100%, 200%, 300%, 400%, 500%, 600%, 700%, 800%, 900% oder 1000% des Mindestnominalwert der Banknote. Beispielsweise wird bei einer Transaktion an eine Blockchainadresse einer Banknote als Voraussetzung zum Ausführen der Transaktion geprüft, ob durch die Transaktion der maximal zulässige variable Zusatznominalwertanteil überschritten wird. Falls der maximal zulässige variable Zusatznominalwertanteil nicht überschritten wird, wird die Transaktion ausgeführt, d.h. in die Blockchain eingetragen. Falls der maximal zulässige variable Zusatznominalwertanteil überschritten wird, wird die Transaktion nicht ausgeführt, d.h. nicht in die Blockchain eingetragen.

Nach Ausführungsformen umfasst die Banknote die visuelle Angabe der Seriennummer mehrfach über die Banknote verteilt. Ausführungsformen können den Vorteil haben, dass selbst bei einer teilweisen Beschädigung der Banknote, die Seriennummer erfasst werden kann. Beispielsweise sind Angaben der Seriennummer in Kombination mit und/oder als Bestandteil von mehreren Sicherheitsmerkmalen der Banknote in diese eingebracht. Dies könnte den Vorteil haben, dass solange genügend Sicherheitsmerkmale zur Bestätigung der Authentizität und Validität der Banknote vorliegen, die Seriennummer der Banknote erfasst werden kann.

Nach Ausführungsformen umfasst die Banknote die visuelle Angabe des initialen Nominalwerts und/oder des Mindestnominalwerts ebenfalls mehrfach über die Banknote verteilt. Beispielsweise sind Angaben des initialen Nominalwerts und/oder des Mindestnominalwerts in Kombination mit und/oder als Bestandteil von mehreren Sicherheitsmerkmalen der Banknote in diese eingebracht. Beispielsweise sind ein oder mehrere der Sicherheitsmerkmale der Banknote von dem initialen Nominalwert und/oder dem Mindestnominalwert der Banknote abhängig.

Nach Ausführungsformen ist die Mehrzahl von Angaben der Seriennummer derart über die Banknote verteilt, dass sichergestellt werden kann, dass die Seriennummer der Banknote ermittelt werden kann, solange mehr als 50% der Banknote vorliegen. Ausführungsformen können den Vorteil haben, dass bei einem Verlust eines Teils der Banknote sichergestellt werden kann, dass solange mehr als 50% der Banknote vorliegen, was beispielsweise Voraussetzung für ein Ersetzen der Banknote ist, die vorliegenden mehr als 50% die Seriennummer der Banknote umfassen. Somit kann selbst bei einem teilweisen Verlust der Banknote sichergestellt, dass solange der verbliebene Teil bzw. die verbliebenen Teile der Banknote valide sind, die Seriennummer erfasst und der aktuelle Nominalwert der Banknote gemäß der Blockchainadresse der Banknote bestimmt werden kann.

Nach Ausführungsformen ist in dem Speicher ferner ein banknotenindividueller öffentlicher kryptographischer Schlüssel des asymmetrischen Schlüsselpaars der Banknote gespeichert, aus welchem die Blockchainadresse der Banknote ableitbar ist. Nach Ausführungsformen ist in dem Speicher ferner die Blockchainadresse der Banknote gespeichert.

Nach Ausführungsformen umfasst die Banknote ferner eine visuelle Angabe des banknotenindividuellen öffentlichen kryptographischen Schlüssels. Nach Ausführungsformen umfasst die Banknote ferner eine visuelle Angabe der Blockchainadresse der Banknote.

Nach Ausführungsformen umfasst die Banknote eine Mehrzahl von Sicherheitsmerkmalen. Ausführungsformen können den Vorteil haben, dass es unter Verwendung der Sicherheitsmerkmale, bei welchen es sich beispielsweise um Level 1, Level 2 und/oder Level 3 Sicherheitsmerkmale handelt, ermöglicht werden kann die Authentizität und Validität der Banknote zu prüfen. Nach Ausführungsformen umfassen ein oder mehrere Sicherheitsmerkmale der Mehrzahl von Sicherheitsmerkmalen eine Angabe der Seriennummer, des banknotenindividuellen öffentlichen kryptographischen Schlüssels und/oder der Blockchainadresse der Banknote. Ausführungsformen können den Vorteil haben, dass bei einem Erfassen der entsprechenden ein oder mehreren Sicherheitsmerkmale jeweils die Seriennummer, der banknotenindividuelle öffentliche kryptographische Schlüssel und/oder die Blockchainadresse der Banknote miterfasst werden kann. Als Bestandteil der entsprechenden Sicherheitsmerkmale kann anhand der Sicherheitsmerkmale nicht nur die Authentizität und Validität der Banknote an sich, sondern auch die Authentizität und Validität der Seriennummer des banknotenindividuellen öffentlichen kryptographischen Schlüssels und/oder der Blockchainadresse der Banknote geprüft werden. Somit kann beispielsweise eine durch die entsprechenden Sicherheitsmerkmale gesicherte Verbindung bzw. Zuordnung der physischen Banknote und der Blockchainadresse der Banknote bereitgestellt werden, welche beispielsweise unter Verwendung der Seriennummer des banknotenindividuellen öffentlichen kryptographischen Schlüssels und/oder der Blockchainadresse der Banknote identifizierbar ist. Nach Ausführungsformen handelt es sich bei den ein oder mehreren Sicherheitsmerkmalen, welche eine Angabe der Seriennummer des banknotenindividuellen öffentlichen kryptographischen Schlüssels und/oder der Blockchainadresse der Banknote umfassen, beispielsweise um Level 1, Level 2 und/oder Level 3 Sicherheitsmerkmale.

Nach Ausführungsformen umfasst die Banknote die visuelle Angabe des öffentlichen kryptographischen Schlüssels und/oder der Blockchainadresse mehrfach über die Banknote verteilt. Ausführungsformen können den Vorteil haben, dass selbst bei einer teilweisen Beschädigung der Banknote, der öffentliche kryptographische Schlüssel und/oder die Blockchainadresse erfasst werden kann. Beispielsweise sind Angaben des öffentlichen kryptographischen Schlüssels und/oder der Blockchainadresse in Kombination mit und/oder als Bestandteil von mehreren Sicherheitsmerkmalen der Banknote in diese eingebracht. Dies könnte den Vorteil haben, dass solange genügend Sicherheitsmerkmale zur Bestätigung der Authentizität und Validität der Banknote vorliegen, die der öffentliche kryptographische Schlüssel und/oder die Blockchainadresse der Banknote erfasst werden kann.

Nach Ausführungsformen ist die Mehrzahl von Angaben des öffentlichen kryptographischen Schlüssels und/oder der Blockchainadresse derart über die Banknote verteilt, dass sichergestellt werden kann, dass der öffentliche kryptographische Schlüssel und/oder die Blockchainadresse der Banknote ermittelt werden kann, solange mehr als 50% der Banknote vorliegen. Ausführungsformen können den Vorteil haben, dass bei einem Verlust eines Teils der Banknote sichergestellt werden kann, dass solange mehr als 50% der Banknote vorliegen, was beispielsweise Voraussetzung für ein Ersetzen der Banknote ist, die vorliegenden mehr als 50% den öffentlichen kryptographischen Schlüssel und/oder die Blockchainadresse der Banknote umfassen. Somit kann selbst bei einem teilweisen Verlust der Banknote sichergestellt, dass solange der verbliebene Teil bzw. die verbliebenen Teile der Banknote valide sind, der öffentliche kryptographische Schlüssel und/oder die Blockchainadresse erfasst und der aktuelle Nominalwert der Banknote gemäß der Blockchainadresse der Banknote bestimmt werden kann.

Nach Ausführungsformen erzeugt die Banknote die Transaktionsfreigabe unter Verwendung der Angaben der Zahlungsanfrage. Ausführungsformen können den Vorteil haben, dass die Banknote die entsprechenden Angaben direkt aus der Zahlungsanfrage übernehmen kann. Nach Ausführungsformen umfasst die Zahlungsanfrage die vollständigen Transaktionsangaben, welche die Banknote als Transaktionsfreigabe signiert. Die vollständigen Transaktionsangaben umfassen neben dem zu zahlenden Betrag und der Blockchainadresse des Zahlungsempfängers beispielsweise die Blockchainadresse der Banknote.

Nach Ausführungsformen wird von der Banknote zum Ableiten der Blockchainadresse der Banknote für die Zahlungsanfrage der öffentliche kryptographische Schlüssel der Banknote bereitgestellt. Nach Ausführungsformen wird der öffentliche kryptographische Schlüssel der Banknote als visuelle Angabe zum Ablesen, insbesondere Maschinenlesen, bereitgestellt. Beispielsweise umfasst die visuelle Angabe eine alphanumerische Zeichenfolge, einen Bar-Code, oder einen QR-Code des öffentlichen kryptographischen Schlüssels. Nach Ausführungsformen wird der öffentliche kryptographische Schlüssel von der Banknote zum Erstellend er zahlungsanfrage gesendet. Das Senden erfolgt beispielsweise in Antwort auf eine Anfrage nach dem öffentlichen kryptographischen Schlüssel. Ausführungsformen können den Vorteil haben, dass die aus dem öffentlichen kryptographischen Schlüssel ableitbare Blockchainadresse der Banknote zum Erstellen der Zahlungsanfrage bereitgestellt werden kann, ohne dass dafür eine weitere Instanz als die Banknote notwendig ist.

Nach Ausführungsformen wird von der Banknote die Blockchainadresse der Banknote für die Zahlungsanfrage bereitgestellt. Nach Ausführungsformen wird die Blockchainadresse der Banknote als visuelle Angabe zum Ablesen, insbesondere Maschinenlesen, bereitgestellt. Beispielsweise umfasst die visuelle Angabe eine alphanumerische Zeichenfolge, einen Bar-Code, oder einen QR-Code der Blockchainadresse der Banknote. Nach Ausführungsformen wird die Blockchainadresse der Banknote von der Banknote zum Erstellend er zahlungsanfrage gesendet. Das Senden erfolgt beispielsweise in Antwort auf eine Anfrage nach der Blockchainadresse der Banknote. Ausführungsformen können den Vorteil haben, dass die Blockchainadresse der Banknote zum Erstellen der Zahlungsanfrage bereitgestellt werden kann, ohne dass dafür eine weitere Instanz als die Banknote notwendig ist.

Nach Ausführungsformen umfasst die Banknote eine Kommunikationsschnittstelle zur Kommunikation mit einem Terminal. Die Banknote empfängt die Zahlungsanfrage von dem Terminal über die Kommunikationsschnittstelle und/oder sendet die signierte Transaktionsfreigabe über die Kommunikationsschnittstelle an das Terminal. Bei dem Terminal kann es sich beispielsweise um ein Terminal eines Verkäufers an einem Verkaufsort (engl.: "Point of Sale"/PoS), d.h. an dem Ort, an dem ein Verkauf vollzogen wird, handeln. Bei dem Terminal kann es sich ferner um ein Terminal handeln, welches an ein Nutzercomputersystem angeschlossen ist, über welches eine Zahlung mit der Banknote abgewickelt werden soll. Beispielsweise handelt es sich hierbei um eine Zahlungsabwicklung über ein Netzwerk, etwa das Internet, gegenüber einem Dienstanbieter, sei es ein Verkäufer oder ein Zahlungsdienstanbieter. Ebenso könnte das Terminal in Form eines mobilen tragbaren Kommunikationsgeräts, etwa einem Smartphone, eines Nutzers bereitgestellt werden. Der Nutzer könnte das mobile tragbare Kommunikationsgerät beispielsweise für eine Zahlungsabwicklung über ein Netzwerk, etwa das Internet, gegenüber einem Dienstanbieter nutzen, sei es ein Verkäufer oder ein Zahlungsdienstanbieter.

Nach Ausführungsformen umfasst die Banknote eine Nutzerschnittstelle zur Kommunikation mit einem Nutzer der Banknote, wobei die Banknote die Zahlungsanfrage von einem Nutzer über eine Eingabevorrichtung der Nutzerschnittstelle empfängt und/oder die signierte Transaktionsfreigabe an die Nutzerschnittstelle zum Ausgeben über eine Anzeigevorrichtung der Nutzerschnittstelle sendet. Ausführungsformen können den Vorteil haben, dass die für den Nutzer sichtbar ist und/oder gesteuert wird, welche Daten in die Banknote eingegeben werden und welche Daten die Banknote ausgibt.

Die Eingabevorrichtung kann beispielsweise ein Touch-Pad umfassen. Die Anzeigevorrichtung kann beispielsweise ein Display umfassen. Die Eingabevorrichtung kann beispielsweise mit der Anzeigevorrichtung kombiniert sein, etwa in Form eines Touch-Displays. Der Nutzer gibt die Daten der Zahlungsanfrage beispielsweise unter Verwendung der Eingabevorrichtung in Banknote ein.

Beispielsweise wird dem Nutzer die Zahlungsanfrage und/oder die Transaktionsfreigabe auf der Anzeigevorrichtung der Banknote angezeigt. Eine Bestätigung der angezeigten Zahlungsanfrage und/oder Transaktionsfreigabe durch den Nutzer unter Verwendung der Eingabevorrichtung der Banknote ist beispielsweise Voraussetzung für ein Erzeugen und/oder Signieren der Transaktionsfreigabe.

Beispielsweise wird die signierte Transaktionsfreigabe an die Anzeigevorrichtung der Banknote zum Anzeigen gesendet, etwa als alphanumerischer Zeichenfolg, Bar-Code, oder QR-Code. Die auf der Anzeigevorrichtung angezeigte signierte Transaktionsfreigabe kann beispielsweise unter Verwendung eines optischen Sensors, etwa eines Sensors eines Terminals, gescannt bzw. eingelesen werden.

Nach Ausführungsformen ist in dem Speicher des Sicherheitselements ferner ein aktueller Nominalwert der Banknote gespeichert. Ausführungsformen können den Vorteil haben, dass der aktuelle Nominalwert aus der Banknote ausgelesen werden kann. Beispielsweise legt den tatsächlich verbindlichen Nominalwert der Banknote aber die Blockchain mit dem unter der Blockchainadresse der Banknote gespeicherten aktuellen Nominalwert fest, d.h. dem sich aus der Bilanz der in der Blockchain gespeicherten Transaktionen unter Beteiligung der Blockchainadresse der Banknote ergebenden aktuellen Nominalwert.

Beispielsweise ist der aktuelle Nominalwert in dem geschützten Speicherbereich des Speichers des Sicherheitselements gespeichert. Beispielsweise ist der aktuelle Nominalwert nicht in dem geschützten Speicherbereich des Speichers des Sicherheitselements gespeichert. Beispielsweise ist der in dem Speicher des Sicherheitselements gespeicherte aktueller Nominalwert der Banknote von außen auslesbar. Beispielsweise ist der in dem Speicher des Sicherheitselements gespeicherte aktueller Nominalwert der Banknote nicht von außen auslesbar. Beispielsweise dient der in dem Speicher des Sicherheitselements gespeicherte aktueller Nominalwert der Banknote alleine einer internen Prüfung, etwa, ob ein zu zahlender Betrag kleiner gleich dem aktuellen Nominalwert der Banknote ist.

Nach Ausführungsformen ist ferner die Seriennummer der Banknote in dem Speicher des Sicherheitselements gespeichert.

Nach Ausführungsformen ist initial als aktueller Nominalwert der initiale Nominalwert der Banknote in dem Speicher des Sicherheitselements gespeichert. Ausführungsformen können den Vorteil haben, dass ausgehend von diesem initialen Nominalwert bei jeder erfolgreich abgewickelten Zahlung der gespeicherte Nominalwert angepasst wird und somit banknotenseitig der aktuelle Nominalwert nachverfolgt werden kann.

Nach Ausführungsformen ist der Prozessor ferner dazu konfiguriert bei Ausführen der Programminstruktionen den zu zahlenden Betrag mit dem gespeicherten aktuellen Nominalwert der Banknote abzugleichen und die signierte Transaktionsfreigabe zur Autorisierung der Transaktion nur unter der Voraussetzung zu erstellen, dass der gespeicherte aktuelle Nominalwert größer oder gleich dem zu zahlenden Betrag ist. Ausführungsformen können den Vorteil haben, dass sichergestellt werden kann, dass der aktuelle Nominalwert für die auszuführende Zahlung ausreichend ist.

Nach Ausführungsformen ist der Prozessor ferner dazu konfiguriert bei Ausführen der Programminstruktionen ein Aktualisierungsverfahren zum Aktualisieren des gespeicherten aktuellen Nominalwerts der Banknote auszuführen. Das Aktualisierungsverfahren umfasst:
- Empfangen einer Aktualisierungsanfrage zum Aktualisieren des in dem Speicher des Sicherheitselements gespeicherten aktuellen Nominalwerts der Banknote, wobei die Aktualisierungsanfrage einen aktualisierten Nominalwert der Banknote zusammen mit einer kryptographisch gesicherten Bestätigung der ausgebenden Zentralbank für den aktualisierten Nominalwert umfasst,
- Prüfen der kryptographisch gesicherten Bestätigung unter Verwendung eines in dem Speicher des Sicherheitselements gespeicherten kryptographischen Prüfschlüssels,
- im Falle einer erfolgreichen Prüfung, Ersetzten des in dem Speicher des Sicherheitselements gespeicherten aktuellen Nominalwerts der Banknote mit dem empfangenen aktualisierten Nominalwert.

Ausführungsformen können den Vorteil haben, dass sichergestellt werden kann der gespeicherte Nominalwert aktualisiert ist. Nach Ausführungsformen handelt es sich bei dem kryptographischen Prüfschlüssel um einen zusätzlichen zu dem asymmetrischen Schlüsselpaar der Banknote in dem Speicher des Sicherheitselements gespeicherten kryptographischen Prüfschlüssel, beispielsweise einen öffentlichen kryptographischen Schlüssel eines der Zentralbank zugeordneten asymmetrischen Schlüsselpaars. Der Signaturprüfschlüssel wird beispielsweise im Zuge der Herstellung der Banknote in dem Sicherheitselement hinterlegt.

Nach Ausführungsformen wird die Aktualisierungsanfrage in Antwort auf das Senden der signierten Transaktionsfreigabe empfangen. Beispielsweise handelt es sich bei der Bestätigung der Zentralbank für den aktualisierten Nominalwert um eine Transaktionsbestätigung der Zentralbank, insbesondere um eine Bestätigung einer Eintragung der Transaktion in die Blockchain. Beispielsweise handelt es sich bei dem aktualisierten Nominalwert um den bisherigen Nominalwert der Banknote abzüglich des gezahlten Betrags.

Nach Ausführungsformen wird die Aktualisierungsanfrage in Antwort auf eine Transaktion eines zusätzlichen Betrags auf die Blockchainadresse der Banknote. Beispielsweise handelt es sich bei dem aktualisierten Nominalwert um den bisherigen Nominalwert der Banknote zuzüglich des zusätzlichen Betrags. Ausführungsformen können den Vorteil haben, dass auch Änderungen des Nominalwerts im Zuge einer Transaktion eines zusätzlichen Betrags auf die Blockchainadresse der Banknote berücksichtigt werden.

Ausführungsformen umfassen ein Verfahren zum Herstellen einer Banknote. Das Ausstellverfahren umfasst:
- Herstellen der Banknote, wobei die Banknote ferner ein Sicherheitselement mit einem Prozessor und einem Speicher mit Programminstruktionen umfasst,
- Erzeugen eines banknotenindividuellen asymmetrischen Schlüsselpaars mit einem privaten und einem öffentlichen kryptographischen Schlüssel durch die Banknote,
- Speichern des erzeugten banknotenindividuellen asymmetrischen Schlüsselpaars in dem Speicher durch die Banknote, wobei der private kryptographische Schlüssel in einem geschützten Speicherbereich des Speichers gespeichert wird,
- Ausgeben des erzeugten öffentlichen kryptographischen Schlüssels durch die Banknote zum Initialisieren einer aus dem öffentlichen kryptographischen Schlüssel abgeleiteten banknotenindividuellen Blockchainadresse durch eine die Banknote ausgebenden Zentralbank und/oder einen Hersteller der Banknote in einer Blockchain, wobei der Blockchainadresse der Banknote im Zuge der Initialisierung der initiale Nominalwert zugeordnet wird.

Nach Ausführungsformen umfasst die hergestellte Banknote beispielsweise eine visuelle Angabe einer die Banknote eindeutig identifizierenden Seriennummer. Nach Ausführungsformen umfasst die hergestellte Banknote beispielsweise eine visuelle Angabe eines der Banknote zugeordneten initialen Nominalwerts.

Ausführungsformen können den Vorteil haben, dass die Banknote bzw. der Banknotenkörper hergestellt bzw. gedruckt wird. Zusätzlich zu visuellen Angaben und Sicherheitselementen, wie sie etwa auch bekannte Banknoten aufweisen, umfasst die Banknote beispielsweise zusätzlich ein Sicherheitselement mit einem Prozessor und einem Speicher mit Programminstruktionen. Diese Programminstruktionen umfassen beispielsweise kryptographische Programminstruktionen zum Erzeugen eines banknotenindividuellen asymmetrischen Schlüsselpaars mit einem privaten und einem öffentlichen kryptographischen Schlüssel durch die Banknote. Damit die Banknote Gültigkeit erhält, muss diese beispielsweise in die Blockchain eingetragen werden. Hierzu wird aus dem öffentlichen kryptographischen Schlüssel eine banknotenindividuellen Blockchainadresse abgeleitet. Diese Ableitung kann durch die Banknote selbst und/oder durch ein externes Computersystem, beispielsweise ein Computersystem der Zentralbank erfolgen, welche die Blockchain verwaltet. Im Zuge einer Initialisierung der Blockchainadresse der Banknote durch die ausgebende Zentralbank wird beispielsweise ein der Banknote bzw. der Seriennummer der Banknote zugeordneter initialer Nominalwert in die Blockchain eingetragen. Diese Eintragung kann beispielsweise in Form einer Transaktion mit dem entsprechenden Betrag und gegebenenfalls weiteren Informationen von einer Blockchainadresse der Zentralbank an die Blockchainadresse der Banknote erfolgen. Die weiteren Informationen umfassen beispielsweise die Seriennummer der Banknote, einen Mindestnominalwert der Banknote und/oder einen Zusatznominalwertanteil der Banknote. Alternativ könnte die Zuordnung des initialen Nominalwerts zu der Blockchainadresse auch durch einen Eintrag der Zentralbank, z.B. einen von der Zentralbank signierten Eintrag, erfolgen, welche die Blockchainadresse, den initialen Nominalwert und/oder weiteren Informationen bezüglich der durch die Eintragung initialisierten Banknote umfasst. Die weiteren Informationen umfassen beispielsweise die Seriennummer der Banknote, einen Mindestnominalwert der Banknote und/oder einen Zusatznominalwertanteil der Banknote.

Nach Ausführungsformen ist das Ausstellverfahren dazu konfiguriert jede der zuvor beschriebenen Ausführungsformen der Banknote auszustellen bzw. herzustellen. Nach Ausführungsformen handelt es sich bei der unter Verwendung des Ausstellverfahrens ausgestellten Banknote um eine Banknote nach einer der zuvor beschriebenen Ausführungsformen.

Nach Ausführungsformen umfasst das Verfahren ferner ein Senden einer Herstellungsbestätigung zu Bestätigung der Herstellung der Banknote an die ausgebende Zentralbank. Die Herstellungsbestätigung umfasst die Seriennummer und den öffentlichen kryptographischen Schlüssel der hergestellten Banknote zum Initialisieren einer aus dem öffentlichen kryptographischen Schlüssel abgeleiteten banknotenindividuellen Blockchainadresse durch die ausgebende Zentralbank in der Blockchain. Nach Ausführungsformen umfasst die Herstellungsbestätigung ferner eine Angabe eines initialen Nominalwerts und/oder einer Mindestnominalwert der Banknote.

Ausführungsformen können den Vorteil haben, dass der Zentralbank durch die Herstellungsbestätigung alle zur Initialisierung der Banknote in der Blockchain notwendigen Informationen zur Verfügung gestellt werden. Alternativ oder zusätzlich werden der Zentralbank durch die Herstellungsbestätigung die Banknote charakterisierende Informationen bestätigt. Beispielsweise gibt die Zentralbank einem Hersteller der Banknote in einem Auftrag vor, welche Seriennummern zur Herstellung von Banknoten mit welchen initialen Nominalwerten und/oder Mindestnominalwerten verwendet werden sollen. Die Herstellungsbestätigung bestätigt gegenüber der Zentralbank welche Banknoten mit welchen Seriennummern und welchen initialen Nominalwerts und/oder einer Mindestnominalwert tatsächlich hergestellt wurden.

Nach Ausführungsformen umfasst das Initialisieren ein Registrieren der Blockchainadresse der Banknote durch einen Initialisierungs- bzw. Registrierungseintrag der ausgebenden Zentralbank in der Blockchain. Nach Ausführungsformen umfasst der Registrierungseintrag die Blockchainadresse der Banknote und den der Banknote zugeordneten initialen Nominalwert. Nach Ausführungsformen ist der Registrierungseintrag unter Verwendung eines privaten kryptographischen Schlüssels der ausgebenden Zentralbank signiert. Nach Ausführungsformen weist der Registrierungseintrag die Form einer Transaktion des initialen Nominalwerts von der ausgebenden Zentralbank, beispielsweise von einem der Zentralbank zugeordneten Blockchainadresse, an die Blockchainadresse der Banknote auf. Nach Ausführungsformen umfasst der Registrierungseintrag die Seriennummer der Banknote. Nach Ausführungsformen wird eine Zuordnung der Seriennummer der Banknote zu der Blockchainadresse der Banknote und/oder des öffentlichen Schlüssels der Banknote in einem zusätzlichen Register der ausgebenden Zentralbank gespeichert, wobei die Seriennummer als Datenbankzugriffsschlüssel zum Auslesen der Blockchainadresse und/oder des öffentlichen Schlüssels der Banknote dient.

Nach Ausführungsformen wird die Banknote auf einen Empfang einer Bestellung von einer die Banknote ausgebenden Zentralbank hin hergestellt. Nach Ausführungsformen wird eine Angabe des vordefinierten Bereichs von Seriennummern empfangen. Nach Ausführungsform wird eine Angabe des für die Banknote vorgesehenen initialen Nominalwerts und/oder Mindestnominalwerts empfangen.

Ausführungsformen umfassen ein Verfahren zum Verwenden einer Banknote. Die Banknote umfasst ein Sicherheitselement mit einem Prozessor und einem Speicher. In einem geschützten Speicherbereich des Speichers ist ein banknotenindividueller privater kryptographischer Schlüssel eines asymmetrischen Schlüsselpaars der Banknote gespeichert. Das asymmetrische Schlüsselpaar ist einer banknotenindividuellen Blockchainadresse einer von einer die Banknote ausgebenden Zentralbank verwalteten Blockchain zugeordnet ist.

Der Prozessor ist dazu konfiguriert bei Ausführen der Programminstruktionen ein Zahlungsverfahren mit der Banknote auszuführen. Das Zahlungsverfahren umfasst:
- Empfangen einer Zahlungsanfrage für eine Zahlung mit der Banknote in Form einer Transaktion eines zu zahlenden Betrags von der Blockchainadresse der Banknote an eine Blockchainadresse eines Zahlungsempfängers, wobei die Zahlungsanfrage den zu zahlenden Betrag und die Blockchainadresse des Zahlungsempfängers angibt,
- Signieren der Transaktionsfreigabe mit dem privaten kryptographischen Schlüssel der Banknote, wobei die Transaktionsfreigabe die Blockchainadresse der Banknote, die Blockchainadresse des Zahlungsempfängers und den zu zahlenden Betrag umfasst,
- Senden der signierten Transaktionsfreigabe.

Nach Ausführungsformen wird mit der signierten Transaktionsfreigabe zusammen ferner ein weiterer transaktionsindividueller Wert gesendet. Beispielsweise ist der weitere transaktionsindividuelle Wert von der Signatur der Transaktionsfreigabe mitumfasst und/oder an die signierte Transaktionsfreigabe angehängt. Bei dem weiteren transaktionsindividuellen Wert handelt es sich beispielsweise um einen Zeitstempel und/oder eine Zufallszahl.

Nach Ausführungsformen umfasst die Banknote beispielsweise eine visuelle Angabe einer die Banknote eindeutig identifizierenden Seriennummer. Nach Ausführungsformen umfasst die Banknote beispielsweise eine visuelle Angabe eines der Banknote zugeordneten initialen Nominalwerts.

Ausführungsformen können den Vorteil haben, dass die Banknote, wie bereits zuvor beschrieben, nicht zur für eine Bargeldzahlung, sondern zudem für eine bargeldlose Zahlung verwendet werden kann.

Nach Ausführungsformen handelt es sich bei der zum Zahlen verwendeten Banknote um eine Banknote nach einer der zuvor beschriebenen Ausführungsformen.

Nach Ausführungsformen ist in dem Speicher ferner ein banknotenindividueller öffentlicher kryptographischer Schlüssel des asymmetrischen Schlüsselpaars der Banknote gespeichert, aus welchem die Blockchainadresse der Banknote ableitbar ist. Nach Ausführungsformen ist in dem Speicher ferner die Blockchainadresse der Banknote gespeichert. Ausführungsformen können den Vorteil haben, dass die Banknote über die Blockchainadresse verfügt und/oder diese ableiten kann.

Nach Ausführungsformen umfasst die Banknote ferner eine visuelle Angabe des banknotenindividuellen öffentlichen kryptographischen Schlüssels. Nach Ausführungsformen umfasst die Banknote ferner eine visuelle Angabe der Blockchainadresse der Banknote. Falls die Banknote eine visuelle Angabe des banknotenindividuellen öffentlichen kryptographischen Schlüssels und/oder der Blockchainadresse der Banknote umfasst, erfolgt das erzeugen des banknotenindividuellen asymmetrischen Schlüsselpaars beispielsweise während des Herstellens der Banknote, sodass der banknotenindividuellen öffentliche kryptographische Schlüssel und/oder die Blockchainadresse der Banknote im Zuge der Herstellung beispielsweise auf die Banknote gedruckt oder anderweitig in die Banknote eingebracht werden können. Alternativ oder zusätzlich kann die Banknote eine Anzeigevorrichtung umfassen, auf welcher der in dem Speicher des Sicherheitselements gespeicherte banknotenindividuelle öffentliche kryptographische Schlüsse und/oder die Blockchainadresse der Banknote als visuelle Angabe angezeigt werden kann.

Nach Ausführungsformen erzeugt die Banknote die Transaktionsfreigabe unter Verwendung der Angaben der Zahlungsanfrage. Nach Ausführungsformen umfasst die Zahlungsanfrage die vollständigen Transaktionsangaben, welche die Banknote als Transaktionsfreigabe signiert.

Nach Ausführungsformen wird von der Banknote zum Ableiten der Blockchainadresse der Banknote für die Zahlungsanfrage der öffentliche kryptographische Schlüssel der Banknote bereitgestellt. Nach Ausführungsformen wird der öffentliche kryptographische Schlüssel der Banknote als visuelle Angabe zum Ablesen bereitgestellt. Nach Ausführungsformen wird der öffentliche kryptographische Schlüssel von der Banknote gesendet.

Nach Ausführungsformen wird von der Banknote die Blockchainadresse der Banknote für die Zahlungsanfrage bereitgestellt. Nach Ausführungsformen wird die Blockchainadresse der Banknote als visuelle Angabe zum Ablesen bereitgestellt. Nach Ausführungsformen wird die Blockchainadresse der Banknote von der Banknote gesendet.

Nach Ausführungsformen umfasst die Banknote eine Kommunikationsschnittstelle zur Kommunikation mit einem Terminal. Die Banknote empfängt die Zahlungsanfrage von dem Terminal über die Kommunikationsschnittstelle und/oder sendet die signierte Transaktionsfreigabe über die Kommunikationsschnittstelle an das Terminal.

Nach Ausführungsformen umfasst die Banknote eine Nutzerschnittstelle zur Kommunikation mit einem Nutzer der Banknote, wobei die Banknote die Zahlungsanfrage von einem Nutzer über eine Eingabevorrichtung der Nutzerschnittstelle empfängt und/oder die signierte Transaktionsfreigabe an die Nutzerschnittstelle zum Ausgeben über eine Anzeigevorrichtung der Nutzerschnittstelle sendet.

Ausführungsformen umfassen ein Verfahren zur Zahlungsabwicklung unter Verwenden eines Terminals. Die Zahlung erfolgt mit einer Banknote, welche eine Kommunikationsschnittstelle zur Kommunikation mit dem Terminal und ein Sicherheitselement mit einem Prozessor und einem Speicher umfasst. In einem geschützten Speicherbereich des Speichers ist ein banknotenindividueller privater kryptographischer Schlüssel eines asymmetrischen Schlüsselpaars der Banknote gespeichert. Das asymmetrische Schlüsselpaar ist einer banknotenindividuellen Blockchainadresse einer von einer die Banknote ausgebenden Zentralbank verwalteten Blockchain zugeordnet. Das Terminal umfasst einen Prozessor, einen Speicher und eine Kommunikationsschnittstelle zu Kommunikation mit der Banknote.

Das Verfahren umfasst zur Abwicklung eines Zahlungstransfers durch das Terminal:
- Senden einer Zahlungsanfrage an die Banknote in Form einer Transaktion eines zu zahlenden Betrags von der Blockchainadresse der Banknote an eine Blockchainadresse eines Zahlungsempfängers, wobei die Zahlungsanfrage den zu zahlenden Betrag und die Blockchainadresse des Zahlungsempfängers angibt,
- Empfangen einer mit dem privaten kryptographischen Schlüssel der Banknote signierten Transaktionsfreigabe, wobei die Transaktionsfreigabe die Blockchainadresse der Banknote, die Blockchainadresse des Zahlungsempfängers und den zu zahlenden Betrag umfasst,
- Weiterleiten der signierten Transaktionsfreigabe der Banknote an einen Blockchain-Server der Blockchain zum Prüfen und Eintragen der Transaktion in die Blockchain,
- auf eine erfolgreiche Prüfung der signierten Transaktionsfreigabe hin, Empfangen einer ersten Transaktionsbestätigung.

Nach Ausführungsformen wird mit der signierten Transaktionsfreigabe zusammen ferner ein weiterer transaktionsindividueller Wert empfangen. Beispielsweise ist der weitere transaktionsindividuelle Wert von der Signatur der Transaktionsfreigabe mitumfasst und/oder an die signierte Transaktionsfreigabe angehängt. Bei dem weiteren transaktionsindividuellen Wert handelt es sich beispielsweise um einen Zeitstempel und/oder eine Zufallszahl.

Nach Ausführungsformen umfasst die Banknote beispielsweise eine visuelle Angabe einer die Banknote eindeutig identifizierenden Seriennummer. Nach Ausführungsformen umfasst die Banknote beispielsweise eine visuelle Angabe eines der Banknote zugeordneten initialen Nominalwerts.

Ausführungsformen können den Vorteil haben, dass eine bargeldlose Zahlungsabwicklung über ein Terminal ermöglicht wird. Nach Ausführungsformen handelt es sich bei der zur Zahlungsabwicklung verwendeten Banknote um eine Banknote nach einer der zuvor beschriebenen Ausführungsformen.

Ausführungsformen können den Vorteil haben, dass die Zentralbank, neben ihrer Rolle als die Banknote ausgebende Institution, zusätzlich gegenüber der Banknote und/oder dem Terminal bzw. einem das verwenden Zahlungsempfänger Dienstleitungen im Bereich des Zahlungsverkehrs bzw. der Zahlungsabwicklung bereitstellt und mithin als eine klassische Bank bzw. eine Geschäftsbank auftritt.

Unter einer Zentralbank wird hier eine nationale oder supranationale Institution verstanden, welche über das Monopolrecht verfügt, Münzen und Banknoten als gesetzliche Zahlungsmittel auszugeben. Ferner kann eine Zentralbank geld- und währungspolitische Aufgaben wahrnehmen. Beispielsweise hält eine Zentralbank die Währungsreserve eines Währungsraumes, beispielsweise reguliert sie die Geldmenge, beispielsweise beeinflusst sie die Geldschöpfung durch Kreditvergabe der Geschäftsbanken und/oder refinanziert diese Geschäftsbanken und den Staat. Beispielsweise emittiert die Zentralbank die Banknoten und bringen diese in Umlauf.

Bei dem Terminal kann es sich beispielsweise um ein Terminal eines Verkäufers an einem Verkaufsort (engl.: "Point of Sale"/PoS), d.h. an dem Ort, an dem ein Verkauf vollzogen wird, handeln. Bei dem Terminal kann es sich ferner um ein Terminal handeln, welches an ein Nutzercomputersystem angeschlossen ist, über welches eine Zahlung mit der Banknote abgewickelt werden soll. Beispielsweise handelt es sich hierbei um eine Zahlungsabwicklung über ein Netzwerk, etwa das Internet, gegenüber einem Dienstanbieter, sei es ein Verkäufer oder ein Zahlungsdienstanbieter. Ebenso könnte das Terminal in Form eines mobilen tragbaren Kommunikationsgeräts, etwa einem Smartphone, eines Nutzers bereitgestellt werden. Der Nutzer könnte das mobile tragbare Kommunikationsgerät beispielsweise für eine Zahlungsabwicklung über ein Netzwerk, etwa das Internet, gegenüber einem Dienstanbieter nutzen, sei es ein Verkäufer oder ein Zahlungsdienstanbieter.

Nach Ausführungsformen umfasst die Prüfung der signierten Transaktionsfreigabe ein Prüfen der Signatur der Transaktionsfreigabe sowie ein Prüfen, ob ein der Blockchainadresse der Banknote zugeordneter aktueller Nominalwert der Banknote größer oder gleich dem zu zahlenden Betrag ist. Ausführungsformen können den Vorteil haben, dass eine effektive Prüfung erfolgen kann. Beispielsweise kann die Transaktion bereits vor einer Eintragung der Transaktion in die Blockchain bestätigt werden. Dies kann beispielsweise der Fall sein, falls sichergestellt wird, dass keine weiteren vorangingen Transaktionen von der Blockchainadresse der Banknote in einer Warteschleife zum Eintragen in die Blockchain stehen und/oder die Bestätigung erfolgt unter dem Vorbehalt, dass weitere voranginge Transaktionen von der Blockchainadresse der Banknote möglicher Weise in einer Warteschleife zum Eintragen in die Blockchain stehen.

Nach Ausführungsformen handelt es sich bei der ersten Transaktionsbestätigung um eine vorläufige Transaktionsbestätigung, bei welcher die Prüfung des aktuellen Nominalwerts der Banknote unter Verwendung eines Registers erfolgt, welches in regelmäßigen Intervallen geupdated wird und welches für die Blockchainadressen der Blockchain jeweils einen aktuellen Nominalwert umfasst, welcher sich aus den Bilanzen der in der Blockchain gespeicherten Transaktionen unter Verwendung der entsprechenden Blockchainadressen ergibt. Die erste Transaktionsbestätigung wird als hinreichende Transaktionsbestätigung akzeptiert, falls der zu zahlende Betrag einen Schwellernwert nicht überschreitet.

Ausführungsformen können den Vorteil haben, dass eine schnelle Prüfung des aktuellen Nominalwerts der Banknote erfolgen kann, ohne dass dafür erst einmal die vollständige Bilanz der in der Blockchain gespeicherten Transaktionen unter Verwendung der entsprechenden Blockchainadressen berechnet werden muss.

Beispielsweise kann auf Basis des ermittelten aktuelle Nominalwerts auch entschieden werden, ob eine Bargeldzahlung oder eine bargeldlose Zahlung mit der Banknote erfolgen soll. Ist der aktuelle Nominalwert identisch mit dem zu zahlenden Betrag, erfolgt beispielsweise eine Bargeldzahlung, bei welcher die Banknote an den Zahlungsempfänger übergeben wird und das Eigentum an dieser an den Zahlungsempfänger übergeht. Ist der aktuelle Nominalwert größer als der zu zahlenden Betrag, erfolgt beispielsweise eine Bargeldlosezahlung, bei welcher eine entsprechende Zahlungsanfrage für eine Zahlung in Form einer Transaktion eines zu zahlenden Betrags von der Blockchainadresse der Banknote an eine Blockchainadresse eines Zahlungsempfängers an die Banknote gesendet wird. Die Banknote kann diese Transaktion mit einer signierten Transaktionsfreigabe autorisieren.

Ist der aktuelle Nominalwert größer als der zu zahlenden Betrag, wäre es ebenso möglich, dass eine Bargeldzahlung erfolgt und der überzählige Betrag als Wechselgeld, beispielsweise in Form von Bargeld, von dem Zahlungsempfänger zurückgezahlt wird.

Beispielsweise kann der Nominalwert der Banknote auch einen garantierten Mindestnominalwert und einen variablen Zusatznominalwertanteil umfassen. Der Mindestnominalwert kann beispielsweise nur in Form einer Bargeldzahlung mit Übergabe der Banknote gezahlt werden, während der variable Zusatznominalwertanteil im Zuge einer bargeldbasierten oder bargeldlosen Zahlungsabwicklung verwendet werden kann. Mit anderen Worten könnten mit der Banknote nur bargeldlose Zahlungen erfolgen, bei welchen der verbleidende Nominalwert der Banknote größer oder gleich dem Mindestnominalwert ist. Soll mit der Banknote ein Betrag gezahlt werden, welcher in einem verbleidenden Nominalwert resultieren würde, der kleiner dem Mindestnominalwert wäre, wird eine bargeldlose Zahlung über die Blockchain beispielsweise blockiert. Es muss mithin beispielsweise eine bargeldbasierte Zahlung erfolgen, bei welcher die Banknote übergeben wird. Ist der aktuelle Nominalwert der Banknote größer als der zu zahlende Betrag, so kann der Differenzbetrag beispielsweise in Form von Wechselgeld durch den Zahlungsempfänger rückerstattet werden.

Beispielsweise umfasst des zur vorläufigen Transaktionsbestätigung verwendete Register ferner eine Angabe des Mindestnominalwerts der Banknote mit der entsprechenden Blockchainadresse.

Nach Ausführungsformen wird die erste Transaktionsbestätigung nicht als hinreichend akzeptiert, falls der zu zahlende Betrag den Schwellernwert überschreitet. Es wird eine zweite Transaktionsbestätigung empfangen, die eine Eintragung der Transaktion in die Blockchain betätigt, welche als hinreichend akzeptiert wird. Ausführungsformen können den Vorteil haben, dass sicher davon ausgegangen werden kann, dass die Transaktion erfolgreich war, wenn Transaktion tatsächlich in die Blockchain eingetragen wurde.

Nach Ausführungsformen wird ferner der öffentliche kryptographische Schlüssel empfangen. Beispielsweise wird der öffentliche kryptographische Schlüssel vor dem Senden der Zahlungsanfrage empfangen. Beispielsweise wird der öffentliche kryptographische Schlüssel als von der Banknote bereitgestellte visuelle Angabe eingescannt bzw. eingelesen. Beispielsweise wird der öffentliche kryptographische Schlüssel von der Banknote in Antwort auf eine an die Banknote gesendete Anfrage empfangen. Ausführungsformen können den Vorteil haben, dass der öffentliche kryptographische Schlüssel von dem Terminal zum Ableiten der Blockchainadresse der Banknote verwendet werden kann. Die abgeleitete Blockchainadresse der Banknote oder der öffentliche kryptographische Schlüssel können als Bestandteil der Zahlungsanfrage an die Banknote gesendet werden. Beispielsweise kann die Zahlungsanfrage die vollständigen Transaktionsangaben umfassen, welche zum Erzeugen der signierten Transaktionsbestätigung von der Banknote nur noch signiert erden müssen.

Nach Ausführungsformen umfasst das Empfangen des öffentlichen kryptographischen Schlüssels ein Lesen der visuellen Angabe des öffentlichen kryptographischen Schlüssels unter Verwendung eines Sensors des Terminals. Beispielsweise umfasst die visuelle Angabe eine alphanumerische Zeichenfolge, einen Bar-Code, oder einen QR-Code des öffentlichen kryptographischen Schlüssels. Nach Ausführungsformen umfasst das Empfangen des öffentlichen kryptographischen Schlüssels ein Empfangen des unter Verwendung der Kommunikationsschnittstelle der Banknote gesendeten öffentlichen kryptographischen Schlüssels unter Verwendung der Kommunikationsschnittstelle des Terminals.

Nach Ausführungsformen umfasst das Zahlungsabwicklungsverfahren ferner ein Ableiten der Blockchainadresse der Banknote aus dem öffentlichen kryptographischen Schlüssel der Banknote. Die Zahlungsanfrage umfasst beispielsweise die vollständigen Transaktionsangaben mit der aus dem öffentlichen kryptographischen Schlüssel der Banknote abgeleiteten Blockchainadresse, welche die Banknote als Transaktionsfreigabe signiert.

Nach Ausführungsformen umfasst die Banknote eine Mehrzahl von Sicherheitsmerkmalen. Beispielsweise umfasst das Verfahren als Voraussetzung für das Senden der Zahlungsanfrage ein erfolgreiches Erfassen und Validieren von ein oder mehreren vordefinierenden Sicherheitsmerkmalen der Mehrmals von Sicherheitsmerkmalen der Banknote. Beispielsweise umfasst das Verfahren als Voraussetzung für das Weiterleiten der signierten Transaktionsfreigabe der Banknote das erfolgreiche Erfassen und Validieren von ein oder mehreren vordefinierenden Sicherheitsmerkmalen der Mehrmals von Sicherheitsmerkmalen der Banknote. Ausführungsformen können den Vorteil haben, dass anhand der Sicherheitsmerkmale die Authentizität und Validität der Banknote geprüft werden kann.

Nach Ausführungsformen umfasst das Verfahren als Voraussetzung für das Senden der Zahlungsanfrage:
- Erfassen eines Identifikators, welcher die Blockchainadresse der Banknote eindeutig identifiziert, wobei es sich bei dem erfassten Identifikator um eine der folgenden Angaben handelt: die Seriennummer der Banknote, den öffentlichen kryptographischen Schlüssel der Banknote, die Blockchainadresse der Banknote,
- Senden einer Blockchainabfrage nach dem aktuellen Nominalwert der Blockchainadresse der Banknote,
- Empfangen des aktuellen Nominalwerts der Blockchainadresse der Banknote,
- Prüfen, ob der empfangene aktuelle Nominalwert größer gleich dem zu zahlenden Betrag ist, wobei das Senden der Zahlungsanfrage an die Banknote auf eine erfolgreiche Prüfung hin erfolgt.

Ausführungsformen können den Vorteil haben, dass sichergestellt werden kann, dass der der Banknote zugeordnete aktuelle Nominalwert größer gleich dem zu zahlenden Betrag ist. Mit anderen Worten kann sichergestellt werden, dass die Banknote tatsächlich über einen ausreichenden Wert zum Zahlen des zu zahlenden Betrags verfügt.

Nach Ausführungsformen umfasst das Erfassen des Identifikators ein Lesen einer von der Banknote umfassten visuellen Angabe des Identifikators unter Verwendung eines Sensors des Terminals. Bei dem Sensor handelt es sich beispielsweise um einen optischen Sensor. Nach Ausführungsformen umfasst das Erfassen des Identifikators ein Empfangen des unter Verwendung der Kommunikationsschnittstelle der Banknote gesendeten Identifikators unter Verwendung der Kommunikationsschnittstelle des Terminals. Beispielsweise ist der Identifikator in dem Speicher des Sicherheitselements gespeichert.

Nach Ausführungsformen handelt es sich bei dem empfangenen aktuellen Nominalwert der Banknote um einen aus dem Register ausgelesenen Nominalwert der Blockchainadresse der Banknote. Das Register wird in regelmäßigen Intervallen geupdated und umfasst für die Blockchainadressen der Blockchain jeweils einen aktuellen Nominalwert umfasst, welcher sich aus den Bilanzen der in der Blockchain gespeicherten Transaktionen unter Verwendung der entsprechenden Blockchainadressen ergibt. Nach Ausführungsformen handelt es sich bei dem empfangenen aktuellen Nominalwert der Banknote um einen aus der Blockchain ausgelesenen Nominalwert der Blockchainadresse der Banknote. Der ausgelesene aktuellen Nominalwert der Banknote ergibt sich dabei beispielsweise aus der Bilanz der in der Blockchain gespeicherten Transaktionen unter Beteiligung der Blockchainadresse der Banknote.

Ausführungsformen können den Vorteil haben, dass in effizienter Weise ein aktueller Nominalwert ermittelt werden kann. Beispielsweise muss dafür nicht erst einmal die vollständigen Bilanzen der in der Blockchain gespeicherten Transaktionen unter Verwendung der entsprechenden Blockchainadressen berechnet werden.

Nach Ausführungsformen wird eine Mehrzahl von Banknoten empfangen. Die Identifikatoren der Blockchainadressen der Banknoten werden erfasst, beispielsweise Seriennummern, öffentlichen kryptographischen Schlüssel und/oder die Blockchainadressen selbst, und für jede der Banknoten wird jeweils ein aktueller Nominalwert unter Verwendung einer Blockchainabfrage für die Banknoten gemäß den zugeordneten Blockchainadresse ermittelt. Aus der Mehrzahl von empfangenen Banknoten wird ein Satz von Banknoten ausgewählt und einbehalten, deren aufsummierte aktuelle Nominalwerte einen Betrag ergeben, der kleiner als ein zu zahlender Betrag ist. Ein verbleibender Differenzbetrag zwischen dem zu zahlenden Betrag und dem aufsummierten Betrag des Satzes von ausgewählten Banknoten ist kleiner als ein aktueller Nominalwert einer weiteren Banknote der Mehrzahl von Banknoten, welche nicht von dem Satz von ausgewählten Banknoten umfasst ist. Die Zahlungsanfrage wird zur Zahlung des Differenzbetrags an die weitere Banknote gesendet.

Ausführungsformen können den Vorteil haben, dass eine Kombination aus bargeldbasierter und bargeldloser Zahlung ermöglicht werden könnte. Für den einbehaltenen Satz von Banknoten ergibt sich keine Notwendigkeit von Transaktionsautorisierungen und/oder Eintragungen entsprechenden Transaktionen in die Blockchain. Die Zahlung mit diesen Banknoten erfolgt vielmehr durch Übergabe der Banknoten, wie bei Bargeldzahlungen üblich. Falls der zu zahlende Betrag nicht aufgeht, d.h. die Summe der Nominalwerte der Banknoten des einbehaltenen Satzes von Banknoten kleiner als der zu zahlender Betrag ist und keine weitere Banknote vorliegt, deren Nominalwert dem Differenzbetrag entspricht, erfolgt die Zahlung des Differenzbetrags bargeldlos unter Verwendung einer weiteren Banknote, deren Nominalwert größer als der entsprechende Differenzwert ist. Alternativ kann die Zahlung des Differenzbetrags auch durch einbehalten der weiteren Banknote erfolgen und der überzählig bezahlte Betrag rückerstattet werden. Beispielsweise durch eine Transaktion von einer Blockchainadresse des Zahlungsempfängers an eine Blockchainadresse einer nicht einbehaltenen Banknote, welche im Eigentum des Zahlungspflichtigen verbleibt. Nach Ausführungsformen werden alle nicht einbehaltenen Banknoten zurückgegebenen.

Nach Ausführungsformen umfassen die Banknoten der Mehrzahl von Banknoten jeweils eine Mehrzahl von Sicherheitsmerkmalen. Das Verfahren umfasst beispielsweise für jede der Banknoten jeweils eine Gültigkeitsprüfung. Die Gültigkeitsprüfung der Banknoten umfasst beispielsweise jeweils ein erfolgreiches Erfassen und Validieren von ein oder mehreren vordefinierenden Sicherheitsmerkmalen der Mehrmals von Sicherheitsmerkmalen der entsprechenden Banknote. Ausführungsformen können den Vorteil haben, dass die Authentizität und Validität aller Banknoten sichergestellt werden kann, insbesondere der einbehaltenen Banknoten.

Ausführungsformen umfassen ein Verfahren zum Ermitteln eines aktuellen Nominalwerts einer Banknote unter Verwenden eines Terminals. Die Banknote umfasst eine Kommunikationsschnittstelle zur Kommunikation mit dem Terminal und ein Sicherheitselement mit einem Prozessor und einem Speicher. In einem geschützten Speicherbereich des Speichers ist ein banknotenindividueller privater kryptographischer Schlüssel eines asymmetrischen Schlüsselpaars der Banknote gespeichert. Das asymmetrische Schlüsselpaar ist einer banknotenindividuellen Blockchainadresse einer von einer die Banknote ausgebenden Zentralbank verwalteten Blockchain zugeordnet. Das Terminal umfasst einen Prozessor, einen Speicher und eine Kommunikationsschnittstelle zu Kommunikation mit der Banknote.

Das Ermitteln des aktuellen Nominalwerts durch das Terminal umfasst:
- Erfassen eines Identifikators, welcher die Blockchainadresse der Banknote eindeutig identifiziert, wobei es sich bei dem erfassten Identifikator um eine der folgenden Angaben handelt: die Seriennummer der Banknote, den öffentlichen kryptographischen Schlüssel der Banknote, die Blockchainadresse der Banknote,
- Senden einer Blockchainabfrage nach dem aktuellen Nominalwert der Blockchainadresse der Banknote,
- Empfangen des aktuellen Nominalwerts der Blockchainadresse der Banknote.

Nach Ausführungsformen umfasst die Banknote beispielsweise eine visuelle Angabe einer die Banknote eindeutig identifizierenden Seriennummer. Nach Ausführungsformen umfasst die Banknote beispielsweise eine visuelle Angabe eines der Banknote zugeordneten initialen Nominalwerts.

Ausführungsformen können den Vorteil haben, dass das Terminal anhand des Identifikators, etwa der Seriennummer, dem öffentlichen kryptographischen Schlüssel oder der Blockchainadresse selbst, den aktuellen Nominalwert der Banknote ermitteln kann. Hierzu umfasst die Banknote beispielsweise visuelle Angaben des entsprechenden Identifikators und/oder liest diesen aus dem Sicherheitselement aus. Eine Verwendung der Seriennummer kann den Vorteil haben, dass die Seriennummer unabhängig von einer Erzeugung des öffentlichen kryptographischen Schlüssels der Banknote und damit der Blockchainadresse der Banknote vorliegen kann. Somit kann die Seriennummer auf die Banknote aufgedruckt und/oder anderweitig in die Banknote eingebracht werden, bevor das asymmetrische kryptographische Schlüsselpaar der Banknote erzeugt wird. Dies ermöglicht es erst die Herstellung der Banknote abzuschließen und anschließend das asymmetrische kryptographische Schlüsselpaar der Banknote erzeugt. Andernfalls, wird beispielsweise vor oder zu Beginn der Herstellung der Banknote das asymmetrische kryptographische Schlüsselpaar der Banknote erzeugt von dem Sicherheitselement erzeugt und der öffentliche kryptographische Schlüssel und/oder die daraus abgeleitete Blockchainadresse zur Verwendung für die Herstellung der Banknote bereitgestellt. Beispielsweise wird der öffentliche kryptographische Schlüssel vor oder zu Beginn der Herstellung der Banknote von dem Sicherheitselement ausgegeben. Der ausgegebene öffentliche kryptographische Schlüssel wird beispielsweise der Seriennummer der herzustellenden Banknote zugeordnet, womit das Sicherheitsmodell der Seriennummer der herzustellenden Banknote zugeordnet wird.

Nach Ausführungsformen umfasst das Erfassen des Identifikators ein Lesen einer visuellen Angabe des Identifikators unter Verwendung eines Sensors des Terminals. Nach Ausführungsformen umfasst das Erfassen des Identifikators ein Empfangen des unter Verwendung der Kommunikationsschnittstelle der Banknote gesendeten Identifikators unter Verwendung der Kommunikationsschnittstelle des Terminals.

Beispielsweise erfolgt das Ermitteln des aktuellen Nominalwerts im Zuge eines bargeldbasierten Zahlungsvorgangs mit Übergabe der entsprechenden Banknote, um den tatsächlichen Wert und damit den tatsächlich bargeldbasiert übergebenen Geldbetrag zu bestimmen.

Nach Ausführungsformen handelt es sich bei dem empfangenen aktuellen Nominalwert der Banknote um einen aus dem Register ausgelesenen Nominalwert der Blockchainadresse der Banknote. Das Register wird in regelmäßigen Intervallen geupdated und umfasst für die Blockchainadressen der Blockchain jeweils einen aktuellen Nominalwert umfasst, welcher sich aus den Bilanzen der in der Blockchain gespeicherten Transaktionen unter Verwendung der entsprechenden Blockchainadressen ergibt. Nach Ausführungsformen handelt es sich bei dem empfangenen aktuellen Nominalwert der Banknote um einen aus der Blockchain ausgelesenen Nominalwert der Blockchainadresse der Banknote. Der ausgelesene aktuellen Nominalwert der Banknote ergibt sich dabei beispielsweise aus der Bilanz der in der Blockchain gespeicherten Transaktionen unter Beteiligung der Blockchainadresse der Banknote.

Nach Ausführungsformen handelt es sich bei der Banknote, deren aktueller Nominalwert ermittelt wird, um eine Banknote nach einer der zuvor beschriebenen Ausführungsformen.

Ausführungsformen umfassen ein Verfahren zum Ersetzen einer Banknote. Die Banknote umfasst eine visuelle Angabe einer die Banknote eindeutig identifizierenden Seriennummer und eines der Banknote zugeordneten initialen Nominalwerts. Die Banknote umfasst die visuelle Angabe der Seriennummer mehrfach über die Banknote verteilt. Die Banknote umfasst eine Mehrzahl von über die Banknote verteilt angeordneten Sicherheitsmerkmalen: Die Banknote umfasst ein Sicherheitselement mit einem Prozessor und einem Speicher mit Programminstruktionen. In einem geschützten Speicherbereich des Speichers ist ein banknotenindividueller privater kryptographischer Schlüssel eines asymmetrischen Schlüsselpaars der Banknote gespeichert. Das asymmetrische Schlüsselpaar ist einer banknotenindividuellen Blockchainadresse in einer von einer die Banknote ausgebenden Zentralbank verwalteten Blockchain zugeordnet. Ferner weist die Banknote eine Beschädigung auf.

Das Ersetzen der Banknote durch die die beschädigte Banknote ausgebende Zentralbank umfasst:
- Prüfen eines Beschädigungsgrads der Banknote,
- falls der Beschädigungsgrads der Banknote einen vordefinierten zulässigen maximalen Beschädigungsgrad nicht überschreitet, Erfassen eines Identifikators, welcher die Blockchainadresse der beschädigten Banknote eindeutig identifiziert, wobei es sich bei dem erfassten Identifikator um eine der folgenden Angaben handelt: die Seriennummer der beschädigten Banknote, den öffentlichen kryptographischen Schlüssel der beschädigten Banknote, die Blockchainadresse der beschädigten Banknote,
- Initialisieren einer Sperrung der Blockchainadresse der Banknote unter Verwendung des erfassten Identifikators,
- Senden einer Blockchainabfrage nach dem aktuellen Nominalwert der Blockchainadresse der beschädigten Banknote,
- Empfangen des aktuellen Nominalwerts der Blockchainadresse der beschädigten Banknote,
- Auszahlen des aktuellen Nominalwerts der beschädigten Banknote.

Ausführungsformen können den Vorteil haben, dass im Falle einer Beschädigung der tatsächliche Nominalwert der Banknote ersetzt werden kann. Dieser tatsächliche Nominalwert kann deutlich von dem initialen Nominalwert der Banknote und/oder einem Mindestnominalwert der Banknote abweichen. Nach Ausführungsformen ist dafür, dass der Beschädigungsgrads der Banknote einen vordefinierten zulässigen maximalen Beschädigungsgrad nicht überschreitet, erforderlich, dass mehr als 50% der Banknote vorliegen und/oder die Banknote ein oder mehrere für ein Ersetzen notwendige valide Sicherheitsmerkmale umfasst.

Nach Ausführungsformen handelt es sich bei der ersetzten Banknote um eine Banknote nach einer der zuvor beschriebenen Ausführungsformen. Nach Ausführungsformen wird die beschädigte Banknote einbehalten.

Nach Ausführungsformen umfasst das Auszahlen des aktuellen Nominalwerts der beschädigten Banknote ein Bereitstellen ein oder mehrerer Banknoten als Ersatz, deren aktuelle Nominalwerte in der Summe dem aktuellen Nominalwert der beschädigten Banknote entsprechen. Nach Ausführungsformen handelt es sich bei den ein oder mehreren Banknoten als Ersatz um Banknoten nach einer der zuvor beschriebenen Ausführungsformen. Nach Ausführungsformen umfasst das Auszahlen des aktuellen Nominalwerts der beschädigten Banknote ein Eintragen einer Transaktion eines Betrags in Höhe des aktuellen Nominalwerts von einer Blockchainadresse der die beschädigte Banknote ausgebenden Zentralbank an eine von einem Besitzer der beschädigten Banknote angegebenen Blockchainadresse. Beispielsweise ist die angegebene Blockchainadresse einer anderen Banknote des Besitzers, d.h. Eigentümers, der beschädigten Banknoten, dem Besitzer der beschädigten Banknote persönlich oder einer anderen von dem Besitzer der beschädigten Banknote gewählten Institution zugeordnet.

Nach Ausführungsformen umfasst die Beschädigung eine Beschädigung des Sicherheitselements, sodass das Sicherheitselement keine signierten Transaktionsfreigaben mehr bereitstellen kann. Beispielsweise ist der Prozessor, der Speicher und/oder eine Kommunikationsschnittstelle des Sicherheitselements beschädigt. Beispielsweise fehlt das Sicherheitselement.

Nach Ausführungsformen ist die Mehrzahl von Angaben des Identifikators derart über die Banknote verteilt, dass sichergestellt werden kann, dass der Identifikator und damit die Blockchainadresse der Banknote ermittelt werden kann, solange mehr als 50% der Banknote vorliegen. Nach Ausführungsformen ist die Mehrzahl von Sicherheitselementen derart über die Banknote verteilt, dass sichergestellt werden kann, dass für ein Ersetzen notwendige valide Sicherheitsmerkmale vorliegen, solange mehr als 50% der Banknote unbeschädigt vorliegen.

Nach Ausführungsformen umfasst das Ersetzen der Banknote durch die die beschädigte Banknote ausgebende Zentralbank ferner einen Sperreintrag in die Blockchain durch die die Blockchain verwaltende und die Banknote ausgebende Zentralbank. Durch den Sperreintrag wird die entsprechende Blockchainadresse gesperrt. Der Sperreintrag zeigt beispielsweise an, dass die Blockchainadresse der Banknote ungültig ist. Im Falle eines Sperreintrag für die Blockchainadresse der Banknote durch die Zentralbank kann beispielweise sichergestellt werden, dass kein Geld von der ungültigen Blockchainadresse auf eine andere Blockchainadresse transferiert werden kann, d.h. dass keine Zahlungen gesendet werden können, und/oder dass kein Geld von einer anderen Blockchainadresse an die ungültige Blockchainadresse transferiert werden kann, d.h. dass keine Zahlungen empfangen werden können.

Ausführungsformen könnten den Vorteil haben, dass bei einem Ersetzen der Banknote nicht der Prozessor und/oder das Sicherheitselement der beschädigten Banknote zurückgehalten und mit diesem nach dem Auszahlen des (letzten) aktuellen Nominalwerts der beschädigten Banknote weiterhin Zahlungen getätigt, d.h. signierte Transaktionsbestätigungen ausgegeben werden können. Ferner kann beispielsweise verhindert werden, dass versehentlich Zahlungen an die Blockchainadresse der beschädigten Bankknote erfolgen, nachdem der (letzte) aktuellen Nominalwert bereits ausgezahlt und die beschädigte Banknote einbehalten wurde. In diesem Fall gebe es beispielsweise keine Möglichkeit mehr an das versehentlich transferierte Geld zu gelangen.

Beispielsweise wird bei einer Transaktion von einer Blockchainadresse einer Banknote als Voraussetzung zum Ausführen der Transaktion geprüft, ob die entsprechende Blockchainadresse gesperrt ist. Falls die Blockchainadresse nicht gesperrt ist, wird die Transaktion ausgeführt, d.h. in die Blockchain eingetragen. Falls die Blockchainadresse gesperrt ist, wird die Transaktion nicht ausgeführt, d.h. nicht in die Blockchain eingetragen.

Beispielsweise wird bei einer Transaktion an eine Blockchainadresse einer Banknote als Voraussetzung zum Ausführen der Transaktion geprüft, ob die entsprechende Blockchainadresse gesperrt ist. Falls die Blockchainadresse nicht gesperrt ist, wird die Transaktion ausgeführt, d.h. in die Blockchain eingetragen. Falls die Blockchainadresse gesperrt ist, wird die Transaktion nicht ausgeführt, d.h. nicht in die Blockchain eingetragen.

Im Weiteren werden Ausführungsformen der Erfindung mit Bezugnahme auf die Zeichnungen näher erläutert. Es zeigen:
- Figur 1: ein schematisches Flussdiagramm eines exemplarischen Verfahrens zum Revozieren eines asymmetrischen Schlüsselpaars,
- Figur 2: ein schematisches Flussdiagramm eines exemplarischen Verfahrens zum Revozieren eines asymmetrischen Schlüsselpaars,
- Figur 3: ein schematisches Flussdiagramm eines exemplarischen Verfahrens zum Herstellen einer Banknote und Registrieren eines asymmetrischen Schlüsselpaars,
- Figur 4: ein schematisches Flussdiagramm eines exemplarischen Verfahrens zum Herstellen einer Banknote,
- Figur 5: ein schematisches Flussdiagramm eines exemplarischen Verfahrens zum Registrieren eines asymmetrischen Schlüsselpaars,
- Figur 6: ein schematisches Flussdiagramm eines exemplarischen Verfahrens zum Zahlen mit einem Nutzercomputersystem,
- Figur 7: ein schematisches Blockdiagramm eines exemplarischen Nutzercomputersystem zum Revozieren eines asymmetrischen Schlüsselpaars,
- Figur 8: ein schematisches Blockdiagramme von exemplarischen Banknoten,
- Figur 9: ein schematisches Blockdiagramm eines exemplarischen Nutzercomputersystem mit einem registrierten asymmetrischen Schlüsselpaar,
- Figuren 10A-D: schematische Blockdiagramme von exemplarischen Banknoten,
- Figur 11: ein schematisches Blockdiagramm eines exemplarischen Systems mit einer exemplarischen Banknote,
- Figur 12: ein schematisches Flussdiagramm eines exemplarischen Verfahrens zum Herstellen von Banknoten,
- Figur 13: ein schematisches Flussdiagramm eines exemplarischen Verfahrens zur Zahlungsabwicklung mit einem Terminal,
- Figur 14: ein schematisches Flussdiagramm eines exemplarischen Verfahrens zum Ermitteln eines aktuellen Nominalwerts,
- Figur 15: ein schematisches Flussdiagramm eines exemplarischen Verfahrens zur Zahlungsabwicklung mit einem mobilen tragbaren Kommunikationsgerät,
- Figur 16: ein schematisches Flussdiagramm eines exemplarischen Verfahrens zum Ersetzen einer Banknote,
- Figur 17: ein schematisches Flussdiagramm eines exemplarischen Verfahrens zum Verwenden einer Banknote,
- Figur 18: ein schematisches Flussdiagramm eines exemplarischen Verfahrens zum Herstellen einer Banknote,
- Figur 19: ein schematisches Flussdiagramm eines exemplarischen Verfahrens zur Zahlungsabwicklung mit einem Terminal,
- Figur 20: ein schematisches Flussdiagramm eines exemplarischen Verfahrens zur Zahlungsabwicklung mit einer Mehrzahl von Banknoten,
- Figur 21: ein schematisches Flussdiagramm eines exemplarischen Verfahrens zum Ermitteln eines aktuellen Nominalwerts und
- Figur 22: ein schematisches Flussdiagramm eines exemplarischen Verfahrens zum Ersetzen einer Banknote.

Elemente der nachfolgenden Ausführungsformen, die einander entsprechen, werden mit denselben Bezugszeichen gekennzeichnet.

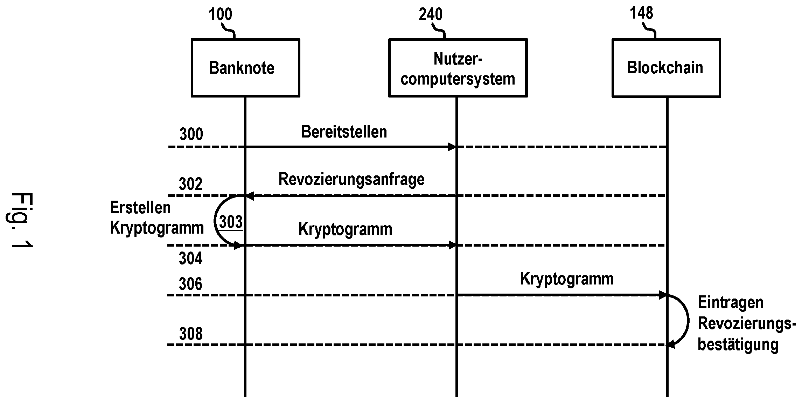

Figur 1 zeigt ein exemplarisches Verfahren zum Revozieren eines asymmetrischen Schlüsselpaars eines ersten Nutzercomputersystems unter Verwendung einer Banknote 100 und einem zweiten Nutzercomputersystem 240. Das zu revozierende asymmetrischen Schlüsselpaar ist in einer Blockchain 148 registriert. Diese Registrierung umfasst eine Zuordnung des asymmetrischen Schlüsselpaars zu der Banknote 100. Diese Zuordnung ist unter Verwendung einer Signatur mit einem banknotenindividuellen eines privaten kryptographischen Schlüssels der Banknote 100 kryptographisch abgesichert. Die Registrierung des asymmetrischen Schlüsselpaars ist Voraussetzung dafür, dass Transaktionen in die Blockchain 148 eingetragen werden, deren Freigaben auf einer Signatur unter Verwendung des privaten kryptographischen Schlüssels des ersten Nutzercomputersystems basiert. Somit können mit registrierten asymmetrischen Schlüsselpaars unter Verwendung einer zugeordneten Blockchainadresse Zahlungen über die Blockchain 148 getätigt werden. Es kann sich aus verschiedenen Gründen eine Notwendigkeit zum Revozieren des registrierten asymmetrischen Schlüsselpaars ergeben. Gründe können beispielsweise sein: Ein Verlust, ein Diebstahl, ein Defekt oder eine Kompromittierung der Sicherheit des ersten Nutzercomputersystems und/oder des registrierten asymmetrischen Schlüsselpaars.

Für eine solche Revozierung benötigt der Nutzer beispielsweise nicht das erste Nutzercomputersystem. Vielmehr genügt ein beliebiges anderes Nutzercomputersystem als zweites Nutzercomputersystem 240, beispielsweise auch das erste Nutzercomputersystem, und die Banknote 100, für welche das zu revozierende asymmetrische Schlüsselpaar registriert ist.

Auf dem zweiten Nutzercomputersystem 240 ist eine Applikation installiert, welche ein Revozieren eines asymmetrischen Schlüsselpaars ermöglicht. Falls nicht, kann eine entsprechende Applikation beispielsweise initial auf das zweite Nutzercomputersystem 240 heruntergeladen und dort installiert werden. In Schritt 300 stellt der Nutzer die Banknote 100 bereit, d.h. bringt die Banknote 100 in die Nähe des zweiten Nutzercomputersystem 240, sodass dieses eine kabellose beispielsweise verschlüsselte Kommunikationsverbindung, etwa über NFC, mit der Banknote 100 aufbauen kann. In Schritt 302 sendet das zweite Nutzercomputersystem 240 eine Revozierungsanfrage zum Revozieren des asymmetrischen Schlüsselpaars über die kabellose Kommunikationsverbindung an die Banknote 100. Auf den Empfang der Revozierungsanfrage hin erstellt die Banknote 100 in Schritt 303 ein Kryptogramm, welches eine Identifikationsnummer der Banknote 100, etwa eine in einem Speicher der Banknote 100 gespeicherte Seriennummer, und eine Revozierungsbestätigung der Banknote 100 umfasst. Beispielsweise kann die Revozierungsbestätigung den öffentlichen kryptographischen Schlüssel des zu revozierenden asymmetrischen Schlüsselpaars umfassen, um dieses zu identifizieren. Das Kryptogramm oder zumindest die Revozierungsbestätigung ist unter Verwendung eines privaten kryptographischen Schlüssels der Banknote 100 signiert. In Schritt 304 sendet die Banknote 100 das Kryptogramm an das zweite Nutzercomputersystem 240. Das zweite Nutzercomputersystem 240 leitet das Kryptogramm in Schritt 306 weiter an einen Blockchain-Server zur Eintragung der Revozierungsbestätigung in die Blockchain 148. In Schritt 308 prüft der Blockchain-Server die Signatur des Kryptogramms und trägt auf eine erfolgreiche Prüfung hin die Revozierungsbestätigung in die Blockchain 148 ein. Der Eintrag mit der Revozierungsbestätigung umfasst beispielsweise die Identifikationsnummer der Banknote 100. Durch die Eintragung der Revozierungsbestätigung wird das asymmetrische Schlüsselpaar für Nutzungen in der Blockchain revoziert und in Folge der Revozierung werden Eintragungen von Transaktionen in die Blockchain blockiert, deren Freigaben auf einer Signatur des unter Verwendung des privaten kryptographischen Schlüssels revozierten asymmetrischen Schlüsselpaars basiert.

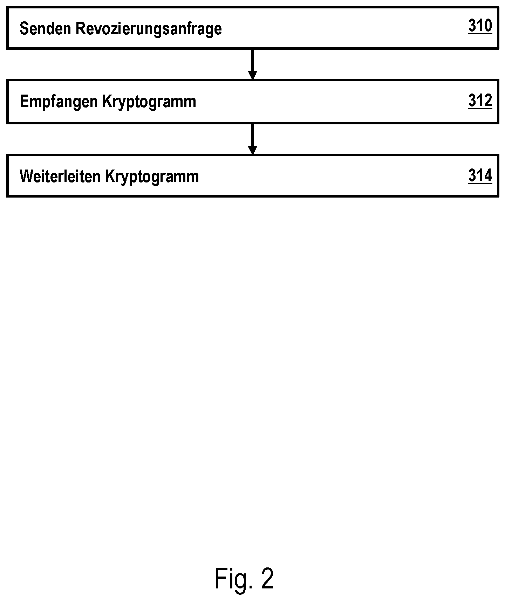

Figur 2 zeigt ein exemplarisches Verfahren zum Revozieren eines ersten asymmetrischen Schlüsselpaars eines ersten Nutzercomputersystems unter Verwendung einer Banknote. Das erste asymmetrische Schlüsselpaar umfasst einen ersten privaten kryptographischen Schlüssel und einen ersten öffentlichen kryptographischen Schlüssel. Das erste asymmetrische Schlüsselpaar ist einer ersten Blockchainadresse in einer Blockchain zugeordnet. Für das erste asymmetrische Schlüsselpaar ist ferner eine Zuordnung zu der Banknote in der Blockchain registriert, welche unter Verwendung eines banknotenindividuellen zweiten privaten kryptographischen Schlüssels eines banknotenindividuellen zweiten asymmetrischen Schlüsselpaars der Banknote signiert ist.

Die Banknote umfasst ein Sicherheitselement mit einem Prozessor und einem Speicher mit Programminstruktionen. In dem Speicher ist eine die Banknote eindeutig identifizierende Identifikationsnummer gespeichert. In einem geschützten Speicherbereich des Speichers ist der zweite private kryptographische Schlüssel gespeichert. Das zweite asymmetrische Schlüsselpaar ist einer banknotenindividuellen zweiten Blockchainadresse in der Blockchain zugeordnet.

In Block 310 wird eine Revozierungsanfrage zum Revozieren des ersten asymmetrischen Schlüsselpaars von dem zweiten Nutzercomputersystem an die Banknote gesendet. In Block 312 empfängt das zweite Nutzercomputersystem, in Antwort auf die Revozierungsanfrage, ein unter Verwendung des zweiten privaten kryptographischen Schlüssels signiertes Kryptogramm von der Banknote. Das Kryptogramm umfasst die Identifikationsnummer der Banknote und eine Revozierungsbestätigung der Banknote. Signiert ist das Kryptogramm insofern als dass die Revozierungsbestätigung und/oder das gesamte Kryptogramm verschlüsselt ist. In Block 314 leitet das zweite Nutzercomputersystem das signierte Kryptogramm an einen Blockchain-Server der Blockchain weiter zur Eintragung der Revozierungsbestätigung der durch die Identifikationsnummer identifizierten Banknote in die Blockchain. Durch die Eintragung der Revozierungsbestätigung wird das erste asymmetrische Schlüsselpaar revoziert und in Folge der Revozierung werden Eintragungen von Transaktionen in die Blockchain blockiert, deren Freigaben auf einer Signatur unter Verwendung des revozierten ersten privaten kryptographischen Schlüssels basiert.

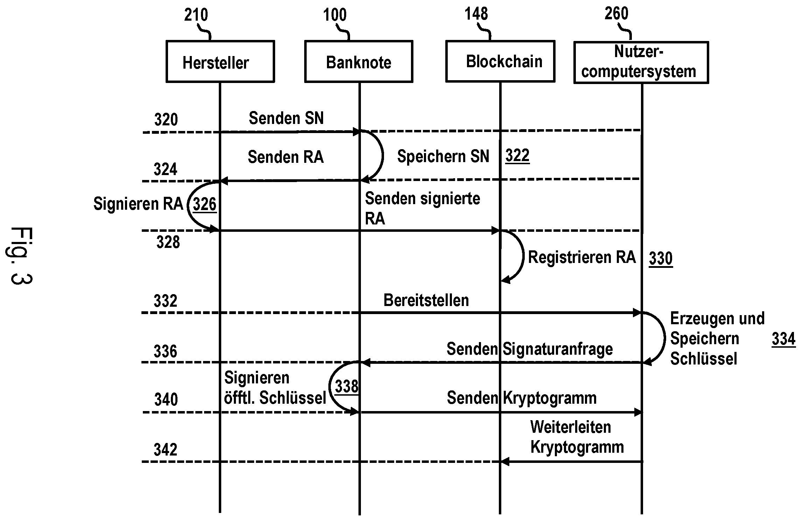

Figur 3 zeigt ein exemplarisches Verfahren zum Registrieren einer Banknote 100 im Zuge von deren Herstellung, sodass sie zum Registrieren und Revozieren von asymmetrischen Schlüsselpaaren von Nutzercomputersystemen 260 genutzt werden kann. In Schritt 320 empfängt die Banknote 100 von einem Herstellercomputersystem 210 im Zuge der Herstellung eine eindeutige Identifikationsnummer, etwa eine Seriennummer (SN). In Schritt 322 speichert die Banknote 100 die empfangene Identifikationsnummer in einem Speicher der Banknote 100. Nach oder vor dem Empfang der Identifikationsnummer erzeugt die Banknote 100 beispielsweise ein asymmetrisches Schlüsselpaar durch ein Sicherheitselement der Banknote 100. Den privaten kryptographischen Schlüssel des erzeugten asymmetrischen Schlüsselpaars speichert die Banknote 100 in einem geschützten Speicherbereich des Speichers der Banknote 100. Den öffentlichen kryptographischen Schlüssel des erzeugten asymmetrischen Schlüsselpaars speichert die Banknote 100 in dem Speicher der Banknote 100. Ferner erzeugt die Banknote 100 eine unter Verwendung des privaten kryptographischen Schlüssels der Banknote 100 signierte Registrierungsanfrage (RA). Diese Registrierungsanfrage umfasst die Identifikationsnummer und den öffentlichen kryptographischen Schlüssel der Banknote. In Schritt 324 sendet die Banknote 100 die Registrierungsanfrage in Antwort auf das Empfangen der Identifikationsnummer an das Herstellercomputersystem 210 zum Registrieren der Identifikationsnummer und des öffentlichen kryptographischen Schlüssels der Banknote 100 in der Blockchain 148 durch einen Blockchain-Server. In Schritt 326 signiert das Herstellercomputersystem 210 ebenfalls die Registrierungsanfrage und leitet diese in Schritt 328 an einen Blockchain-Server zur Eintragung in der Blockchain 148 weiter. Der Blockchain-Server prüft beispielsweise die Signaturen der Registrierungsanfrage und trägt diese in Schritt 330 auf eine erfolgreiche Prüfung hin in die Blockchain 148 ein. Dadurch werden die Identifikationsnummer und der öffentliche kryptographische Schlüssel der Banknote zusammen in der Blockchain 148 registriert.

Eine solche registrierten Banknote 100 kann beispielsweise zum Registrieren eines asymmetrischen Schlüsselpaars eines Nutzercomputersystems 260 in der Blockchain 148 verwendet werden. In Schritt 332 wird die Banknote 100 zum Registrieren eines asymmetrischen Schlüsselpaars des Nutzercomputersystems 260 bereitgestellt. Beispielsweise hat ein Nutzer die Banknote 100 aus einem Bankautomaten gezogen und bringt diese nun in die Nähe seines Nutzercomputersystems 260, sodass das Nutzercomputersystem 260 eine kontaktlose Kommunikationsverbindung zu der Banknote, etwa mittels NFC, aufbauen kann. In Schritt 334 erzeugt und speichert das Nutzercomputersystem 260 ein asymmetrisches Schlüsselpaar. In Schritt 336 sendet das Nutzercomputersystem 260 eine Signaturanfrage zum Signieren des erzeugten öffentlichen kryptographischen Schlüssels an die Banknote 100. Die Signaturanfrage umfasst den zu signierenden öffentlichen kryptographischen Schlüssel. In Schritt 338 signiert die Banknote 100 den öffentlichen kryptographischen Schlüssel des Nutzercomputersystems 260. In Schritt 340 wird ein Kryptogramm von der Banknote 100 mit dem signierten öffentlichen kryptographischen Schlüssel des Nutzercomputersystems 260 und mit der Identifikationsnummer der Banknote 100 an das Nutzercomputersystem 260 gesendet. In Schritt 342 leitet das Nutzercomputersystem 260 das Kryptogramm an einen Blockchain-Server der Blockchain 148 zur Eintragung weiter. Durch eine Eintragung des Kryptogramms wird eine Zuordnung des asymmetrischen Schlüsselpaars des Nutzercomputersystems 260 zu der Identifikationsnummer der Banknote 100 in der Blockchain 148 registriert und in Folge der Registrierung werden Eintragungen von Transaktionen in die Blockchain 148 ermöglicht, deren Freigaben auf einer Signatur unter Verwendung des registrierten privaten kryptographischen Schlüssels des Nutzercomputersystems 260 basiert.

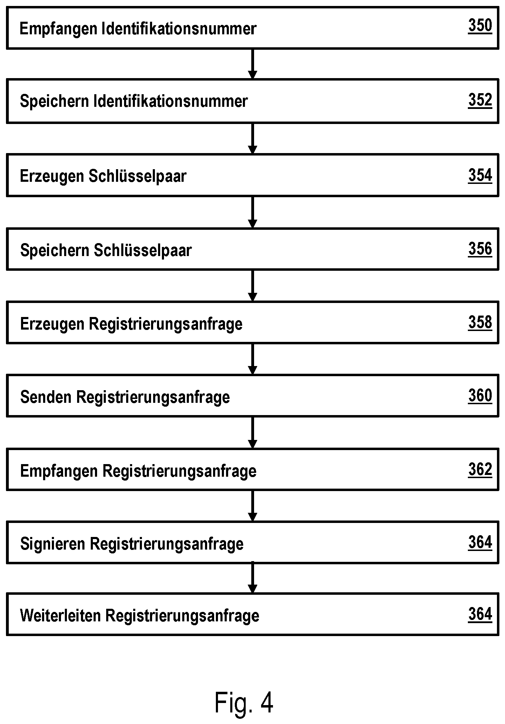

Figur 4 zeigt ein exemplarisches Verfahren zum Herstellen einer Banknote, welche zum Registrieren und Revozieren von asymmetrischen Schlüsselpaaren von Nutzercomputersystemen konfiguriert ist. In Block 350 empfängt die Banknote eine eindeutige Identifikationsnummer, beispielsweise eine Seriennummer der Banknote, von einem Herstellercomputersystem eines Herstellers der Banknote. In Block 352 speichert die Banknote die Identifikationsnummer in einem Speicher der Banknote. In Block 354 erzeugt die Banknote ein asymmetrisches Schlüsselpaar durch ein Sicherheitselement der Banknote. In Block 356 speichert die Banknote einen privaten kryptographischen Schlüssel des erzeugten asymmetrischen Schlüsselpaars in einem geschützten Speicherbereich des Speichers der Banknote und speichert die Banknote einen öffentlichen kryptographischen Schlüssel des erzeugten asymmetrischen Schlüsselpaars in dem Speicher der Banknote. Beispielsweise können die Blöcke 354 bis 356 auch bereits vor dem Empfangen der eindeutige Identifikationsnummer, d.h. dem Block 350, ausgeführt werden. In Block 358 erzeugt die Banknote eine unter Verwendung ihres privaten kryptographischen Schlüssels signierte Registrierungsanfrage. Diese Registrierungsanfrage umfasst die Identifikationsnummer und den öffentlichen kryptographischen Schlüssel der Banknote. In Block 360 sendet die Banknote in Antwort auf das Empfangen der Identifikationsnummer die Registrierungsanfrage zum Registrieren der Identifikationsnummer und des öffentlichen kryptographischen Schlüssels der Banknote an das Herstellercomputersystem. Durch ein gemeinsames Registrieren der Identifikationsnummer und des öffentlichen kryptographischen Schlüssels der Banknote wird eine Zuordnung des öffentlichen kryptographischen Schlüssels und damit beispielsweise einer entsprechenden Blockchainadresse zu der Banknote registriert.

In Block 362 empfängt das Herstellercomputersystem die Registrierungsanfrage zum Registrieren der Identifikationsnummer und des öffentlichen kryptographischen Schlüssels der Banknote. Beispielsweise prüft das Herstellercomputersystem unter Verwendung des zu registrierenden öffentlichen kryptographischen Schlüssels der Banknote als Signaturprüfschlüssel die Signatur der Registrierungsanfrage. In Block 364, signiert das Herstellercomputersystem die Registrierungsanfrage ebenfalls. Diese Signatur erfolgt beispielsweise unter Verwendung eines privaten kryptographischen Schlüssels eines in der Blockchain registrierten asymmetrischen Schlüsselpaars des Herstellercomputersystems. In Block 364 leitet das Herstellercomputersystem die von ihm signierte Registrierungsanfrage an einen Blockchain-Server zum Registrieren der Identifikationsnummer und des zweiten öffentlichen kryptographischen Schlüssels in der Blockchain. Eine Registrierung der Identifikationsnummer und des zweiten öffentlichen kryptographischen Schlüssels in der Blockchain ist beispielsweise Voraussetzung dafür, dass Zuordnungen von asymmetrischen Schlüsselpaaren von Nutzercomputersystemen zu der Banknote unter deren Verwendung der Banknote in der Blockchain registriert werden können.

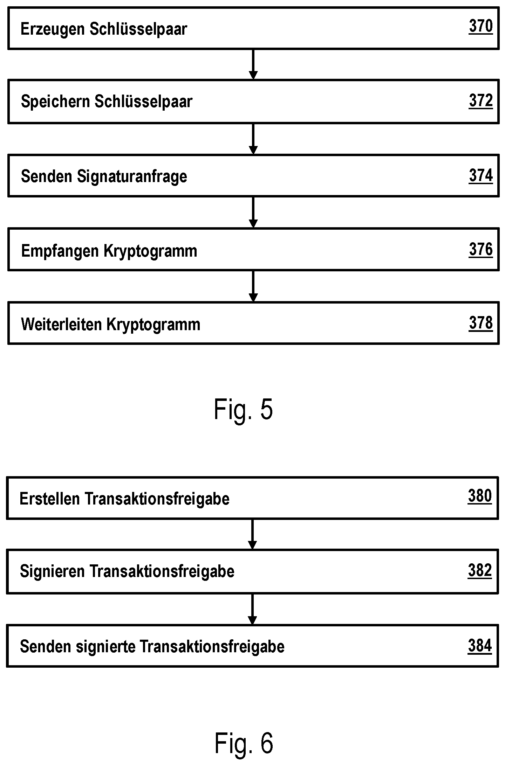

Figur 5 zeigt ein exemplarisches zum Registrieren einer Zuordnung eines asymmetrischen Schlüsselpaars eines Nutzercomputersystems zu einer Banknote in einer Blockchain. In Block 370 erzeugt das Nutzercomputersystem das zu registrierende asymmetrische Schlüsselpaar. In Block 372 wird das erzeugte asymmetrische Schlüsselpaar durch das Nutzercomputersystem gespeichert. Beispielsweise wird der private kryptographische Schlüssel des erzeugten asymmetrischen Schlüsselpaars in einem geschützten Speicherbereich eines Speichchers des Nutzercomputersystems gespeichert. Beispielsweise wird der öffentliche kryptographische Schlüssel des erzeugten asymmetrischen Schlüsselpaars in dem Speicher des Nutzercomputersystems gespeichert. In Block 374 sendet das Nutzercomputersystem eine Signaturanfrage zum Signieren des erzeugten öffentlichen kryptographischen Schlüssels an die Banknote. Die Signaturanfrage umfasst den zu signierenden öffentlichen kryptographischen Schlüssel. In Antwort auf die Signaturanfrage, empfängt das Nutzercomputersystem in Block 376 ein Kryptogramm von der Banknote mit dem signierten öffentlichen kryptographischen Schlüssel des Nutzercomputersystems und mit der Identifikationsnummer der Banknote. Der öffentliche kryptographische Schlüssel des Nutzercomputersystems ist mit dem zweiten privaten kryptographischen Schlüssel der Banknote signiert. In Block 378 leitet das Nutzercomputersystem das Kryptogramm an einen Blockchain-Server der Blockchain zur Eintragung weiter. Durch eine Eintragung des Kryptogramms wird eine Zuordnung des asymmetrischen Schlüsselpaars des Nutzercomputersystems zu der Identifikationsnummer der Banknote in der Blockchain registriert und in Folge der Registrierung werden Eintragungen von Transaktionen in die Blockchain ermöglicht, deren Freigaben auf einer Signatur unter Verwendung des registrierten privaten kryptographischen Schlüssels des Nutzercomputersystems basiert.

Figur 6 zeigt ein exemplarisches Verfahren zum Zahlen eines Geldbetrags mit einem Nutzercomputersystem, d.h. unter Verwendung eines kryptographischen Schlüssels eines in einer Blockchain registrierten asymmetrischen Schlüsselpaars. In Block 380 erstellt das einem Nutzercomputersystem eine Transaktionsfreigabe zur Freigabe einer Transaktion des zu zahlenden Betrags von einer Blockchainadresse des Nutzercomputersystems an eine Blockchainadresse eines Zahlungsempfängers. Die Transaktionsfreigabe umfasst beispielsweise die Blockchainadresse des Nutzercomputersystems, welcher der private kryptographische Schlüssel des Nutzercomputersystems zugeordnet ist, die Blockchainadresse des Zahlungsempfängers und den zu zahlenden Betrag. In Block 382 signiert das Nutzercomputersystem die Transaktionsfreigabe mit seinem privaten kryptographischen Schlüssel. In Block 384 sendet das Nutzercomputersystem die signierte Transaktionsfreigabe an einen Blockchain-Server der Blockchain zur Eintragung der Transaktion in die Blockchain. Durch eine Eintragung der Transaktion in die Blockchain wird der zu zahlenden Betrag der Blockchainadresse des Zahlungsempfängers zugeordnet.

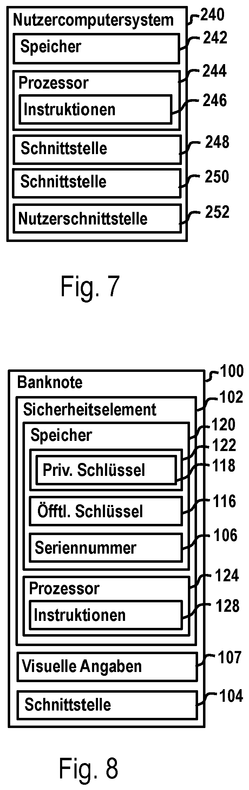

Figur 7 zeigt ein exemplarischen Nutzercomputersystem 240, beispielsweise ein mobiles Endgerät wie etwa ein Smartphone, welches konfiguriert ist zum Revozieren eines asymmetrischen Schlüsselpaars eines anderen Nutzercomputersystem unter Verwendung einer Banknote. Das Nutzercomputersystem 240 umfasst einen Speicher 242 und einen Prozessor 244. Der Prozessor 244 führt beispielsweis Programminstruktionen 246 aus, welche in dem Speicher 242 gespeichert sind. Durch das Ausführen der Programminstruktionen 246 wird der Prozessor 244 beispielsweise dazu veranlasst das Nutzercomputersystem 240 zum Revozieren des asymmetrischen Schlüsselpaars unter Verwendung der Banknote zu steuern. Beispielsweise verfügt das Nutzercomputersystem 240 zu diesem Zwecke über eine Kommunikationsschnittstelle 248 zur Kommunikation mit der Banknote zur Bestätigung der Revozierung sowie über eine Kommunikationsschnittstelle 250 zur Kommunikation mit einem Blockchain-Server zur Eintragung der Revozierung in eine Blockchain. Ferner umfasst das Nutzercomputersystem 240 beispielsweise über eine Nutzerschnittstelle 252 für einen Nutzer zum Initiieren des Revozierungsverfahrens. Eine entsprechende Nutzerschnittstelle 252 umfasst beispielsweise eine Eingabe und eine Anzeigevorrichtung.

Figur 8 zeigt eine exemplarische Banknoten 100, welche zum Registrieren und Revozieren von asymmetrischen Schlüsselpaaren von Nutzercomputersystemen konfiguriert ist. Die Banknote umfasst ein Sicherheitselement 102 mit einem Prozessor 124 und mit einem Speicher 120, in welchem eine Seriennummer 106 als eindeutige Identifikationsnummer der Banknote 100 gespeichert ist. Ferner ist in dem Speicher 120 ein öffentlicher kryptographischer Schlüssel 116 der Banknote 100 gespeichert. In einem geschützten Speicherbereich 122 des Speicher 120 ist ein privater kryptographischer Schlüssel 118 der Banknote 100 als Signaturschlüssel gespeichert. Der Prozessor 124 führt beispielsweis Programminstruktionen 128 aus, welche in dem Speicher 120 gespeichert sind. Durch das Ausführen der Programminstruktionen 128 wird der Prozessor 124 beispielsweise dazu veranlasst die Banknote Bestätigen einer Zuordnung eines asymmetrischen Schlüsselpaars eines Nutzercomputersystems zu der Banknote oder zum Bestätigen einer Revozierung einer entsprechenden Zuordnung zu steuern. Beispielsweise verfügt die Banknote zu diesem Zwecke über eine Kommunikationsschnittstelle 104 zur Kommunikation mit einem Nutzercomputersystem, welches beispielsweise eine Zuordnung der Banknote zu einem seiner asymmetrischen Schlüsselpaare registrieren oder eine solche Zuordnung für ein eigenes asymmetrisches Schlüsselpaar oder ein asymmetrisches Schlüsselpaar eines anderen Nutzercomputersystem revozieren möchte. Ferner umfasst die Banknote visuelle Angeben 107, wie etwa die Seriennummer 106 oder einen Nominalwert.

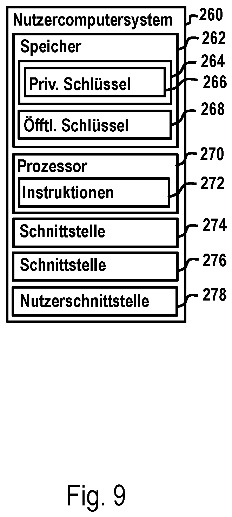

Figur 9 zeigt ein exemplarischen Nutzercomputersystem 260, beispielsweise ein mobiles Endgerät wie etwa ein Smartphone, welches ein asymmetrischen Schlüsselpaars 266, 268 umfasst. Das asymmetrischen Schlüsselpaar umfasst einen privaten kryptographischen Schlüssel 266 und einen öffentlichen kryptographischen Schlüssel 268, welche mittels einer entsprechenden Eintragung in einer Blockchain einer Banknote zugeordnet sind. Ferner kann das Nutzercomputersystem 260 konfiguriert sein zum Revozieren eines eigenen asymmetrischen Schlüsselpaars 266, 268 und/oder eines asymmetrischen Schlüsselpaars eines anderen Nutzercomputersystem unter Verwendung einer Banknote. Das Nutzercomputersystem 260 umfasst einen Speicher 262 und einen Prozessor 270. Der Prozessor 270 führt beispielsweis Programminstruktionen 272 aus, welche in dem Speicher 262 gespeichert sind. Durch das Ausführen der Programminstruktionen 272 wird der Prozessor 270 beispielsweise dazu veranlasst das Nutzercomputersystem 260 beispielsweise zum Freigeben von Transaktionen in der Blockchain und/oder zum Revozieren von asymmetrischen Schlüsselpaars unter Verwendung einer Banknote zu steuern. Das Freigeben von Transaktionen in der Blockchain erfolgt dabei im Gegensatz zu einem Revozieren eines asymmetrischen Schlüsselpaars ohne Verwendung einer Banknote. Beispielsweise verfügt das Nutzercomputersystem 260 über eine Kommunikationsschnittstelle 274 zur Kommunikation mit der Banknote zur Bestätigung der Zuordnung des asymmetrischen Schlüsselpaars 266, 268 zu der entsprechenden Banknote und/oder zum Revozieren eines der Banknote zugeordneten asymmetrischen Schlüsselpaars eines Nutzercomputersystems. Ferner verfügt das Nutzercomputersystem über eine Kommunikationsschnittstelle 276 zur Kommunikation mit einem Blockchain-Server zur Eintragung von Transaktionsfreigeben, Zuordnungsregistrierungen und/oder Revozierungen in eine Blockchain. Ferner umfasst das Nutzercomputersystem 260 beispielsweise über eine Nutzerschnittstelle 278 für einen Nutzer zum Interagieren mit dem Nutzercomputersystem. Eine entsprechende Nutzerschnittstelle 278 umfasst beispielsweise eine Eingabe und eine Anzeigevorrichtung.

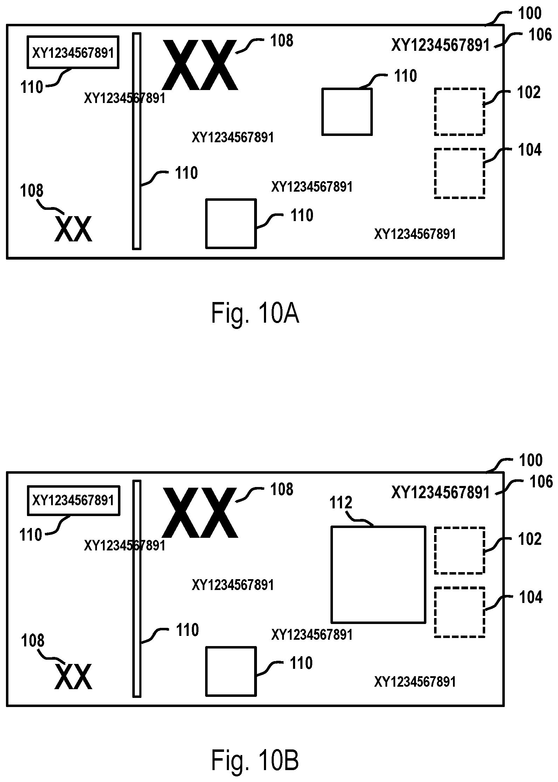

Figuren 10A bis 10D zeigen exemplarische Banknoten 100. Die in Figur 10A gezeigte Banknote 100 umfasst eine Mehrzahl von Sicherheitsmerkmale 110, welche die Authentizität und Validität der Banknote 100 belegen. Die Sicherheitsmerkmale 110 sind über die Banknote 100 verteilt angeordnet. Beispielsweise sind die Sicherheitsmerkmale 110 so über die Banknote 100 verteilt angeordnet, dass solange mehr als 50% der Banknote in unbeschädigtem Zustand vorliegen, die Authentizität und Validität der Banknote 100 nachgewiesen werden kann. Die Banknote 100 umfasst ferner eine visuelle Angabe der Seriennummer 106 der Banknote 100, welche beispielsweise auf die Banknote 100 aufgedruckt ist. Beispielsweise umfasst die Banknote 100 eine Mehrzahl von visuellen Angaben der Seriennummer 106, welche über die Banknote 100 verteilt angeordnet sind, etwa in Mikroschrift. Beispielsweise ist die Seriennummer 106 so über die Banknote 100 verteilt angeordnet, dass solange mehr als 50% der Banknote in unbeschädigtem Zustand vorliegen, die Seriennummer 106 der Banknote 100 bestimmt werden kann. Die Seriennummer 106 der Banknote 100 ist beispielsweise einem öffentlichen kryptographischen Schlüssel, aus welchem die Blockchainadresse der Banknote 100 ableitbar ist, und/oder einer Blockchainadresse der Banknote 100 zugeordnet. So kann unter Verwendung der Seriennummer 106 der Banknote 100 beispielsweise der öffentliche kryptographische Schlüssel, aus welchem die Blockchainadresse der Banknote 100 ableitbar ist, und/oder eine Blockchainadresse der Banknote 100 bestimmt werden.

Ferner umfasst die Banknote ein oder mehrere visuelle Angaben eines initialen Nominalwerts 108 der Banknote 100. Bei dem initialen Nominalwerts 108 handelt es sich beispielsweise um einen Mindestnominalwert der Banknote 100. Beispielsweise umfasst die Banknote 100 ein oder mehrere visuelle Angaben eines von dem initialen Nominalwert 108 verschiedenen Mindestnominalwerts zusätzlich zu der Angabe des initialen Nominalwerts 108. Beispielsweise umfasst die Banknote 100 die ein oder mehreren visuellen Angaben des Mindestnominalwerts anstelle von visuellen Angaben eines von dem Mindestnominalwert verschiedenen initialen Nominalwert 108. Zusätzlich umfasst die Banknote ein Sicherheitselement 102 mit einem Prozessor und einem Speicher. In einem geschützten Speicherbereich des Speichers ist ein privater kryptographischer Schlüssel zum Signieren von Transaktionsfreigaben, d.h. zum Autorisieren von Transaktion von einer der Banknote 100 zugeordneten Blockchainadresse gespeichert. Ferner umfasst die Banknote 100 eine Kommunikationsschnittstelle 104 zum Kommunizieren mit einem Terminal, insbesondere zu einem kontaktlosen Kommunizieren. Über die Kommunikationsschnittstelle 104 empfängt die Banknote 100 beispielsweise Zahlungsanfragen und sendet beispielsweise signierte Transaktionsfreigaben.

Figur 10B zeigt eine exemplarische Banknote 100, welche der exemplarischen Banknote 100 aus Figur 10A entspricht. Zusätzlich umfasst die Banknote 100 in Figur 10B eine Nutzerschnittstelle 112. Die Nutzerschnittstelle 112 umfasst beispielsweise eine Eingabe- und/oder eine Ausgabevorrichtung der Banknote 100. Beispielsweise umfasst die Nutzerschnittstelle 112 ein Touchpad zur Eingabe von Daten, etwa Transaktionsdaten, in die Banknote 100 und/oder ein Display zur Anzeige von Daten, etwa Transaktionsdaten, welche die Banknote 100 verarbeiten soll oder verarbeitet hat. Beispielsweise umfasst die Nutzerschnittstelle 112 ein Touch-Display, mit welchem sowohl Daten von dem Nutzer eingegeben werden können, als auch dem Nutzer Daten angezeigt werden können.

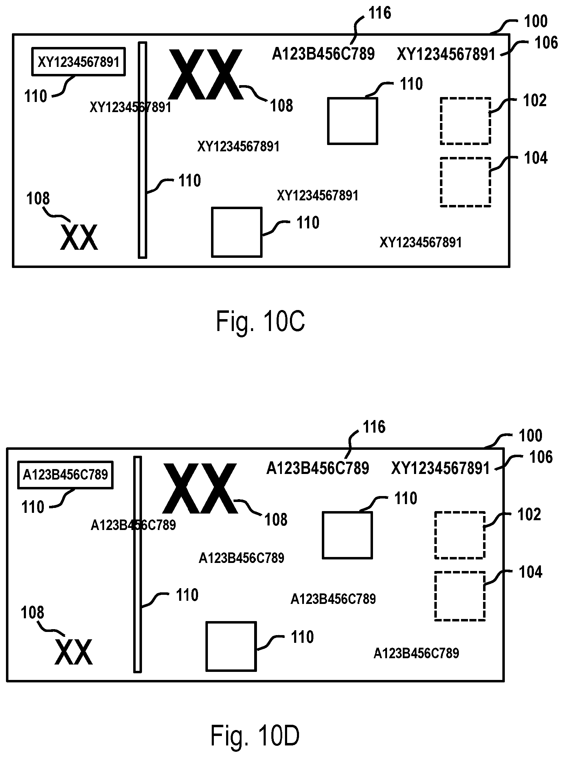

Figur 10C zeigt eine exemplarische Banknote 100, welche der exemplarischen Banknote 100 aus Figur 10A entspricht. Zusätzlich umfasst die Banknote 100 in Figur 10C zusätzlich zu der visuellen Angabe der Seriennummer 106 eine visuelle Angabe, welche die Blockchainadresse der Banknote 100 identifiziert. Bei der zusätzlichen Angabe handelt es sich beispielsweise um einen öffentlichen kryptographischen Schlüssel 116, aus welchem die Blockchainadresse der Banknote 100 ableitbar ist, und/oder um die Blockchainadresse der Banknote 100. Figur 10D zeigt eine exemplarische Banknote 100, welche der exemplarischen Banknote 100 aus Figur 10C entspricht. Im Fall der Banknote in Figur 10D umfasst die Banknote 100 eine Mehrzahl von zusätzlichen visuellen Angaben, welche eine Blockchainadresse der Banknote 100 identifizieren, wie etwa den öffentlichen kryptographischen Schlüssel 116. Diese zusätzlichen visuellen Angaben sind beispielsweise über die Banknote 100 verteilt angeordnet, etwa in Mikroschrift. Beispielsweise sind die zusätzlichen visuellen Angaben so über die Banknote 100 verteilt angeordnet, dass solange mehr als 50% der Banknote in unbeschädigtem Zustand vorliegen, die Blockchainadresse der Banknote 100 identifiziert werden kann.

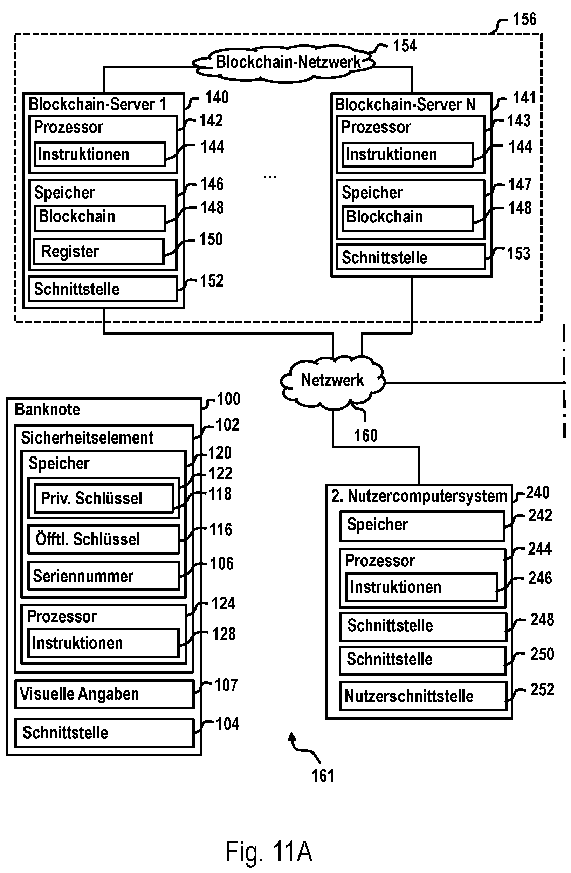

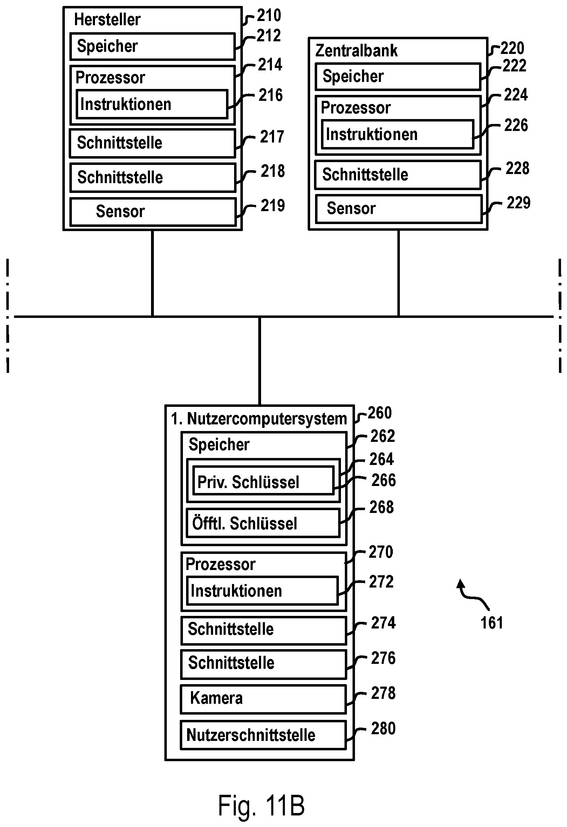

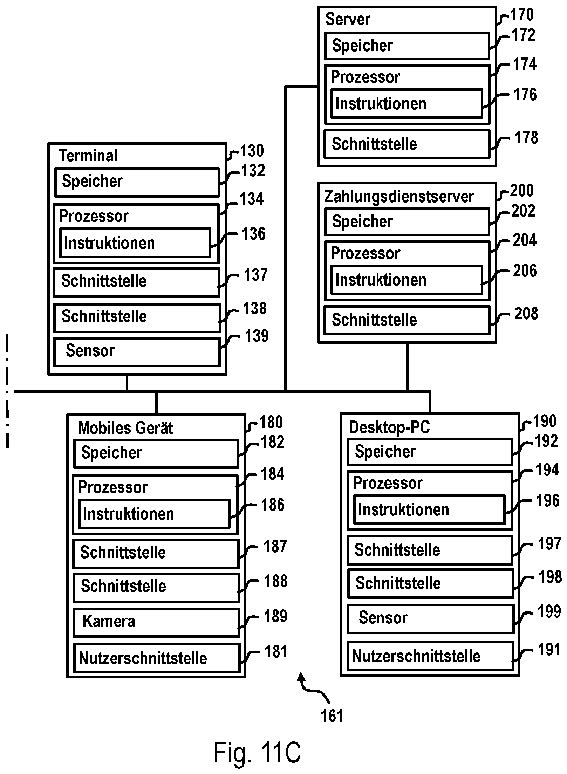

Figur 11 wurde aus Platzgründen in drei Teile, d.h. Figur 11A, 11B und 11C, aufgeteilt, welche zusammen die Figur 11 bilden. Figur 11 zeigt ein exemplarisches System mit einer exemplarischen Banknote 100. Die Banknote 100 umfasst ein Sicherheitselement 102 mit einem Prozessor 124 und einem Speicher 120. Der Prozessor 124 führt Programminstruktionen 128 aus. Diese Programminstruktionen 128 umfassen beispielsweise kryptographische Programminstruktionen zum Erzeugen eines asymmetrischen Schlüsselpaars 116, 118 der Banknote 100 und zum Signieren von Transaktionsfreigaben mit einem privaten kryptographischen Schlüssel 118 des asymmetrischen Schlüsselpaars. Ferner können die kryptographischen Programminstruktionen beispielsweise dazu konfiguriert sein, aus dem öffentlichen kryptographischen Schlüssel 116 eine Blockchainadresse der Banknote 110 abzuleiten. In dem Speicher 120 ist der öffentliche kryptographische Schlüssel 116 des asymmetrischen Schlüsselpaars gespeichert. Ferner ist in dem Speicher 120 beispielsweise die Seriennummer der 106 der Banknote 100 gespeichert. In einem geschützten Speicherbereich 122 des Speichers 120 ist der privaten kryptographischen Schlüssel 118 des asymmetrischen Schlüsselpaars gespeichert. Ferner umfasst die Banknote 100 beispielsweise eine Kommunikationsschnittstelle 104 zur Kommunikation mit externen Geräten, wie etwa einer einem Terminal 130. Die Kommunikationsschnittstelle 104 ist beispielsweise für eine kontaktlose Kommunikation konfiguriert. Zusätzlich umfasst die Banknote 100 visuelle Angaben 107, etwa der Seriennummer 106 und/oder des öffentlichen kryptographischen Schlüssels 116. Ferner kann die Banknote 100 beispielsweise ferner eine Nutzerschnittstelle mit einer Eingabe- und/oder Ausgabevorrichtung zum Eingeben und/oder Anzeigen von Daten umfassen, wie etwa Transaktionsdaten.

Die Banknote 100 kommuniziert unter Verwendung der Kommunikationsschnittstelle 104 beispielsweise mit einem Terminal 130. Das Terminal 130 ist beispielsweise ein Zahlungsterminal eines PoS. Das Terminal 130 umfasst einen Prozessor 134 zum Ausführen von Programminstruktionen 136 und einen Speicher 132. Ferner umfasst das Terminal 130 eine Kommunikationsschnittstelle 137 zur Kommunikation mit der Banknote 100. Zusätzlich umfasst das Terminal 130 eine Kommunikationsschnittstelle 139 zur Kommunikation über ein Netzwerk 160, wie etwa das Internet. Das Terminal 130 ist beispielsweise zu einer Zahlungsabwicklung mit der Banknote 100 konfiguriert. Hierzu sendet das Terminal 130 beispielsweise eine Zahlungsanfrage an die Banknote 100 und empfängt eine signierte Transaktionsfreigabe von der Banknote 100, welche das Terminal 130 über das Netzwerk 160 an einen Blockchain-Server 140, 141 zur Eintragung der durch die signierte Transaktionsfreigabe autorisierten Transaktion in die Blockchain 148. Der Blockchain-Server 140, 141 gehört beispielsweise zu einem Blockchain-Netzwerk 154. Ferner kann das Terminal beispielsweise Sensor 139 umfassen. Der Sensor 139 ist beispielsweise dazu konfiguriert visuelle Angabe 107 der Banknote 100 zu erfassen, wie etwa die Seriennummer 106 und/oder den öffentlichen kryptographischen Schlüssel 116. Ferner kann der Sensor 139 beispielsweise zum Erfassen von Sicherheitsmerkmalen der Banknote 100 konfiguriert sein, um deren Authentizität und Validität zu prüfen. In dem Speicher 132 ist beispielsweise eine Blockchainadresse gespeichert, welche das Terminal 130 als Empfängeradresse zum Empfangen von Zahlungen verwendet.

Das Terminal 130 kommuniziert beispielsweise über einen Remoteserver 170 mit den Blockchain-Servern 140, 141. Der Server 170 umfasst beispielsweise einen Speicher 172, einen Prozessor 174 zum Ausführen von Programminstruktionen 176 und eine Kommunikationsschnittstelle 178 zur Kommunikation über das Netzwerk 160. Beispielsweise stellt der Server 170 dem Terminal 130 die als Empfängeradresse zu verwendende Blockchainadresse zur Verfügung. Beispielsweise leitet der Server 170 über das Terminal 130 empfangene signierte Transaktionsfreigaben an die Blockchain-Servern 140, 141 weiter. Beispielsweise leitet der Server 170 von den Blockchain-Servern 140, 141 empfangene Transaktionsbestätigungen und/oder Eintragungsbestätigungen an das Terminal 130 weiter.

Das System umfasst ferner ein oder mehrere Blockchain-Server 140, 141. Die Blockchain-Server 140, 141 sind beispielsweise Teil eines Blockchain-Netzwerks 154 bzw. bilden Blockchain-Knoten eines Blockchain-Netzwerks 154. Die Blockchain-Server 140, 141 und/oder das Blockchain-Netzwerks 154 werden beispielsweise von einer die Banknote ausgebenden Zentralbank verwaltet. Handelt es sich bei der Zentralbank um eine Zentralbank, welcher mehrere Länder angehören, umfasst das Blockchain-Netzwerks 154 beispielsweise ein oder mehrere Blockchain-Server 140, 141 pro Land. Beispielsweise sind die Blockchain-Server 140, 141 und/oder das Blockchain-Netzwerks 154 von einem Zentralbanksystem 156 umfasst. Der Blockchain-Server 140 umfasst beispielsweise einen Speicher, einen Prozessor 142 zum Ausführen von Programminstruktionen 144 und eine Kommunikationsschnittstelle 152 zur Kommunikation über das Netzwerk 160. In dem Speicher 146 ist beispielsweise eine Kopie der Blockchain 148 und/oder ein Register 150 gespeichert. Bei dem Register 150 handelt es sich beispielsweise um ein in regelmäßigen Intervallen geupdatetes Register, welches für die Blockchainadressen der Blockchain 148 jeweils einen aktuellen Nominalwert umfasst. Die aktuellen Nominalwerte werden aus den Bilanzen der in der Blockchain 148 gespeicherten Transaktionen für die entsprechenden Blockchainadressen berechnet. Das Register 150 stellt beispielsweise eine "Fast Blockchain" bereit, in welcher die vorberechneten Bilanzergebnisse für die Blockchainadressen als aktuelle Nominalwerte der entsprechenden Blockchainadressen bereitgestellt werden. Eine Verwendung eines solchen Registers kann den Vorteil haben, dass aktuelle Nominalwerte schneller bestimmt werden können, da diese bereits vorliegen und nicht erst berechnet werden müssen. Das Register 150 kann beispielsweise von einer virtuellen Maschine (VM) des Blockchain-Servers 140 verwaltet werden.

Der Blockchain-Server 140 kann dazu konfiguriert sein, auf Anfrage der Zentralbank Banknoten bzw. Blockchainadressen von Banknoten in der Blockchain 148 zu registrieren und/oder zu sperren. Der Blockchain-Server 140 kann dazu konfiguriert, auf Anfrage Auskunft über aktuelle Nominalwerte von Banknoten gemäß den in der Blockchain 148 gespeicherten Transaktionen unter Verwendung der Blockchainadressen der entsprechenden Banknoten zu erteilen. Beispielsweise verwendet der Blockchain-Server 140 zum Erteilen entsprechender Auskünfte das Register 150. Das Blockchain-Netzwerk 154 kann beispielsweise ein oder mehrere weitere Blockchain-Server 141 umfassen. Die weiteren Blockchain-Server 141 umfassen beispielsweise jeweils einen Speicher 147, einen Prozessor 143 zum Ausführen von Programminstruktionen 145 und eine Kommunikationsschnittstelle 153 zur Kommunikation über das Netzwerk 160. In den Speichern 147 ist beispielsweise jeweils eine Kopie der Blockchain 148 gespeichert. Die Blockchain-Server 141 sind beispielsweise dazu konfiguriert, auf Anfrage der Zentralbank Banknoten bzw. Blockchainadressen von Banknoten in der Blockchain 148 zu registrieren und/oder zu sperren.

Anstelle des Terminals 130 kann zur Zahlungsabwicklung auch ein mobiles tragbares Kommunikationsgerät 180 oder ein Desktop-PC 190, etwa zur Zahlungsabwicklung über das Internet, verwendet werden. Dabei kann das mobile Kommunikationsgerät 180 oder der Desktop-PC 190 beispielsweise als lokaler PoS dienen. Beispielsweise erfolgt die Zahlungsabwicklung unter Verwendung des Remoteserver 170. Beispielsweise erfolgt die Zahlungsabwicklung unter Verwendung eines Servers 200 eines Zahlungsdienstanbieters bzw. eines Finanzdienstleisters.

Das mobile Kommunikationsgerät 180, etwa ein Smartphone, umfasst beispielsweise einen Speicher 182 und einen Prozessor 184 zum Ausführen von Programinstruktionen 186. Ferner umfasst das mobile Kommunikationsgerät 180 beispielsweise eine Kommunikationsschnittstelle 187 zur Kommunikation mit der Banknote 100 sowie eine Kommunikationsschnittstelle 188 zur Kommunikation über das Netzwerk 160. Beispielsweise umfasst das mobile Kommunikationsgerät 180 eine Kamera zum Erfassen von visuellen Angaben 107 der Banknote 100, wie etwa der Seriennummer 106 oder den öffentlichen kryptographischen Schlüssel 116 der Banknote 100. Das mobile Kommunikationsgerät 180 ist beispielsweise dazu konfiguriert eine Zahlungsanfrage, etwa von dem Server 170 oder dem Zahlungsdienstserver 200, an die Banknote 100 und eine von der Banknote 100 signierte Transaktionsfreigabe an den Server 170 oder den Zahlungsdienstserver 200 weiterzuleiten. Beispielsweise ist das mobile Kommunikationsgerät 180 ferner dazu konfiguriert, etwa unter Verwendung der Kamera 189, die Blockchainadresse der Banknote 100 zu ermitteln und die Zahlungsanfrage an die Banknote 100 um die Blockchainadresse als Ausgangsadresse der Zahlung zu ergänzen. Ferner kann das mobile Kommunikationsgerät 180 dazu konfiguriert sein, direkt oder unter Vermittlung eines Servers wie dem Server 170 oder dem Zahlungsdienstserver 200 den aktuellen Nominalwert der Banknote 100 gemäß der Blockchain 148 zu ermitteln und einem Nutzer unter Verwendung einer Nutzerschnittstelle 181 anzuzeigen. Die Nutzerschnittstelle 181 umfasst beispielsweise eine Eingabe- und eine Ausgabevorrichtung zur Kommunikation des Nutzers mit dem mobilen Kommunikationsgerät 180. Die Eingabevorrichtung umfasst beispielsweise eine Tastatur. Die Ausgabevorrichtung umfasst beispielsweise ein Display. Beispielsweise sind Eingabe- und Ausgabevorrichtung in Form eines Touch-Displays miteinander kombiniert.

Das Desktop-PC 190 umfasst beispielsweise einen Speicher 192 und einen Prozessor 194 zum Ausführen von Programinstruktionen 196. Ferner umfasst das Desktop-PC 190 beispielsweise eine Kommunikationsschnittstelle 197 zur Kommunikation mit der Banknote 100 sowie eine Kommunikationsschnittstelle 198 zur Kommunikation über das Netzwerk 160. Beispielsweise umfasst das Desktop-PC 190 einen Sensor, wie etwa eine Kamera, zum Erfassen von visuellen Angaben 107 der Banknote 100, wie etwa der Seriennummer 106 oder den öffentlichen kryptographischen Schlüssel 116 der Banknote 100. Das Desktop-PC 190 ist beispielsweise dazu konfiguriert eine Zahlungsanfrage, etwa von dem Server 170 oder dem Zahlungsdienstserver 200, an die Banknote 100 und eine von der Banknote signierte Transaktionsfreigabe an den Server 170 oder den Zahlungsdienstserver 200 weiterzuleiten. Beispielsweise ist das Desktop-PC 190 ferner dazu konfiguriert, etwa unter Verwendung des Sensors 199, die Blockchainadresse der Banknote 100 zu ermitteln und die Zahlungsanfrage an die Banknote 100 um die Blockchainadresse als Ausgangsadresse der Zahlung zu ergänzen. Ferner kann das Desktop-PC 190 dazu konfiguriert sein, direkt oder unter Vermittlung eines Servers wie dem Server 170 oder dem Zahlungsdienstserver 200 den aktuellen Nominalwert der Banknote 100 gemäß der Blockchain 148 zu ermitteln und einem Nutzer unter Verwendung einer Nutzerschnittstelle 191 anzuzeigen. Die Nutzerschnittstelle 191 umfasst beispielsweise eine Eingabe- und eine Ausgabevorrichtung zur Kommunikation des Nutzers mit dem Desktop-PC 190. Die Eingabevorrichtung umfasst beispielsweise eine Tastatur und/oder Maus. Die Ausgabevorrichtung umfasst beispielsweise ein Display. Beispielsweise sind Eingabe- und Ausgabevorrichtung in Form eines Touch-Displays miteinander kombiniert.

Der Server 200 des Zahlungsdienstanbieters ist beispielsweise dazu konfiguriert eine Zahlungsabwicklung unter Verwendung der Banknote 100 und einem lokalen Gerät zur Kommunikation mit der Banknote 100, wie etwa dem mobilen Kommunikationsgerät 180 oder dem Desktop-PC 190, zu ermöglichen. Der Zahlungsdienstserver 200 umfasst beispielsweise einen Speicher 202, einen Prozessor 204 zum Ausführen von Programminstruktionen 206 und eine Kommunikationsschnittstelle 208 zur Kommunikation über das Netzwerk 160. Beispielsweise stellt der Zahlungsdienstserver 200 dem lokalen Gerät Transaktionsdaten einer auszuführenden Transaktion, wie etwa eine als Empfängeradresse zu verwendende Blockchainadresse und/oder Angaben zu dem zu zahlenden Betrag zur Verfügung. Beispielsweise leitet der Zahlungsdienstserver 200 über das lokale Gerät empfangene signierte Transaktionsfreigaben an die Blockchain-Servern 140, 141 weiter. Beispielsweise leitet der Zahlungsdienstserver 200 von den Blockchain-Servern 140, 141 empfangene Transaktionsbestätigungen und/oder Eintragungsbestätigungen an das lokale Gerät weiter.

Das System umfasst beispielsweise ein Herstellercomputersystem 210, welches im Zuge der Herstellung der Banknote 100 zum Einsatz kommt. Das Herstellercomputersystem 210 umfasst beispielsweise einen Speicher 212 und einen Prozessor 214 zum Ausführen von Programminstruktionen 216. Ferner umfasst das Herstellercomputersystem 210 beispielsweise eine Kommunikationsschnittstelle 221 zur Kommunikation mit der Banknote 100. Beispielsweise liest das Herstellercomputersystem 210 unter Verwendung der Kommunikationsschnittstelle 217 den öffentlichen kryptographischen Schlüssel 116 der Banknote 100 aus. Beispielsweise sendet das Herstellercomputersystem 210 unter Verwendung der Kommunikationsschnittstelle 217 Daten zur Speicherung an die Banknote 100, wie etwa die Seriennummer 106 der Banknote 100. Ferner umfasst das Herstellercomputersystem 210 beispielsweise einen Sensor 219 zum Prüfen der Banknote 100. Unter Verwendung des Sensor 219 wird beispielsweise eine Qualitätskontrolle der Banknote 100 durchgeführt. Besteht die Banknote 100 die Qualitätskontrolle wird beispielsweise eine Herstellungsbestätigung von dem Herstellercomputersystem 210 unter Verwendung einer Kommunikationsschnittstelle 218 zur Kommunikation mit einem Computersystem der Zentralbank, wie etwa dem Zentralbankcomputersystem 220, an die Zentralbank gesendet. Die Herstellungsbestätigung umfasst beispielsweise die Seriennummer 106 und/oder den öffentlichen kryptographischen Schlüssel 116 der Banknote 100 zur Initialisierung der Banknote 100 in der Blockchain 148.

Das System umfasst ferner beispielsweise ein Zentralbankcomputersystem 220 mit einem Speicher 222 und einem Prozessor 224 zum Ausführen von Programminstruktionen 226. Ferner umfasst das Zentralbankcomputersystem 220 beispielsweise eine Kommunikationsschnittstelle 228 zur Kommunikation mit dem Herstellercomputersystem 210 und/oder mit den Blockchain-Servern 140, 141, beispielsweise über das Netzwerk 160. Das Zentralbankcomputersystem 220 ist beispielsweise dazu konfiguriert Banknoten bzw. Blockchainadressen von Banknoten in der Blockchain 148 zu registrieren und/oder zu sperren. Mit anderen Worten ist das Zentralbankcomputersystem 220 beispielsweise dazu konfiguriert eine Initialisierungsanfrage und/oder eine Sperranfrage zum Initialisieren bzw. Sperren der Banknote 100 an einen der Blockchain-Servern 140, 141 zu senden. Zum Erstellen der Initialisierungsanfrage verwendet das Zentralbankcomputersystem 220 beispielsweise Daten, welche das Herstellercomputersystem in Form der Herstellungsbestätigung zur Verfügung stellt. Ferner kann das Zentralbankcomputersystem 220 beispielsweise einen Sensor umfassen zum Prüfen von Sicherheitsmerkmalen einer beschädigten Banknote. Falls die Prüfung der Sicherheitsmerkmalen sowie des Beschädigungsgrads der Banknote ergibt, dass es sich um eine valide Banknote handelt, ersetzt die Zentralbank die beschädigte Banknote. Hierzu ermittelt das Zentralbankcomputersystem 220 beispielsweise den aktuellen Nominalwert der beschädigten Banknote unter Verwendung einer entsprechenden Anfrage an einen der Blockchain-Servern 140, 141, zahlt den aktuellen Nominalwert aus und sendet eine Sperranfrage zum Sperren der Blockchainadresse der beschädigten Banknote an einen der Blockchain-Servern 140, 141.

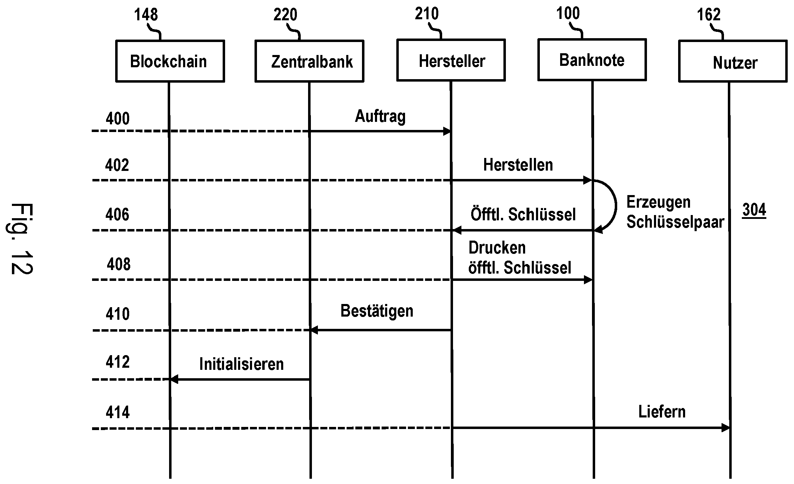

Figur 12 zeigt ein schematisches Flussdiagramm eines exemplarischen Verfahrens zum Herstellen von Banknoten 100. In Schritt 400 sendet die Zentralbank 220 einen Auftrag zur Herstellung von Banknoten 100 an einen Hersteller 210, z.B. einer Druckerei. Der Auftrag gibt beispielsweise einen Bereich von Seriennummern vor. Der Bereich von Seriennummern gibt Seriennummern vor, welche für die herzustellenden Banknoten 100 zu verwenden sind. Beispielsweise gibt der Auftrag ferner initiale Nominalwerte für die herzustellenden Banknoten 100 vor. Beispielsweise gibt der Auftrag einen Mindestnominalwert und/oder einen variablen Zusatznominalwertanteil vor. In Schritt 402 stellt der Hersteller 210 die Banknoten 100 gemäß dem empfangenen Auftrag her. Die hergestellten Banknoten 100 umfassen beispielsweise jeweils ein Sicherheitselement mit einem Prozessor. In Schritt 404 erzeugen die Sicherheitselemente der Banknoten 100 jeweils ein banknotenindividuelles asymmetrischen Schlüsselpaar. Ein öffentlicher kryptographischer Schlüssel des asymmetrischen Schlüsselpaars wird jeweils in einem Speicher des entsprechenden Sicherheitselement gespeichert. Der private kryptographische Schlüssel des asymmetrischen Schlüsselpaars wird jeweils in einem geschützten Speicherbereich des entsprechenden Speichers gespeichert. In Schritt 406 liest der Hersteller 210 jeweils den öffentlichen kryptographischen Schlüssel aus den Speichern der Banknoten 100 aus. Beispielsweise umfassen die Banknoten 100 jeweils eine visuelle Angabe einer der Seriennummern aus dem vorgegebenen Bereich von Seriennummern, welche der jeweiligen Banknote 100gg im Zuge des Herstellungsprozesses zugeordnet wurde. Beispielsweise werden die visuellen Angaben der Seriennummern der hergestellten Banknoten 100 gelesen. Beispielsweise sind in den Speichern der Banknoten 100 zusätzlich die Seriennummern der Banknoten 100 gespeichert. Beispielsweise liest der Hersteller 210 zusätzlich jeweils die Seriennummer aus den Speichern der Banknoten 100 aus.

In Schritt 408 wird beispielsweise eine visuelle Angabe des ausgelesenen öffentlichen kryptographischen Schlüssels und/oder einer aus dem öffentlichen kryptographischen Schlüssel abgeleitete Blockchainadresse der Banknote zu der jeweiligen Banknote hinzugefügt, beispielsweise auf diese aufgedruckt. In Schritt 410 wird eine Herstellungsbestätigung an die Zentralbank 220 gesendet, welche die hergestellten Banknoten 100 identifiziert. Beispielsweise gibt die Herstellungsbestätigung die Seriennummern der hergestellten Banknoten 100 an. Beispielsweise gibt die Herstellungsbestätigung die öffentlichen kryptographischen Schlüssel und/oder die aus dem öffentlichen kryptographischen Schlüssel abgeleiteten Blockchainadressen der hergestellten Banknoten 100 an. Beispielsweise gibt die Herstellungsbestätigung die initialen Nominalwerte der hergestellten Banknoten 100 an. Beispielsweise gibt die Herstellungsbestätigung Mindestnominalwerte und/oder variable Zusatznominalwertanteile der initialen Nominalwerte an. In Schritt 412 werden die Blockchainadressen der hergestellten Banknoten 100 von der Zentralbank 220 in der Blockchain 148 initialisiert. Beispielsweise fügt die Zentralbank 220 der Blockchain 148 einen Initialisierungseintrag zu. Beispielsweise gibt der Initialisierungseintrag die öffentlichen kryptographischen Schlüssel und/oder die aus dem öffentlichen kryptographischen Schlüssel abgeleiteten Blockchainadressen der hergestellten Banknoten 100 an. Beispielsweise gibt der Initialisierungseintrag ferner die Seriennummern der hergestellten Banknoten 100 an. Beispielsweise gibt der Initialisierungseintrag ferner die initialen Nominalwerte der Banknoten 100 an. Beispielsweise gibt der Initialisierungseintrag ferner die Mindestnominalwerte der Banknoten 100 an. In Schritt 414 werden die hergestellten Banknoten 100 ausgeliefert und gelangen zu Nutzern 162. Beispielsweise gelangen die Banknoten im Zuge des bargeldbasierten Zahlungsverkehrs als Bargeld zu den Nutzern 162.

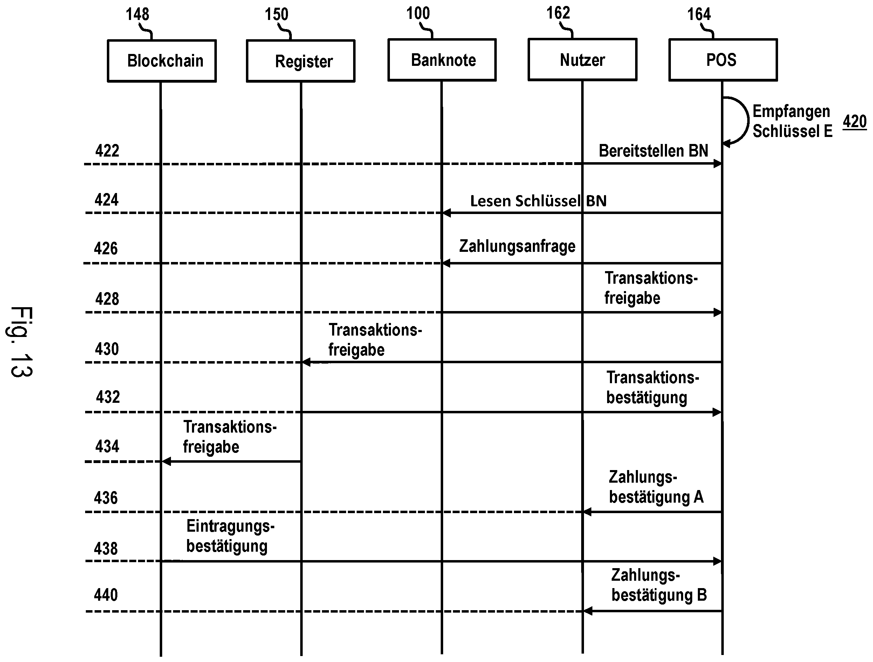

Figur 13 zeigt ein schematisches Flussdiagramm eines exemplarischen Verfahrens zur Zahlungsabwicklung mit einem Terminal eines PoS ("Point of Sale") 164. In Schritt 420 empfängt der PoS 164 bzw. das Terminal einen öffentlichen kryptographischen Schlüssel einer Blockchainadresse oder eine Blockchainadresse, welche der PoS 164 als Zahlungsempfänger zum Empfangen von Zahlungen über die Blockchain 148 verwendet. In Schritt 422 stellt der Nutzer 162 eine Banknote 100 für eine bargeldlose Zahlung bereit. In Schritt 424 liest der PoS 164 eine visuelle Angabe eines öffentlichen kryptographischen Schlüssels der Banknote 100 oder einer aus dem öffentlichen kryptographischen Schlüssel abgeleitete Blockchainadresse der Banknote 100. In Schritt 426 erstellt der PoS 164 eine Zahlungsanfrage und sendet die Zahlungsanfrage an die Banknote 100. Beispielsweise definiert die Zahlungsanfrage eine Transaktion eines zu zahlenden Betrags von einer Blockchainadresse der Banknote 100 an die Blockchainadresse des PoS 164 als Zahlungsempfänger. Alternativ könnte der PoS 164 auch die Seriennummer der Banknote 100 lesen und eine Anfrage an die Blockchain 148 oder ein Register 148 senden, welche die der entsprechenden Seriennummer zugeordnete Blockchainadresse abfragt. Falls die Blockchain 148 oder das Register 150 einen Eintrag umfasst, welcher der Seriennummer der Banknote 100 eine Blockchainadresse der Banknote 100 zuordnet, empfängt der PoS 164 als Antwort auf die Anfrage beispielsweise die Blockchainadresse der Banknote 100 oder einen öffentlichen Schlüssel der Banknote 100, aus welchem sich die Blockchainadresse ableiten lässt.

In Schritt 428 erstellt die Banknote 100 eine Transaktionsfreigabe, signiert die Transaktionsfreigabe mit dem privaten kryptographischen Schlüssel der Banknote 100 und sendet diese an den PoS 164. Die Transaktionsfreigabe umfasst beispielsweise die Blockchainadresse der Banknote 100, die Blockchainadresse des Zahlungsempfängers, d.h. des PoS 164, und den zu zahlenden Betrag. Ferner umfasst die Signatur beispielsweise einen Zeitstempel. In Schritt 430 leitet der PoS 164 die signierte Transaktionsfreigabe an das Register 150 weiter. Bei dem Register 150 handelt es sich beispielsweise um ein in regelmäßigen Intervallen geupdatetes Register, welches für die Blockchainadressen der Blockchain 148 jeweils einen aktuellen Nominalwert umfasst. Die aktuellen Nominalwerte werden aus den Bilanzen der in der Blockchain 148 gespeicherten Transaktionen für die entsprechenden Blockchainadressen berechnet. Das Register 150 stellt beispielsweise eine "Fast Blockchain" bereit, in welcher die vorberechneten Bilanzergebnisse für die Blockchainadressen als aktuelle Nominalwerte der entsprechenden Blockchainadressen bereitgestellt werden. Eine Verwendung eines solchen Registers kann den Vorteil haben, dass aktuelle Nominalwerte schneller bestimmt werden können, da diese bereits vorliegen und nicht erst berechnet werden müssen. Das Register 150 kann beispielsweise von einer virtuellen Maschine (VM) eines Blockchain-Servers bzw. Blockchain-Knotens des Blockchain-Netzwerks verwaltet werden. Beispielsweise kann der PoS 164 die signierte Transaktionsfreigabe aber auch an die Blockchain 148 senden, ohne Verwendung eines Registers 150.

In Schritt 432 prüft das Register 150 bzw. der Server/die virtuelle Maschine, auf welcher das Register 150 verwaltet wird, die von der Banknote 100 autorisierte Transaktion. Beispielsweise prüft das Register 150, ob der aktuelle Nominalwert der Banknote 100 zu Zahlung des zu zahlenden Betrags unter Verwendung der Blockchain 148 ausreicht. Beispielsweise prüft das Register 150, ob der aktuelle Nominalwert der Banknote 100 größer oder gleich dem zu zahlenden Betrag ist. Beispielsweise prüft das Register 150, ob der aktuelle Nominalwert einen Zusatznominalwertanteil umfasst, welcher ausreicht den zu zahlenden Betrag zu zahlen, d.h. das nach Zahlung des zu zahlenden Betrags der garantierten Mindestnominalwert verbleibt. Ferner prüft das Register 150 bzw. der Server/die virtuelle Maschine, auf welcher das Register 150 verwaltet wird, beispielsweise die Signatur der Transaktionsfreigabe. Ferner wird beispielsweise geprüft, dass eine identische Transaktion, z.B. mit identischem Zeitstempel der Transaktionsfreigabe, nicht bereits in die Blockchain eingetragen wurde. Falls die Prüfung erfolgreich ist, sendet das Register 150 eine Transaktionsbestätigung, welche eine positive Prüfung der signierten Transaktionsfreigabe bestätigt, an den PoS 164. Ferner leitet das Register 150 bzw. der Server/die virtuelle Maschine, auf welcher das Register 150 verwaltet wird, die signierte Transaktionsfreigabe in Schritt 434 zur Eintragung an die Blockchain 148 weiter. Alternativ oder zusätzlich kann der Server, auf welchem das Register 150 verwaltet wird, die Transaktion auf eine positive Prüfung der signierten Transaktionsfreigabe hin eintragen und die Eintragung an andere Server eines Blockchain-Netzwerks weiterleiten. In Schritt 436 bestätigt der PoS 164 auf den Empfang der Transaktionsbestätigung in Schritt 432 hin die Zahlung gegenüber dem Nutzer 164. Beispielsweise erfolgt die Zahlungsbestätigung in Schritt 436 nur unter der Voraussetzung, dass der zu zahlende Betrag kleiner als ein Schwellenwert ist. Falls der zu zahlende Betrag größer oder gleich dem Schwellenwert ist, ist für Bestätigung der Zahlung ferner ein Empfang einer Eintragungsbestätigung notwendig, welche die tatsächliche Eintragung der Transaktion in die Blockchain bestätigt. In Schritt 438 empfängt der PoS 164 von der Blockchain 148 bzw. einem die Blockchain 148 verwaltenden Blockchain-Server nach der Eintragung der Transaktion in die Blockchain 148 eine Eintragungsbestätigung. Falls der zu zahlende Betrag größer oder gleich dem Schwellenwert ist, erfolgt erst in Schritt 440 die Bestätigung der Zahlung gegenüber dem Nutzer 164.

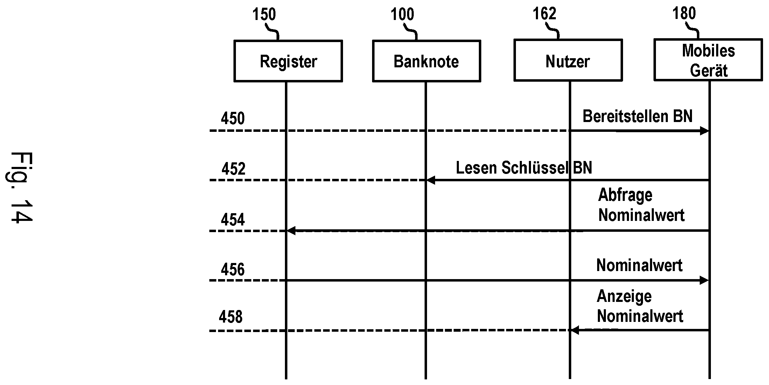

Figur 14 zeigt ein schematisches Flussdiagramm eines exemplarischen Verfahrens zum Ermitteln eines aktuellen Nominalwerts einer Banknote 100. In Schritt 450 stellt der Nutzer 162 die Banknote 100 einem Lesegerät, wie etwa einem mobilen tragbaren Kommunikationsgerät 180, z.B. einem Smartphone, bereit. In Schritt 452 liest das mobile Kommunikationsgerät 180 eine visuelle Angabe eines öffentlichen kryptographischen Schlüssels der Banknote 100 oder einer aus dem öffentlichen kryptographischen Schlüssel abgeleitete Blockchainadresse der Banknote 100. Alternativ könnte das Kommunikationsgerät 180 auch die Seriennummer der Banknote 100 lesen. In Schritt 454 sendet das Kommunikationsgerät 180 eine Anfrage nach dem aktuellen Nominalwert, welcher der Blockchainadresse der Banknote 100 zugeordnet ist, an das Register 150. Alternativ könnte eine solche Anfrage auch an die Blockchain bzw. einen die Blockchain verwaltenden Server gesendet werden. Die Anfrage umfasst zum Identifizieren der Banknote 100, deren aktueller Nominalwert ermittelt werden soll, beispielsweise den öffentlichen kryptographischen Schlüssel der Banknote 100, aus welchem die Blockchainadresse der Banknote 100 ableitbar ist. Beispielsweise umfasst die Anfrage zum Identifizieren der Banknote 100 die Blockchainadresse der Banknote 100. Beispielsweise umfasst die Anfrage die Seriennummer der Banknote 100, falls die Blockchain 148 oder das Register 150 einen Eintrag umfasst, welcher der Seriennummer der Banknote 100 eine Blockchainadresse der Banknote 100 zuordnet. In Schritt 456 sendet das Register 150 oder die Blockchain 148 bzw. ein das Register 150 oder die Blockchain 148 verwaltender Server in Antwort auf die Anfrage den aktuellen Nominalwert an das mobile Kommunikationsgerät 180. In Schritt 458 zeigt das mobile Kommunikationsgerät 180 dem Nutzer 162 den aktuellen Nominalwert der Banknote 100 an.

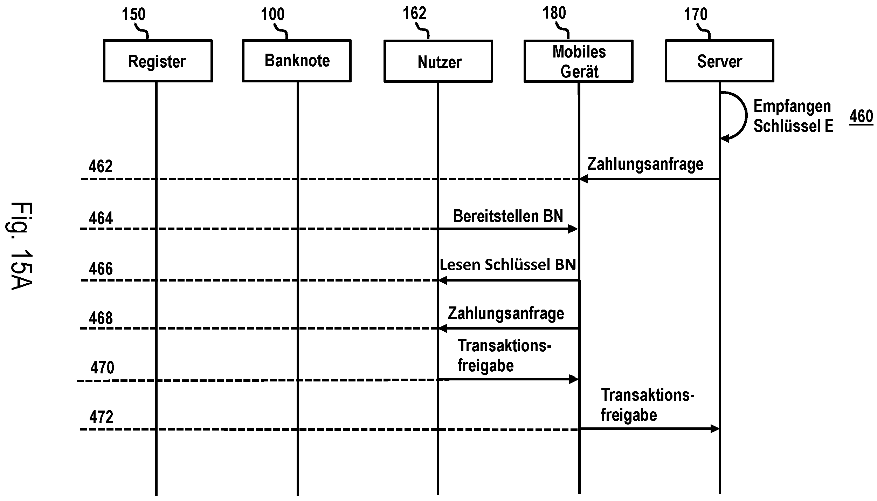

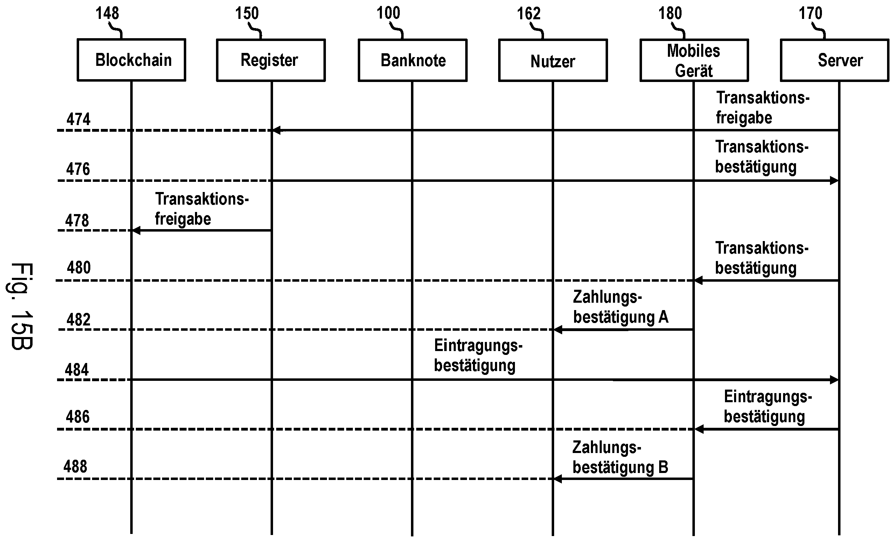

Figur 15 wurde aus Platzgründen in zwei Teile, d.h. Figur 15A und 15B, aufgeteilt, welche zusammen die Figur 15 bilden. Figur 15 zeigt ein schematisches Flussdiagramm eines exemplarischen Verfahrens zur Zahlungsabwicklung mit einem mobilen tragbaren Kommunikationsgerät 180. Bei dem mobilen tragbaren Kommunikationsgerät 180 handelt es sich beispielsweise um ein Smartphone. Beispielsweise erfolgt die Zahlungsabwicklung mit dem mobilen tragbaren Kommunikationsgerät 180 unter Verwendung eines Servers 170. Das mobilen tragbaren Kommunikationsgerät 180 dient beispielsweise als ein PoS für einen Einkauf über das Internet unter Verwendung des Servers 170. In Schritt 460 empfängt der Server 170 einen öffentlichen kryptographischen Schlüssel einer Blockchainadresse oder eine Blockchainadresse, welche der Server 170 als Zahlungsempfänger zum Empfangen von Zahlungen über die Blockchain 148 verwendet. In Schritt 462 sendet der Server 170 eine Zahlungsanfrage zum Abwickeln einer Zahlung an das mobile Kommunikationsgerät 180. Beispielsweise handelt es sich bei dem Server 170 um einen Dienstserver und bei der Zahlung um eine Zahlung für einen von dem Dienstserver bereitgestellten und von dem Nutzer 162 in Anspruch genommenen Dienst. Beispielsweise handelt es sich bei dem Server 170 um einen Server eines Finanzdienstleister, welcher eine Zahlung für den Nutzer 162 abwickelt. Die Zahlungsanfrage umfasst beispielsweise eine Angabe des öffentlichen kryptographischen Schlüssels oder der Blockchainadresse des Server 170 als Zahlungsempfänger und eine Angabe des zu zahlenden Betrags. In Schritt 464 stellt der Nutzer 162 eine Banknote 100 für eine bargeldlose Zahlung bereit. In Schritt 466 liest das mobile Kommunikationsgerät 180 eine visuelle Angabe eines öffentlichen kryptographischen Schlüssels der Banknote 100 oder einer aus dem öffentlichen kryptographischen Schlüssel abgeleitete Blockchainadresse der Banknote 100. In Schritt 468 ergänzt das mobile Kommunikationsgerät 180 die in Schritt 462 empfangene Zahlungsanfrage und sendet die ergänzte Zahlungsanfrage an die Banknote 100. Beispielsweise ergänzt das mobile Kommunikationsgerät 180 die Zahlungsanfrage um die Blockchainadresse der Banknote 100. Alternativ könnte das mobile Kommunikationsgerät 180 auch die Seriennummer der Banknote 100 lesen und eine Anfrage an die Blockchain 148 oder ein Register 148 senden, welche die der entsprechenden Seriennummer zugeordnete Blockchainadresse abfragt. Falls die Blockchain 148 oder das Register 150 einen Eintrag umfasst, welcher der Seriennummer der Banknote 100 eine Blockchainadresse der Banknote 100 zuordnet, empfängt das mobile Kommunikationsgerät 180 als Antwort auf die Anfrage beispielsweise die Blockchainadresse der Banknote 100 oder einen öffentlichen Schlüssel der Banknote 100, aus welchem sich die Blockchainadresse ableiten lässt.

In Schritt 470 erstellt die Banknote 100 eine Transaktionsfreigabe, signiert die Transaktionsfreigabe mit dem privaten kryptographischen Schlüssel der Banknote 100 und sendet diese an das mobile Kommunikationsgerät 180. Die Transaktionsfreigabe umfasst beispielsweise die Blockchainadresse der Banknote 100, die Blockchainadresse des Zahlungsempfängers, d.h. des Servers 170, und den zu zahlenden Betrag. Ferner umfasst die Signatur beispielsweise einen Zeitstempel. In Schritt 472 leitet das mobile Kommunikationsgerät 180 die signierte Transaktionsfreigabe an den Server 170 weiter, welcher die signierte Transaktionsfreigabe in Schritt 474 an das Register 150 weiterleitet. Bei dem Register 150 handelt es sich beispielsweise um ein in regelmäßigen Intervallen geupdatetes Register, welches für die Blockchainadressen der Blockchain 148 jeweils einen aktuellen Nominalwert umfasst. Die aktuellen Nominalwerte werden aus den Bilanzen der in der Blockchain 148 gespeicherten Transaktionen für die entsprechenden Blockchainadressen berechnet. Das Register 150 stellt beispielsweise eine "Fast Blockchain" bereit, in welcher die vorberechneten Bilanzergebnisse für die Blockchainadressen als aktuelle Nominalwerte der entsprechenden Blockchainadressen bereitgestellt werden. Beispielsweise kann der Server 170 die signierte Transaktionsfreigabe aber auch an die Blockchain 148 senden, ohne Verwendung eines Registers 150. In Schritt 476 prüft das Register 150 bzw. der Server/die virtuelle Maschine, auf welcher das Register 150 verwaltet wird, die von der Banknote 100 autorisierte Transaktion. Beispielsweise prüft das Register 150, ob der aktuelle Nominalwert der Banknote 100 zu Zahlung des zu zahlenden Betrags unter Verwendung der Blockchain 148 ausreicht.

Beispielsweise prüft das Register 150, ob der aktuelle Nominalwert der Banknote 100 größer oder gleich dem zu zahlenden Betrag ist. Beispielsweise prüft das Register 150, ob der aktuelle Nominalwert einen Zusatznominalwertanteil umfasst, welcher ausreicht den zu zahlenden Betrag zu zahlen, d.h. das nach Zahlung des zu zahlenden Betrags der garantierten Mindestnominalwert verbleibt. Ferner prüft das Register 150 bzw. der Server/die virtuelle Maschine, auf welcher das Register 150 verwaltet wird, beispielsweise die Signatur der Transaktionsfreigabe. Ferner wird beispielsweise geprüft, dass eine identische Transaktion, z.B. mit identischem Zeitstempel der Transaktionsfreigabe, nicht bereits in die Blockchain eingetragen wurde. Falls die Prüfung erfolgreich ist, sendet das Register 150 eine Transaktionsbestätigung, welche eine positive Prüfung der signierten Transaktionsfreigabe bestätigt, an den Server 170. Ferner leitet das Register 150 bzw. der Server/die virtuelle Maschine, auf welcher das Register 150 verwaltet wird, die signierte Transaktionsfreigabe in Schritt 478 zur Eintragung an die Blockchain 148 weiter. Alternativ oder zusätzlich kann der Server, auf welchem das Register 150 verwaltet wird, die Transaktion auf eine positive Prüfung der signierten Transaktionsfreigabe hin eintragen und die Eintragung an andere Server eines Blockchain-Netzwerks weiterleiten. In Schritt 480 leitet der Server 170 die Transaktionsbestätigung an das mobile Kommunikationsgerät 180 weiter. In Schritt 482 bestätigt das mobile Kommunikationsgerät 180 die Zahlung gegenüber dem Nutzer 164. Beispielsweise erfolgt die Zahlungsbestätigung in Schritt 482 nur unter der Voraussetzung, dass der zu zahlende Betrag kleiner als ein Schwellenwert ist. Falls der zu zahlende Betrag größer oder gleich dem Schwellenwert ist, ist für Bestätigung der Zahlung ferner ein Empfang einer Eintragungsbestätigung notwendig, welche die tatsächliche Eintragung der Transaktion in die Blockchain bestätigt. In Schritt 484 empfängt der Server 170 von der Blockchain 148 bzw. einem die Blockchain 148 verwaltenden Blockchain-Server nach der Eintragung der Transaktion in die Blockchain 148 eine Eintragungsbestätigung. In Schritt 486 leitet der Server 170 die Eintragungsbestätigung an das mobile Kommunikationsgerät 180 weiter. Falls der zu zahlende Betrag größer oder gleich dem Schwellenwert ist, erfolgt erst in Schritt 488 die Bestätigung der Zahlung gegenüber dem Nutzer 164.

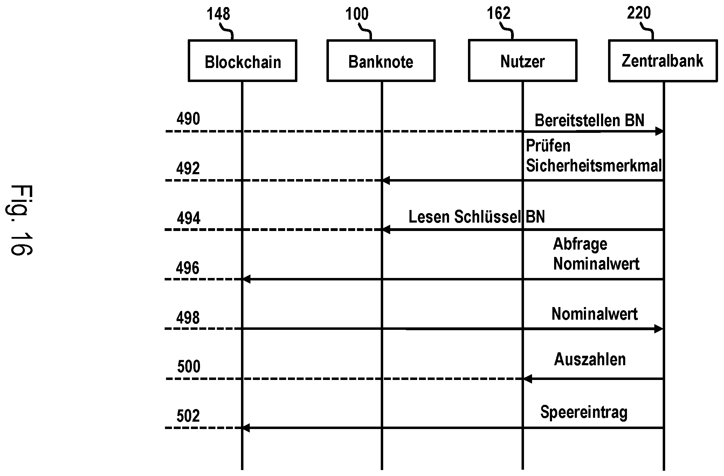

Figur 16 zeigt ein schematisches Flussdiagramm eines exemplarischen Verfahrens zum Ersetzen einer Banknote 100. In Schritt 490 stellt der Nutzer 162 der Zentralbank 220 eine beschädigte Banknote 100 bereit. In Schritt 492 prüft die Zentralbank 220 die Sicherheitsmerkmale der beschädigten Banknote 100, um festzustellen, ob es sich bei der beschädigten Banknote 100 um eine gültige Banknote 100 handelt, welche beschädigt wurde. Ferner prüft die Zentralbank 220 beispielsweise, ob von der vorliegenden Banknote 100 mehr als 50% unbeschädigt sind. Falls die Prüfung der Zentralbank 220 ergibt, dass es sich bei der beschädigten Banknote um eine gültige Banknote handelt, liest die Zentralbank 220 in Schritt 494 eine visuelle Angabe eines öffentlichen kryptographischen Schlüssels der Banknote 100 oder einer aus dem öffentlichen kryptographischen Schlüssel abgeleitete Blockchainadresse der Banknote 100. Alternativ könnte die Zentralbank 220 auch die Seriennummer der Banknote 100 lesen. In Schritt 496 sendet die Zentralbank 220 eine Anfrage nach dem aktuellen Nominalwert, welcher der Blockchainadresse der Banknote 100 zugeordnet ist, an das Register 150. Alternativ könnte eine solche Anfrage auch an die Blockchain bzw. einen die Blockchain verwaltenden Server gesendet werden. Die Anfrage umfasst zum Identifizieren der Banknote 100, deren aktueller Nominalwert ermittelt werden soll, beispielsweise den öffentlichen kryptographischen Schlüssel der Banknote 100, aus welchem die Blockchainadresse der Banknote 100 ableitbar ist. Beispielsweise umfasst die Anfrage zum Identifizieren der Banknote 100 die Blockchainadresse der Banknote 100. Beispielsweise umfasst die Anfrage die Seriennummer der Banknote 100, falls die Blockchain 148 oder das Register 150 einen Eintrag umfasst, welcher der Seriennummer der Banknote 100 eine Blockchainadresse der Banknote 100 zuordnet. In Schritt 498 sendet das Register 150 oder die Blockchain 148 bzw. ein das Register 150 oder die Blockchain 148 verwaltender Server in Antwort auf die Anfrage den aktuellen Nominalwert an die Zentralbank 220.

In Schritt 500 zahlt die Zentralbank 220 den aktuellen Nominalwert der beschädigten Banknote 100 aus. Beispielsweise umfasst das Auszahlen des aktuellen Nominalwerts der beschädigten Banknote 100 ein Bereitstellen ein oder mehrerer Banknoten als Ersatz für die beschädigte Banknote 100, deren aktuelle Nominalwerte in der Summe dem aktuellen Nominalwert der beschädigten Banknote 100 entsprechen. Beispielsweise handelt es sich bei den ein oder mehreren Banknoten als Ersatz für die beschädigte Banknote 100 um Banknoten nach einer der zuvor beschriebenen Ausführungsformen. Beispielsweise umfasst das Auszahlen des aktuellen Nominalwerts der beschädigten Banknote 100 ein Eintragen einer Transaktion eines Betrags in Höhe des aktuellen Nominalwerts von einer Blockchainadresse der die beschädigte Banknote ausgebenden Zentralbank 220 an eine von einem Besitzer der beschädigten Banknote 100 angegebenen Blockchainadresse. Beispielsweise ist die angegebene Blockchainadresse einer anderen Banknote des Besitzers, d.h. Eigentümers, der beschädigten Banknoten 100, dem Besitzer der beschädigten Banknote persönlich oder einer anderen von dem Besitzer der beschädigten Banknote gewählten Institution zugeordnet. In Schritt 502 sendet die Zentralbank 220 einen Sperreintrag an die Blockchain 148. Mit eintragen des Sperreintrags in die Blockchain 148 wird die Blockchainadresse der beschädigten Banknote 100 gesperrt. Infolge der Sperrung ist es beispielsweise weder möglich eine Transaktion mit der Blockchainadresse der beschädigten Banknote 100 als Ausgangsadresse, noch eine Transaktion mit der Blockchainadresse der beschädigten Banknote 100 als Zieladresse auszuführen, d.h. in die Blockchain 148 einzutragen. Beispielsweise wird als Voraussetzung für ein Eintragen einer Transaktion in die Blockchain 148 geprüft, ob ein Sperreintrag für die Ausgangsadresse oder die Zieladresse der Transaktion vorliegt. Falls Ausgangsadresse oder Zieladresse der Transaktion gesperrt sind, wird der Eintrag beispielsweise verweigert. Andernfalls erfolgt der Eintrag beispielsweise.

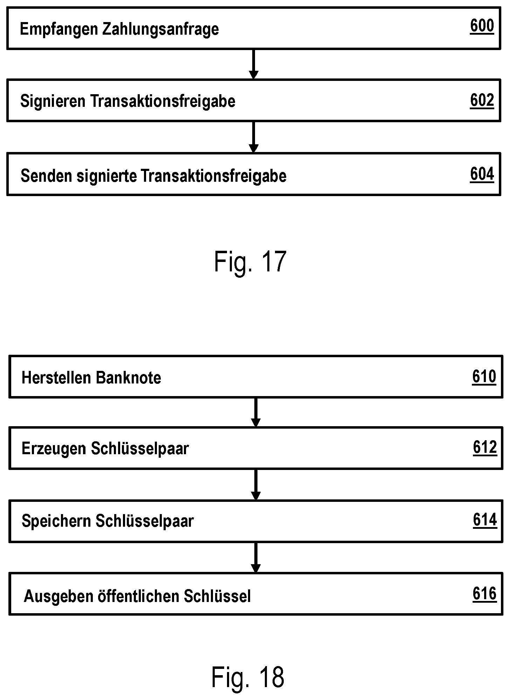

Figur 17 zeigt ein schematisches Flussdiagramm eines exemplarischen Verfahrens zum Verwenden einer Banknote. Die Banknote umfasst beispielsweise ein Sicherheitselement mit einem Prozessor und einem Speicher. In einem geschützten Speicherbereich des Speichers ist ein banknotenindividueller privater kryptographischer Schlüssel eines asymmetrischen Schlüsselpaars der Banknote gespeichert. Das asymmetrische Schlüsselpaar ist einer banknotenindividuellen Blockchainadresse Blockchain zugeordnet, welche eine die Banknote ausgebenden Zentralbank verwaltet. Der Prozessor ist dazu konfiguriert unter Verwendung der Programminstruktionen ein Zahlungsverfahren mit der Banknote auszuführen.

In Block 600 empfängt die Banknote eine Zahlungsanfrage für eine Zahlung in Form einer Transaktion eines zu zahlenden Betrags von der Blockchainadresse der Banknote an eine Blockchainadresse eines Zahlungsempfängers. Die Zahlungsanfrage gibt den zu zahlenden Betrag und die Blockchainadresse des Zahlungsempfängers an. In Block 602 wird eine Transaktionsfreigabe mit dem privaten kryptographischen Schlüssel der Banknote signiert. Die Transaktionsfreigabe umfasst die Blockchainadresse der Banknote, die Blockchainadresse des Zahlungsempfängers und den zu zahlenden Betrag. Ferner umfasst die Signatur einen Zeitstempel. In Block 604 wird die signierte Transaktionsfreigabe gesendet.

Figur 18 zeigt ein schematisches Flussdiagramm eines exemplarischen Verfahrens zum Herstellen einer Banknote. In Block 610 wird die Banknote hergestellt. Die Banknote umfasst eine visuelle Angabe einer die Banknote eindeutig identifizierenden Seriennummer der Banknote aus einem vordefinierten Bereich von Seriennummern und einen initialen Nominalwert der Banknote. Die Banknote umfasst ferner ein Sicherheitselement mit einem Prozessor und einem Speicher. In Block 612 erzeugt die Banknote ein banknotenindividuelles asymmetrisches Schlüsselpaar mit einem privaten und einem öffentlichen kryptographischen Schlüssel. In Block 614 speichert die Banknote das erzeugte banknotenindividuelle asymmetrische Schlüsselpaar in dem Speicher. Der private kryptographische Schlüssel wird dabei in einem geschützten Speicherbereich des Speichers gespeichert. In Block 616 gibt die Banknote den erzeugten öffentlichen kryptographischen Schlüssel aus zum Initialisieren einer aus dem öffentlichen kryptographischen Schlüssel abgeleiteten banknotenindividuellen Blockchainadresse durch eine die Banknote ausgebenden Zentralbank in einer Blockchain. Der Blockchainadresse der Banknote wird im Zuge der Initialisierung der initiale Nominalwert zugeordnet.

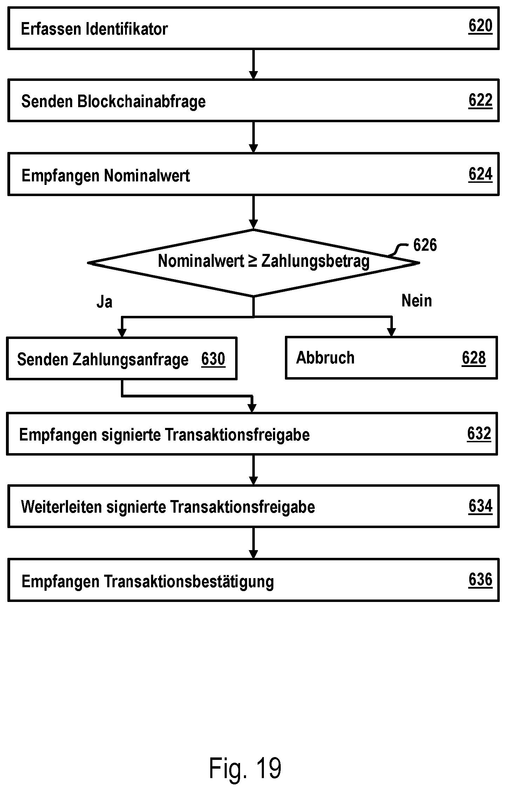

Figur 19 ein schematisches Flussdiagramm eines exemplarischen Verfahrens zur Zahlungsabwicklung mit einem Terminal. Die Zahlung erfolgt mit einer Banknote, welche beispielsweise eine visuelle Angabe eines eine Blockchainadresse der Banknote eindeutig identifizierenden Identifikator umfasst. Die Banknote umfasst eine Kommunikationsschnittstelle zur Kommunikation mit dem Terminal und ein Sicherheitselement mit einem Prozessor und einem Speicher. In einem geschützten Speicherbereich des Speichers ist ein banknotenindividueller privater kryptographischer Schlüssel eines asymmetrischen Schlüsselpaars der Banknote gespeichert. Das asymmetrische Schlüsselpaar ist einer banknotenindividuellen Blockchainadresse zugeordnet ist, welches eine die Banknote ausgebenden Zentralbank verwaltet. Beispielsweise ist in dem Speicher ferner der Identifikator der Blockchainadresse der Banknote gespeichert. Bei dem Identifikator handelt es sich beispielsweise um die Seriennummer der Banknote, den öffentlichen kryptographischen Schlüssel der Banknote, oder die Blockchainadresse der Banknote selbst. Das Terminal umfasst einen Prozessor, einen Speicher und eine Kommunikationsschnittstelle zu Kommunikation mit der Banknote.

In Block 620 erfasst das Terminal den Identifikator der Blockchainadresse der Banknote, welcher die Blockchainadresse der Banknote eindeutig identifiziert. Bei dem erfassten Identifikator handelt es sich beispielsweise um die Seriennummer der Banknote, den öffentlichen kryptographischen Schlüssel der Banknote, oder die Blockchainadresse der Banknote selbst. Die Erfassung kann eine optische Erfassung einer visuellen Angabe des Identifikators mit einem optischen Sensor und/oder ein auslesen des in dem Speicher gespeicherten Identifikator über die Kommunikationsschnittstelle der Banknote umfassen. In Block 622 sendet das Terminal eine Blockchainabfrage nach dem aktuellen Nominalwert der Blockchainadresse der Banknote, welche durch den erfassten Identifikator identifiziert wird. In Block 624 empfängt das Terminal den aktuellen Nominalwert der Blockchainadresse der Banknote. In Block 626 prüft das Terminal, ob der empfangene aktuelle Nominalwert größer gleich dem zu zahlenden Betrag ist. Falls der aktuelle Nominalwert nicht größer gleich dem zu zahlenden Betrag ist, d.h. die Prüfung erfolglos ist, wird das Verfahren mit Block 628 fortgesetzt. In Block 628 wird das Verfahren abgebrochen. Falls der aktuelle Nominalwert größer gleich dem zu zahlenden Betrag ist, d.h. die Prüfung erfolgreich ist, wird das Verfahren mit Block 630 fortgesetzt. In Block 630 sendet das Terminal eine Zahlungsanfrage an die Banknote in Form einer Transaktion eines zu zahlenden Betrags von der Blockchainadresse der Banknote an eine Blockchainadresse eines Zahlungsempfängers. Die Zahlungsanfrage gibt den zu zahlenden Betrag und die Blockchainadresse des Zahlungsempfängers an. In Block 632 empfängt das Terminal eine signierte Transaktionsfreigabe von der Banknote. Die Transaktionsfreigabe ist signiert mit einem privaten kryptographischen Schlüssel der Banknote. Die Transaktionsfreigabe umfasst die Blockchainadresse der Banknote, die Blockchainadresse des Zahlungsempfängers und den zu zahlenden Betrag. Ferner umfasst die Signatur beispielsweise einen Zeitstempel. In Block 634 leitet das Terminal die signierte Transaktionsfreigabe der Banknote an einen Blockchain-Server der Blockchain weiter zum Prüfen und Eintragen der Transaktion in die Blockchain. In Block 636 empfängt das Terminal, auf eine erfolgreiche Prüfung der signierten Transaktionsfreigabe hin, eine Transaktionsbestätigung.

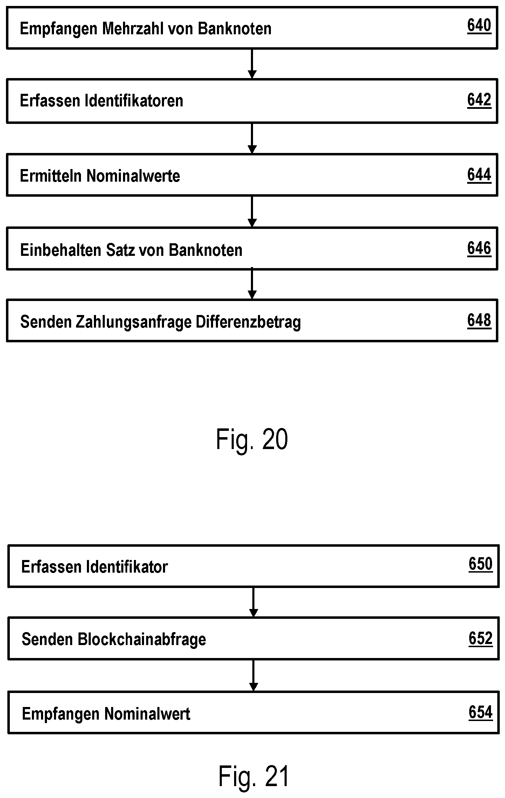

Figur 20 zeigt ein schematisches Flussdiagramm eines exemplarischen Verfahrens zur Zahlungsabwicklung mit einer Mehrzahl von Banknoten. In Block 640 wird eine Mehrzahl von Banknoten empfangen. In Block 642 werden die Identifikatoren der Blockchainadressen der empfangenen Banknoten erfasst, d.h. beispielsweise die Seriennummern, öffentlichen kryptographischen Schlüssel und/oder Blockchainadressen der entsprechenden Banknoten. In Block 644 wird für jeden der erfassten Identifikatoren jeweils ein aktueller Nominalwert ermittelt, welcher unter der entsprechenden Blockchainadresse gespeicherter ist. Hierfür wird eine Blockchainabfrage nach dem entsprechenden Nominalwert verwendet. In Block 646 wird aus der Mehrzahl von empfangenen Banknoten ein Satz von Banknoten ausgewählt und einbehalten, deren aufsummierte aktuelle Nominalwerte einen Betrag ergeben, der kleiner als ein zu zahlender Betrag ist. Ein verbleibender Differenzbetrag zwischen dem zu zahlenden Betrag und dem aufsummierten Betrag des Satzes von ausgewählten Banknoten ist kleiner als ein aktueller Nominalwert einer weiteren Banknote der Mehrzahl von Banknoten, welche nicht von dem Satz von ausgewählten Banknoten umfasst ist. In Block 648 wird eine Zahlungsanfrage zur Zahlung des Differenzbetrags an die weitere Banknote gesendet.

Figur 21 zeigt ein schematisches Flussdiagramm eines exemplarischen Verfahrens zum Ermitteln eines aktuellen Nominalwerts. Die Banknote umfasst eine visuelle Angabe eines die Blockchainadresse der Banknote eindeutig identifizierenden Identifikators. Die Banknote umfasst eine Kommunikationsschnittstelle zur Kommunikation mit dem Terminal und ein Sicherheitselement mit einem Prozessor und einem Speicher. In einem geschützten Speicherbereich des Speichers ist ein banknotenindividueller privater kryptographischer Schlüssel eines asymmetrischen Schlüsselpaars der Banknote gespeichert. Das asymmetrische Schlüsselpaar ist einer banknotenindividuellen Blockchainadresse Blockchain zugeordnet, welche von einer die Banknote ausgebenden Zentralbank verwalteten wird. Bei dem Identifikator handelt es sich beispielsweise um die Seriennummer, den öffentlichen kryptographischen Schlüssel und/oder die Blockchainadresse der Banknote.

Das Terminal umfasst einen Prozessor, einen Speicher und eine Kommunikationsschnittstelle zu Kommunikation mit der Banknote. In Block 650 erfasst das Terminal einen Identifikator der Blockchainadresse der Banknote, welcher die Blockchainadresse der Banknote eindeutig identifiziert. Bei dem erfassten Identifikator handelt es sich beispielsweise die Seriennummer der Banknote, den öffentlichen kryptographischen Schlüssel der Banknote, oder die Blockchainadresse der Banknote selbst. In Block 652 erstellt und sendet das Terminal eine Blockchainabfrage nach dem aktuellen Nominalwert der Blockchainadresse der Banknote, welche durch den erfassten Identifikator identifiziert wird. In Block 654 empfängt das Terminal den aktuellen Nominalwert der Blockchainadresse der Banknote.

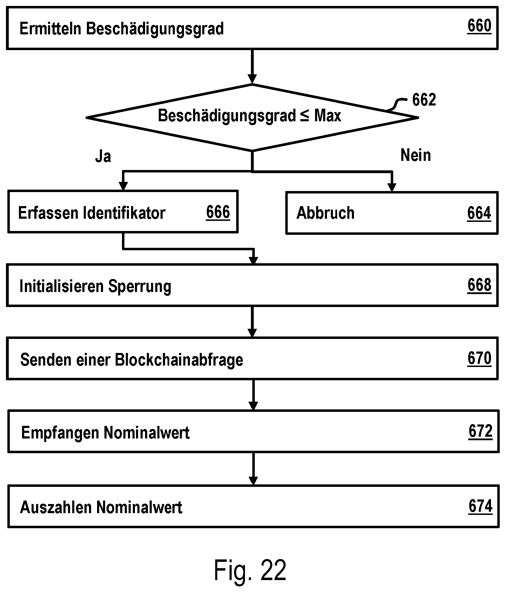

Figur 22 zeigt ein schematisches Flussdiagramm eines exemplarischen Verfahrens zum Ersetzen einer Banknote. Die Banknote umfasst beispielsweise eine visuelle Angabe eines Identifikators einer Blockchainadresse der Banknote. Die Banknote umfasst die visuelle Angabe des Identifikators beispielsweise mehrfach über die Banknote verteilt. Ferner umfasst die Banknote ferner eine Mehrzahl von über die Banknote verteilt angeordneten Sicherheitsmerkmalen. Die Banknote umfasst ein Sicherheitselement mit einem Prozessor und einem Speicher mit Programminstruktionen. In einem geschützten Speicherbereich des Speichers ist ein banknotenindividueller privater kryptographischer Schlüssel eines asymmetrischen Schlüsselpaars der Banknote gespeichert. Das asymmetrische Schlüsselpaar ist einer banknotenindividuellen Blockchainadresse in einer Blockchain zugeordnet, welche von einer die Banknote ausgebenden Zentralbank verwaltet wird.

Die Banknote weist eine Beschädigung auf. In Block 660 wird ein Beschädigungsgrad der Banknote ermittelt. In Block 662 wird geprüft, ob der Beschädigungsgrads der Banknote einen vordefinierten zulässigen maximalen Beschädigungsgrad überschreitet. Falls der Beschädigungsgrads der Banknote den vordefinierten zulässigen maximalen Beschädigungsgrad überschreitet, wird das Verfahren in Block 664 abgebrochen. Falls der Beschädigungsgrads der Banknote einen vordefinierten zulässigen maximalen Beschädigungsgrad nicht überschreitet, wird das Verfahren in Block 666 mit einem Erfassen des Identifikators der Blockchainadresse der beschädigten Banknote fortgesetzt, welcher die Blockchainadresse der beschädigten Banknote eindeutig identifiziert. Bei dem erfassten Identifikator handelt es sich beispielsweise die Seriennummer der beschädigten Banknote, den öffentlichen kryptographischen Schlüssel der beschädigten Banknote, oder die Blockchainadresse der beschädigten Banknote selbst. In Block 668 wird eine Sperrung der Blockchainadresse der beschädigten Banknote initialisiert unter Verwendung des erfassten Identifikators. In Block 670 wird eine Blockchainabfrage nach dem aktuellen Nominalwert der Blockchainadresse der beschädigten Banknote gesendet. In Block 672, wird der aktuelle Nominalwert der entsprechenden Blockchainadresse empfangen und in Block 674 ausgezahlt. Dabei kann der Block 668 beispielsweise vor dem Block 670 oder nach dem Block 672 erfolgen.

### Bezugszeichenliste

- 100: Banknote
- 102: Sicherheitselement
- 104: Kommunikationsschnittstelle
- 106: Seriennummer
- 107: visuelle Angabe
- 108: Nominalwert
- 110: Sicherheitsmerkmal
- 112: Nutzerschnittstelle
- 116: öfftl. Schlüssel
- 118: priv. Schlüssel
- 120: Speicher
- 122: geschützter Speicherbereich
- 124: Prozessor
- 128: Programminstruktionen
- 130: Terminal
- 132: Speicher
- 134: Prozessor
- 136: Programminstruktionen
- 137: Kommunikationsschnittstelle
- 138: Kommunikationsschnittstelle
- 139: Sensor
- 140: Blockchain-Server
- 141: Blockchain-Server
- 142: Prozessor
- 143: Prozessor
- 144: Programminstruktionen
- 146: Speicher
- 147: Speicher
- 148: Blockchain
- 150: Register
- 152: Kommunikationsschnittstelle
- 153: Kommunikationsschnittstelle
- 154: Blockchain-Netzwerk
- 156: Zentralbanksystem
- 160: Netzwerk
- 162: Nutzer
- 164: PoS
- 170: Server
- 172: Speicher
- 174: Prozessor
- 176: Programminstruktionen
- 178: Kommunikationsschnittstelle
- 180: mobiles tragbares Kommunikationsgerät
- 181: Nutzerschnittstelle
- 182: Speicher
- 184: Prozessor
- 186: Programminstruktionen
- 187: Kommunikationsschnittstelle
- 188: Kommunikationsschnittstelle
- 189: Kamera
- 190: Desktop-PC
- 191: Nutzerschnittstelle
- 192: Speicher
- 194: Prozessor
- 196: Programminstruktionen
- 197: Kommunikationsschnittstelle
- 198: Kommunikationsschnittstelle
- 199: Sensor
- 200: Zahlungsdienstserver
- 202: Speicher
- 204: Prozessor
- 206: Programminstruktionen
- 208: Kommunikationsschnittstelle
- 210: Herstellercomputersystem
- 212: Speicher
- 214: Prozessor
- 216: Programminstruktionen
- 217: Kommunikationsschnittstelle
- 218: Kommunikationsschnittstelle
- 219: Sensor
- 220: Zentralbankcomputersystem
- 222: Speicher
- 224: Prozessor
- 226: Programminstruktionen
- 228: Kommunikationsschnittstelle
- 229: Sensor
- 240: Nutzercomputersystem
- 242: Speicher
- 244: Prozessor
- 246: Programminstruktionen
- 248: Kommunikationsschnittstelle
- 250: Kommunikationsschnittstelle
- 252: Nutzerschnittstelle
- 260: Nutzercomputersystem
- 262: Speicher
- 264: geschützter Speicherbereich
- 266: priv. Schlüssel
- 268: öfftl. Schlüssel
- 270: Prozessor
- 272: Programminstruktionen
- 274: Kommunikationsschnittstelle
- 276: Kommunikationsschnittstelle
- 278: Nutzerschnittstelle

## Patentansprüche

1. Verfahren zum Revozieren eines ersten asymmetrischen Schlüsselpaars (266, 268) eines ersten Nutzercomputersystems (260) unter Verwendung einer Banknote (100), wobei das erste asymmetrische Schlüsselpaar (266, 268) einen ersten privaten kryptographischen Schlüssel (266) und einen ersten öffentlichen kryptographischen Schlüssel (268) umfasst, wobei das erste asymmetrische Schlüsselpaar (266, 268) einer ersten Blockchainadresse in einer Blockchain (148) zugeordnet ist,
wobei für das erste asymmetrische Schlüsselpaar (266, 268) ferner eine Zuordnung zu der Banknote (100) in der Blockchain (148) registriert ist, welche unter Verwendung eines banknotenindividuellen zweiten privaten kryptographischen Schlüssels (118) eines banknotenindividuellen zweiten asymmetrischen Schlüsselpaars (116, 118) der Banknote (100) signiert ist,
wobei die Banknote (100) ein Sicherheitselement (102) mit einem Prozessor (124) und einem Speicher (120) mit Programminstruktionen (128) umfasst, wobei in dem Speicher (120) eine die Banknote (100) eindeutig identifizierende Identifikationsnummer (106) gespeichert ist, wobei in einem geschützten Speicherbereich (122) des Speichers (120) der zweite private kryptographische Schlüssel (118) gespeichert ist, wobei das zweite asymmetrische Schlüsselpaar (116, 118) einer banknotenindividuellen zweiten Blockchainadresse in der Blockchain (148) zugeordnet ist,
wobei das Verfahren unter Verwendung eines zweiten Nutzercomputersystems (240) umfasst:
• Senden einer Revozierungsanfrage zum Revozieren des ersten asymmetrischen Schlüsselpaars (266, 268) von dem zweiten Nutzercomputersystem (240) an die Banknote (100),
• in Antwort auf die Revozierungsanfrage, Empfangen eines unter Verwendung des zweiten privaten kryptographischen Schlüssels (118) signierten ersten Kryptogramms von der Banknote (100) durch das zweite Nutzercomputersystem (240), wobei das erste Kryptogramm die Identifikationsnummer (106) der Banknote (100) und eine Revozierungsbestätigung der Banknote (100) umfasst,
• Weiterleiten des signierten ersten Kryptogramms durch das zweite Nutzercomputersystem (240) an einen Blockchain-Server (140; 141) der Blockchain (148) zur Eintragung der Revozierungsbestätigung der durch die Identifikationsnummer (106) identifizierten Banknote (100) in die Blockchain (148), wobei durch die Eintragung der Revozierungsbestätigung das erste asymmetrische Schlüsselpaar (266, 268) revoziert und in Folge der Revozierung Eintragungen von Transaktionen in die Blockchain (148) blockiert werden, deren Freigaben auf einer Signatur unter Verwendung des revozierten ersten privaten kryptographischen Schlüssels (266) basiert.

2. Verfahren nach Anspruch 1, wobei es sich bei der ersten Blockchainadresse um den ersten öffentlichen kryptographischen Schlüssel (268) oder eine aus dem ersten öffentlichen kryptographischen Schlüssel (268) abgeleitete Blockchainadresse handelt.

3. Verfahren nach einem der vorangehenden Ansprüche, wobei es sich bei der Identifikationsnummer (106) um eine Seriennummer der Banknote (100) oder eine aus der Seriennummer der Banknote (100) abgeleitete Nummer handelt.

4. Verfahren nach einem der vorangehenden Ansprüche, wobei durch die Eintragung der Revozierungsbestätigung alle asymmetrischen Schlüsselpaare (266, 268) revoziert werden, für deren öffentlichen kryptographischen Schlüssel (268) zum Zeitpunkt der Eintragung eine Zuordnung zu der Banknote (100) in der Blockchain (148) registriert ist, welche unter Verwendung des banknotenindividuellen zweiten privaten kryptographischen Schlüssels (118) signiert ist, wobei in Folge der Revozierungen Eintragungen von Transaktionen in die Blockchain (148) blockiert werden, deren Freigaben auf einer Signatur unter Verwendung eines privaten kryptographischen Schlüssels (266) eines der revozierten asymmetrischen Schlüsselpaare (266, 268) basiert.

5. Verfahren nach einem der Ansprüche 1 bis 3, wobei durch die Eintragung der Revozierungsbestätigung bis zu einer vordefinierten maximalen Anzahl alle asymmetrischen Schlüsselpaare (266, 268) revoziert werden, für deren öffentlichen kryptographischen Schlüssel (268) zum Zeitpunkt der Eintragung eine Zuordnung zu der Banknote (100) in der Blockchain (148) registriert ist, welche unter Verwendung des banknotenindividuellen zweiten privaten kryptographischen Schlüssels (118) signiert ist.

6. Verfahren nach Anspruch 5, wobei die Revozierung bis zu der vordefinierten maximalen Anzahl an asymmetrischen Schlüsselpaaren (266, 268) in zeitlich aufsteigender Reihenfolge beginnenden mit dem asymmetrischen Schlüsselpaaren (266, 268) erfolgt, für dessen öffentlichen kryptographischen Schlüssel (268) eine zeitlich früheste Zuordnung zu der Banknote (100) in der Blockchain (148) registriert und das nicht revoziert ist, oder
wobei die Revozierung bis zu der vordefinierten maximalen Anzahl an asymmetrischen Schlüsselpaaren (266, 268) in zeitlich absteigender Reihenfolge beginnenden mit dem asymmetrischen Schlüsselpaaren (266, 268) erfolgt, für dessen öffentlichen kryptographischen Schlüssel (268) eine zeitlich späteste Zuordnung in der Blockchain (148) registriert und das nicht revoziert ist.

7. Verfahren nach einem der Ansprüche 1 bis 3, wobei die Revozierungsbestätigung den ersten öffentlichen kryptographischen Schlüssel (268) umfasst, welcher das revozierte erste asymmetrische Schlüsselpaar (266, 268) identifiziert.

8. Verfahren nach Anspruch 7, wobei die Revozierungsanfrage den ersten öffentlichen kryptographischen Schlüssel (268) zum Identifizieren des durch die Banknote (100) zu revozierenden ersten asymmetrischen Schlüsselpaars (266, 268) umfasst, und/oder
wobei der erste öffentliche kryptographische Schlüssel (268) in dem Speicher (120) der Banknote (100) gespeichert ist,
wobei insbesondere in dem Speicher (120) der Banknote (100) eine Zuordnung des ersten öffentlichen kryptographischen Schlüssels (268) zu dem ersten Nutzercomputersystem (260) gespeichert ist, wobei die Zuordnung einen Identifikator des ersten Nutzercomputersystems (260) umfasst, wobei die Revozierungsanfrage insbesondere den Identifikator des ersten Nutzercomputersystems (260) zum Identifizieren des durch die Banknote (100) zu revozierenden ersten asymmetrischen Schlüsselpaars (266, 268) umfasst.

9. Verfahren nach einem der vorangehenden Ansprüche, wobei es sich bei dem ersten Nutzercomputersystem (260) und dem zweiten Nutzercomputersystem (240) um dasselbe Nutzercomputersystem handelt, oder
wobei es sich bei dem ersten Nutzercomputersystem (260) und dem zweiten Nutzercomputersystem (240) um verschiedene Nutzercomputersystem handelt.

10. Verfahren nach einem der vorangehenden Ansprüche, wobei es sich bei dem ersten Nutzercomputersystem (260) um ein erstes mobiles tragbares Endgerät handelt und/oder
wobei es sich bei dem zweiten Nutzercomputersystem (240) um ein zweites mobiles tragbares Endgerät handelt und/oder
wobei es sich bei der Blockchain (148) um eine von einer die Banknote (100) ausgebenden Zentralbank verwaltete Blockchain (148) handelt und/oder
wobei ein der ersten Blockchainadresse zum Zeitpunkt der Revozierung des ersten asymmetrischen Schlüsselpaars (266, 268) zugeordneter Geldbetrag an die zweite Blockchainadresse der Banknote (100) transferiert wird und/oder
wobei das Verfahren ferner ein Herstellen der Banknote (100) umfasst, wobei das Herstellen umfasst:
• Empfangen der Identifikationsnummer (106) durch die Banknote (100),
• Speichern der Identifikationsnummer (106) in dem Speicher (120) der Banknote (100),
• Erzeugen des zweiten asymmetrischen Schlüsselpaars (116, 118) durch das Sicherheitselement (102) der Banknote (100),
• Speichern des zweiten privaten kryptographischen Schlüssels (118) in dem geschützten Speicherbereich (122) des Speichers (120) der Banknote (100),
• Speichern des zweiten öffentlichen kryptographischen Schlüssels (116) in dem Speicher (120) der Banknote (100),
• Erzeugen einer unter Verwendung des zweiten privaten kryptographischen Schlüssels (118) signierten Registrierungsanfrage durch die Banknote (100), wobei die Registrierungsanfrage die Identifikationsnummer (106) und den zweiten öffentlichen kryptographischen Schlüssel (116) der Banknote (100) umfasst,
• in Antwort auf das Empfangen der Identifikationsnummer (106), Senden der Registrierungsanfrage zum Registrieren der Identifikationsnummer (106) und des zweiten öffentlichen kryptographischen Schlüssels (116) in der Blockchain (148) durch einen Blockchain-Server (140; 141),
wobei insbesondere ein Herstellercomputersystem eines Herstellers der Banknote (100) die Identifikationsnummer (106) an die Banknote (100) sendet und die Registrierungsanfrage in Antwort auf das Senden der Identifikationsnummer (106) empfängt, wobei das Herstellercomputersystem einen Prozessor (214) und einen Speicher (212) mit Programminstruktionen (216) umfasst, wobei in einem geschützten Speicherbereich des Speichers (212) ein dritter privater kryptographischer Schlüssel eines dritten asymmetrischen Schlüsselpaars gespeichert ist, welches einer dritten Blockchainadresse des Herstellers in einer Blockchain (148) zugeordnet ist,
wobei das Verfahren insbesondere ferner umfasst:
• Signieren der Registrierungsanfrage unter Verwendung des dritten privaten kryptographischen Schlüssels durch das Herstellercomputersystem,
• Weiterleiten der von dem Herstellercomputersystem signierten Registrierungsanfrage an einen Blockchain-Server (140; 141) zum Registrieren der Identifikationsnummer (106) und des zweiten öffentlichen kryptographischen Schlüssels (116) in der Blockchain (148).

11. Verfahren nach einem der vorangehenden Ansprüche, wobei das Verfahren ferner das Registrieren der Zuordnung des ersten asymmetrischen Schlüsselpaars (266, 268) zu der Banknote (100) in der Blockchain (148) umfasst, wobei das Registrieren umfasst:
• Erzeugen des ersten asymmetrischen Schlüsselpaars (266, 268) durch das erste Nutzercomputersystem (260),
• Speichern des ersten privaten kryptographischen Schlüssels (266) in einem geschützten Speicherbereich (264) eines Speichers (262) des ersten Nutzercomputersystems (260),
• Speichern des ersten öffentlichen kryptographischen Schlüssels (268) in dem Speicher (262) des ersten Nutzercomputersystems (260),
• Senden einer Signaturanfrage zum Signieren des ersten öffentlichen kryptographischen Schlüssels (268) an die Banknote (100), wobei die Signaturanfrage den ersten öffentlichen kryptographischen Schlüssel (268) umfasst,
• in Antwort auf die Signaturanfrage, Empfangen eines zweiten Kryptogramms mit dem signierten ersten öffentlichen kryptographischen Schlüssel (268) und mit der Identifikationsnummer (106) der Banknote (100), wobei der erste öffentliche kryptographische Schlüssel (268) mit dem zweiten privaten kryptographischen Schlüssel (118) der Banknote (100) signiert ist,
• Weiterleiten des zweiten Kryptogramms an einen Blockchain-Server (140; 141) der Blockchain (148) zur Eintragung, wobei durch die Eintragung des zweiten Kryptogramms die Zuordnung des ersten asymmetrischen Schlüsselpaars (266, 268) zu der Identifikationsnummer (106) der Banknote (100) in der Blockchain (148) registriert wird und in Folge der Registrierung Eintragungen von Transaktionen in die Blockchain (148) ermöglicht werden, deren Freigaben auf einer Signatur unter Verwendung des registrierten ersten privaten kryptographischen Schlüssels (266) basiert, und/oder
wobei eine Zahlung eines Betrags unter Verwendung des ersten privaten kryptographischen Schlüssels (266) des ersten Nutzercomputersystems (260) umfasst:
• Erstellen einer Transaktionsfreigabe durch das erste Nutzercomputersystem (260) für eine Transaktion des zu zahlenden Betrags von der ersten Blockchainadresse an eine vierte Blockchainadresse eines Zahlungsempfängers, wobei die Transaktionsfreigabe die erste Blockchainadresse, welcher der erste private kryptographische Schlüssel (266) zugeordnet ist, die vierte Blockchainadresse des Zahlungsempfängers und den zu zahlenden Betrag umfasst,
• Signieren der Transaktionsfreigabe mit dem ersten privaten kryptographischen Schlüssel (266) des ersten Nutzercomputersystems (260),
• Senden der signierten Transaktionsfreigabe an einen Blockchain-Server (140; 141) der Blockchain (148) zur Eintragung der Transaktion in die Blockchain (148), wobei durch die Eintragung der Transaktion der zu zahlenden Betrag der vierten Blockchainadresse des Zahlungsempfängers zugeordnet wird.

12. Nutzercomputersystem (240) zum Revozieren eines ersten asymmetrischen Schlüsselpaars (266, 268) eines weiteren Nutzercomputersystems (260) unter Verwendung einer Banknote (100), wobei das erste asymmetrische Schlüsselpaar (266, 268) einen ersten privaten kryptographischen Schlüssel (266) und einen ersten öffentlichen kryptographischen Schlüssel (268) umfasst, wobei das erste asymmetrische Schlüsselpaar (266, 268) einer ersten Blockchainadresse in einer Blockchain (148) zugeordnet ist,
wobei das Nutzercomputersystem (240) einen Prozessor (244) und einen Speicher (242) mit Programminstruktionen (246) umfasst,
wobei für das erste asymmetrische Schlüsselpaar (266, 268) ferner eine Zuordnung zu der Banknote (100) in der Blockchain (148) registriert ist, welche unter Verwendung eines banknotenindividuellen zweiten privaten kryptographischen Schlüssels (118) eines banknotenindividuellen zweiten asymmetrischen Schlüsselpaars (116, 118) der Banknote (100) signiert ist,
wobei die Banknote (100) ein Sicherheitselement (102) mit einem Prozessor (124) und einem Speicher (120) mit Programminstruktionen (128) umfasst, wobei in dem Speicher (120) eine die Banknote (100) eindeutig identifizierende Identifikationsnummer (106) gespeichert ist, wobei in einem geschützten Speicherbereich (122) des Speichers (120) der zweite private kryptographische Schlüssel (118) gespeichert ist, wobei das zweite asymmetrische Schlüsselpaar (116, 118) einer banknotenindividuellen zweiten Blockchainadresse in der Blockchain (148) zugeordnet ist,
wobei ein Ausführen der Programminstruktionen (246) des Nutzercomputersystems (240) durch den Prozessor den Prozessor dazu veranlasst, das Nutzercomputersystem (240) zum Revozieren des ersten asymmetrischen Schlüsselpaars (266, 268) zu steuern, wobei das Revozieren umfasst:
• Senden einer Revozierungsanfrage zum Revozieren des ersten asymmetrischen Schlüsselpaars (266, 268) von dem Nutzercomputersystem (240) an die Banknote (100),
• in Antwort auf die Revozierungsanfrage, Empfangen eines unter Verwendung des zweiten privaten kryptographischen Schlüssels (118) signierten Kryptogramms von der Banknote (100) durch das Nutzercomputersystem (240), wobei das Kryptogramm die Identifikationsnummer (106) der Banknote (100) und eine Revozierungsbestätigung der Banknote (100) umfasst,
• Weiterleiten des signierten Kryptogramms durch das Nutzercomputersystem (240) an einen Blockchain-Server (140; 141) der Blockchain (148) zur Eintragung der Revozierungsbestätigung der durch die Identifikationsnummer (106) identifizierten Banknote (100) in die Blockchain (148), wobei durch die Eintragung der Revozierungsbestätigung das erste asymmetrische Schlüsselpaar (266, 268) revoziert und in Folge der Revozierung Eintragungen von Transaktionen in die Blockchain (148) blockiert werden, deren Freigaben auf einer Signatur unter Verwendung des revozierten ersten privaten kryptographischen Schlüssels (266) basiert.

13. Banknote (100) zum Revozieren eines ersten asymmetrischen Schlüsselpaars (266, 268) eines ersten Nutzercomputersystems (260) unter Verwendung eines zweiten Nutzercomputersystem (240), wobei das erste asymmetrische Schlüsselpaar (266, 268) einen ersten privaten kryptographischen Schlüssel (266) und einen ersten öffentlichen kryptographischen Schlüssel (268) umfasst, wobei das erste asymmetrische Schlüsselpaar (266, 268) einer ersten Blockchainadresse in einer Blockchain (148) zugeordnet ist,
wobei für das erste asymmetrische Schlüsselpaar (266, 268) ferner eine Zuordnung zu der Banknote (100) in der Blockchain (148) registriert ist, welche unter Verwendung eines banknotenindividuellen zweiten privaten kryptographischen Schlüssels (118) eines banknotenindividuellen zweiten asymmetrischen Schlüsselpaars (116, 118) der Banknote (100) signiert ist,
wobei die Banknote (100) ein Sicherheitselement (102) mit einem Prozessor (124) und einem Speicher (120) mit Programminstruktionen (128) umfasst, wobei in dem Speicher (120) eine die Banknote (100) eindeutig identifizierende Identifikationsnummer (106) gespeichert ist, wobei in einem geschützten Speicherbereich (122) des Speichers (120) der zweite private kryptographische Schlüssel (118) gespeichert ist, wobei das zweite asymmetrische Schlüsselpaar (116, 118) einer banknotenindividuellen zweiten Blockchainadresse in der Blockchain (148) zugeordnet ist,
wobei ein Ausführen der Programminstruktionen (128) der Banknote (100) durch den Prozessor den Prozessor dazu veranlasst, die Banknote (100) zum Revozieren des ersten asymmetrischen Schlüsselpaars (266, 268) zu steuern, wobei das Revozieren umfasst:
• Empfangen einer Revozierungsanfrage zum Revozieren des ersten asymmetrischen Schlüsselpaars (266, 268) von dem zweiten Nutzercomputersystem (240) durch die Banknote (100),
• Erzeugen eines unter Verwendung des zweiten privaten kryptographischen Schlüssels (118) signierten Kryptogramms von der Banknote (100) durch die Banknote (100), wobei das Kryptogramm die Identifikationsnummer (106) der Banknote (100) und eine Revozierungsbestätigung der Banknote (100) umfasst
• in Antwort auf die Revozierungsanfrage, Senden des signierten Kryptogramms von der Banknote (100) an das zweite Nutzercomputersystem (240) zum Weiterleiten an einen Blockchain-Server (140; 141) der Blockchain (148) zur Eintragung der Revozierungsbestätigung der durch die Identifikationsnummer (106) identifizierten Banknote (100) in die Blockchain (148), wobei durch die Eintragung der Revozierungsbestätigung das erste asymmetrische Schlüsselpaar(266, 268) revoziert und in Folge der Revozierung Eintragungen von Transaktionen in die Blockchain (148) blockiert werden, deren Freigaben auf einer Signatur unter Verwendung des revozierten ersten privaten kryptographischen Schlüssels (266) basiert.

14. System (161) zum Revozieren eines ersten asymmetrischen Schlüsselpaars (266, 268) eines ersten Nutzercomputersystems (260), wobei das System (161) ein zweites Nutzercomputersystem (240) nach Anspruch 12 und eine Banknote (100) nach Anspruch 13 umfasst.

15. System (161) mit nach Anspruch 14, wobei das System (161) ferner einen Blockchain-Server (140; 141) umfasst, wobei der Blockchain-Server (140; 141) einen Prozessor (142; 143) und einen Speicher (146; 147) mit Programminstruktionen (144) umfasst, wobei ein Ausführen der Programminstruktionen (144) durch den Prozessor (142; 143) den Prozessor (142; 143) dazu veranlasst, den Blockchain-Server (140; 141) zum Revozieren des ersten asymmetrischen Schlüsselpaars (266, 268) zu steuern, wobei das Revozieren umfasst:
• Empfangen des signierten Kryptogramms von dem zweiten Nutzercomputersystem (240) durch den Blockchain-Server (140; 141) zur Eintragung der Revozierungsbestätigung der durch die Identifikationsnummer (106) identifizierten Banknote (100) in die Blockchain (148),
• Prüfen der Signatur des Kryptogramms durch den Blockchain-Server (140; 141) unter Verwendung des zweiten öffentlichen kryptographischen Schlüssels (116),
• auf ein erfolgreiches Prüfen hin, Eintragen der Revozierungsbestätigung in die Blockchain (148), wobei durch die Eintragung der Revozierungsbestätigung das erste asymmetrische Schlüsselpaar (266, 268) revoziert und in Folge der Revozierung Eintragungen von Transaktionen in die Blockchain (148) blockiert werden, deren Freigaben auf einer Signatur unter Verwendung des revozierten ersten privaten kryptographischen Schlüssels (266) basiert, und/oder
wobei das System (161) ferner das erste Nutzercomputersystem (260) umfasst.

## Claims

1. A method for revoking a first asymmetric key pair (266, 268) of a first user computer system (260) using a banknote (100), wherein the first asymmetric key pair (266, 268) comprises a first private cryptographic key (266) and a first public cryptographic key (268), wherein the first asymmetric key pair (266, 268) is assigned to a first blockchain address in a blockchain (148),
wherein an assignment to the banknote (100) is further registered in the blockchain (148) for the first asymmetric key pair (266, 268), which assignment is signed using a banknote-individual second private cryptographic key (118) of a banknote-individual second asymmetric key pair (116, 118) of the banknote (100),
wherein the banknote (100) comprises a security element (102) with a processor (124) and a memory (120) with program instructions (128), wherein an identification number (106) uniquely identifying the banknote (100) is stored in the memory (120), wherein the second private cryptographic key (118) is stored in a protected memory area (122) of the memory (120), wherein the second asymmetric key pair (116, 118) is assigned to a banknote-individual second blockchain address in the blockchain (148),
wherein the method, using a second user computer system (240), comprises:
• sending a revocation request to revoke the first asymmetric key pair (266, 268) from the second user computer system (240) to the banknote (100),
• in response to the revocation request, receiving, by the second user computer system (240), a first cryptogram signed using the second private cryptographic key (118) from the banknote (100), wherein the first cryptogram comprises the identification number (106) of the banknote (100) and a revocation confirmation of the banknote (100),
• forwarding, by the second user computer system (240), the signed first cryptogram to a blockchain server (140; 141) of the blockchain (148) for entering the revocation confirmation of the banknote (100) identified by the identification number (106) into the blockchain (148), wherein by the entering of the revocation confirmation the first asymmetric key pair (266, 268) is revoked and, as a result of the revocation, entries of transactions into the blockchain (148) are blocked whose authorizations are based on a signature using the revoked first private cryptographic key (266).

2. The method according to claim 1, wherein the first blockchain address is the first public cryptographic key (268) or a blockchain address derived from the first public cryptographic key (268).

3. The method according to any one of the preceding claims, wherein the identification number (106) is a serial number of the banknote (100) or a number derived from the serial number of the banknote (100).

4. The method according to any one of the preceding claims, wherein by the entering of the revocation confirmation all asymmetric key pairs (266, 268) are revoked for whose public cryptographic key (268) an assignment to the banknote (100) is registered in the blockchain (148) at the time of the entering, which assignment is signed using the banknote-individual second private cryptographic key (118), wherein, as a result of the revocations, entries of transactions into the blockchain (148) are blocked whose authorizations are based on a signature using a private cryptographic key (266) of one of the revoked asymmetric key pairs (266, 268).

5. The method according to any one of claims 1 to 3, wherein by the entering of the revocation confirmation, up to a predefined maximum number, all asymmetric key pairs (266, 268) are revoked for whose public cryptographic key (268) an assignment to the banknote (100) is registered in the blockchain (148) at the time of the entering, which assignment is signed using the banknote-individual second private cryptographic key (118).

6. The method according to claim 5, wherein the revocation is performed up to the predefined maximum number of asymmetric key pairs (266, 268) in chronologically ascending order starting with the asymmetric key pair (266, 268) for whose public cryptographic key (268) a chronologically earliest assignment to the banknote (100) is registered in the blockchain (148) and which is not revoked, or
wherein the revocation is performed up to the predefined maximum number of asymmetric key pairs (266, 268) in chronologically descending order starting with the asymmetric key pair (266, 268) for whose public cryptographic key (268) a chronologically latest assignment is registered in the blockchain (148) and which is not revoked.

7. The method according to any one of claims 1 to 3, wherein the revocation confirmation comprises the first public cryptographic key (268) identifying the revoked first asymmetric key pair (266, 268).

8. The method according to claim 7, wherein the revocation request comprises the first public cryptographic key (268) for identifying the first asymmetric key pair (266, 268) to be revoked by the banknote (100), and/or
wherein the first public cryptographic key (268) is stored in the memory (120) of the banknote (100),
wherein more particularly an assignment of the first public cryptographic key (268) to the first user computer system (260) is stored in the memory (120) of the banknote (100), wherein the assignment comprises an identifier of the first user computer system (260), wherein the revocation request more particularly comprises the identifier of the first user computer system (260) for identifying the first asymmetric key pair (266, 268) to be revoked by the banknote (100).

9. The method according to any one of the preceding claims, wherein the first user computer system (260) and the second user computer system (240) are the same user computer system, or
wherein the first user computer system (260) and the second user computer system (240) are different user computer systems.

10. The method according to any one of the preceding claims, wherein the first user computer system (260) is a first mobile portable terminal device, and/or
wherein the second user computer system (240) is a second mobile portable terminal device, and/or
wherein the blockchain (148) is a blockchain (148) managed by a central bank issuing the banknote (100), and/or
wherein an amount of money assigned to the first blockchain address at the time of revocation of the first asymmetric key pair (266, 268) is transferred to the second blockchain address of the banknote (100), and/or
wherein the method further comprises manufacturing the banknote (100), wherein the manufacturing comprises:
• receiving, by the banknote (100), the identification number (106),
• storing the identification number (106) in the memory (120) of the banknote (100),
• generating, by the security element (102) of the banknote (100), the second asymmetric key pair (116, 118),
• storing the second private cryptographic key (118) in the protected memory area (122) of the memory (120) of the banknote (100),
• storing the second public cryptographic key (116) in the memory (120) of the banknote (100),
• generating, by the banknote (100), a registration request signed using the second private cryptographic key (118), wherein the registration request comprises the identification number (106) and the second public cryptographic key (116) of the banknote (100),
• in response to the receiving of the identification number (106), sending the registration request to a blockchain server (140; 141) for registering the identification number (106) and the second public cryptographic key (116) in the blockchain (148),
wherein more particularly a manufacturer computer system of a manufacturer of the banknote (100) sends the identification number (106) to the banknote (100) and receives the registration request in response to the sending of the identification number (106), wherein the manufacturer computer system comprises a processor (214) and a memory (212) with program instructions (216), wherein a third private cryptographic key of a third asymmetric key pair assigned to a third blockchain address of the manufacturer in a blockchain (148) is stored in a protected memory area of the memory (212),
wherein the method more particularly further comprises:
• signing, by the manufacturer computer system, the registration request using the third private cryptographic key,
• forwarding the registration request signed by the manufacturer computer system to a blockchain server (140; 141) for registering the identification number (106) and the second public cryptographic key (116) in the blockchain (148).

11. The method according to any one of the preceding claims, wherein the method further comprises registering the assignment of the first asymmetric key pair (266, 268) to the banknote (100) in the blockchain (148), wherein the registering comprises:
• generating, by the first user computer system (260), the first asymmetric key pair (266, 268),
• storing the first private cryptographic key (266) in a protected memory area (264) of a memory (262) of the first user computer system (260),
• storing the first public cryptographic key (268) in the memory (262) of the first user computer system (260),
• sending a signature request for signing the first public cryptographic key (268) to the banknote (100), wherein the signature request comprises the first public cryptographic key (268),
• in response to the signature request, receiving a second cryptogram with the signed first public cryptographic key (268) and with the identification number (106) of the banknote (100), wherein the first public cryptographic key (268) is signed with the second private cryptographic key (118) of the banknote (100),
• forwarding the second cryptogram to a blockchain server (140; 141) of the blockchain (148) for entry, wherein the entry of the second cryptogram registers the assignment of the first asymmetric key pair (266, 268) to the identification number (106) of the banknote (100) in the blockchain (148) and, as a result of the registration, enables entries of transactions into the blockchain (148) whose authorizations are based on a signature using the registered first private cryptographic key (266), and/or
wherein a payment of an amount using the first private cryptographic key (266) of the first user computer system (260) comprises:
• creating a transaction authorization by the first user computer system (260) for a transaction of the amount to be paid from the first blockchain address to a fourth blockchain address of a payee, wherein the transaction authorization comprises the first blockchain address to which the first private cryptographic key (266) is assigned, the fourth blockchain address of the payee, and the amount to be paid,
• signing the transaction authorization with the first private cryptographic key (266) of the first user computer system (260),
• sending the signed transaction authorization to a blockchain server (140; 141) of the blockchain (148) for entering the transaction into the blockchain (148), wherein, by the entering of the transaction, the amount to be paid is assigned to the fourth blockchain address of the payee.

12. A user computer system (240) for revoking a first asymmetric key pair (266, 268) of another user computer system (260) using a banknote (100), wherein the first asymmetric key pair (266, 268) comprises a first private cryptographic key (266) and a first public cryptographic key (268), wherein the first asymmetric key pair (266, 268) is assigned to a first blockchain address in a blockchain (148),
wherein the user computer system (240) comprises a processor (244) and a memory (242) with program instructions (246),
wherein an assignment to the banknote (100) is further registered in the blockchain (148) for the first asymmetric key pair (266, 268), which assignment is signed using a banknote-individual second private cryptographic key (118) of a banknote-individual second asymmetric key pair (116, 118) of the banknote (100),
wherein the banknote (100) comprises a security element (102) with a processor (124) and a memory (120) with program instructions (128), wherein an identification number (106) uniquely identifying the banknote (100) is stored in the memory (120), wherein the second private cryptographic key (118) is stored in a protected memory area (122) of the memory (120), wherein the second asymmetric key pair (116, 118) is assigned to a banknote-individual second blockchain address in the blockchain (148),
wherein an execution of the program instructions (246) of the user computer system (240) by the processor causes the processor to control the user computer system (240) to revoke the first asymmetric key pair (266, 268), wherein the revoking comprises:
• sending a revocation request to revoke the first asymmetric key pair (266, 268) from the user computer system (240) to the banknote (100),
• in response to the revocation request, receiving, by the user computer system (240), a cryptogram signed using the second private cryptographic key (118) from the banknote (100), wherein the cryptogram comprises the identification number (106) of the banknote (100) and a revocation confirmation of the banknote (100),
• forwarding, by the user computer system (240), the signed cryptogram to a blockchain server (140; 141) of the blockchain (148) for entering the revocation confirmation of the banknote (100) identified by the identification number (106) into the blockchain (148), wherein by the entering of the revocation confirmation the first asymmetric key pair (266, 268) is revoked and, as a result of the revocation, entries of transactions into the blockchain (148) are blocked whose authorizations are based on a signature using the revoked first private cryptographic key (266).

13. A banknote (100) for revoking a first asymmetric key pair (266, 268) of a first user computer system (260) using a second user computer system (240), wherein the first asymmetric key pair (266, 268) comprises a first private cryptographic key (266) and a first public cryptographic key (268), wherein the first asymmetric key pair (266, 268) is assigned to a first blockchain address in a blockchain (148),
wherein an assignment to the banknote (100) is further registered in the blockchain (148) for the first asymmetric key pair (266, 268), which assignment is signed using a banknote-individual second private cryptographic key (118) of a banknote-individual second asymmetric key pair (116, 118) of the banknote (100),
wherein the banknote (100) comprises a security element (102) with a processor (124) and a memory (120) with program instructions (128), wherein an identification number (106) uniquely identifying the banknote (100) is stored in the memory (120), wherein the second private cryptographic key (118) is stored in a protected memory area (122) of the memory (120), wherein the second asymmetric key pair (116, 118) is assigned to a banknote-individual second blockchain address in the blockchain (148),
wherein an execution of the program instructions (128) of the banknote (100) by the processor causes the processor to control the banknote (100) to revoke the first asymmetric key pair (266, 268), wherein the revoking comprises:
• receiving, by the banknote (100), a revocation request to revoke the first asymmetric key pair (266, 268) from the second user computer system (240),
• generating, by the banknote (100), a cryptogram signed by the banknote (100) using the second private cryptographic key (118), wherein the cryptogram comprises the identification number (106) of the banknote (100) and a revocation confirmation of the banknote (100),
• in response to the revocation request, sending the signed cryptogram from the banknote (100) to the second user computer system (240) for forwarding to a blockchain server (140; 141) of the blockchain (148) for entering the revocation confirmation of the banknote (100) identified by the identification number (106) into the blockchain (148), wherein by the entering of the revocation confirmation the first asymmetric key pair (266, 268) is revoked and, as a result of the revocation, entries of transactions into the blockchain (148) are blocked whose authorizations are based on a signature using the revoked first private cryptographic key (266).

14. A system (161) for revoking a first asymmetric key pair (266, 268) of a first user computer system (260), wherein the system (161) comprises a second user computer system (240) according to claim 12 and a banknote (100) according to claim 13.

15. The system (161) according to claim 14, wherein the system (161) further comprises a blockchain server (140; 141), wherein the blockchain server (140; 141) comprises a processor (142; 143) and a memory (146; 147) with program instructions (144), wherein an execution of the program instructions (144) by the processor (142; 143) causes the processor (142; 143) to control the blockchain server (140; 141) to revoke the first asymmetric key pair (266, 268), wherein the revoking comprises:
• receiving, by the blockchain server (140; 141), the signed cryptogram from the second user computer system (240) for entering the revocation confirmation of the banknote (100) identified by the identification number (106) into the blockchain (148),
• verifying, by the blockchain server (140; 141), the signature of the cryptogram using the second public cryptographic key (116),
• upon a successful verification, entering the revocation confirmation into the blockchain (148), wherein by the entering of the revocation confirmation the first asymmetric key pair (266, 268) is revoked and, as a result of the revocation, entries of transactions into the blockchain (148) are blocked whose authorizations are based on a signature using the revoked first private cryptographic key (266), and/or
wherein the system (161) further comprises the first user computer system (260).

## Revendications

1. Procédé de révocation d'une première paire de clés asymétriques (266, 268) d'un premier système informatique d'utilisateur (260) en utilisant un billet de banque (100), la première paire de clés asymétriques (266, 268) comprenant une première clé cryptographique privée (266) et une première clé cryptographique publique (268), la première paire de clés asymétriques (266, 268) étant associée à une première adresse de chaîne de blocs dans une chaîne de blocs (148),
une association au billet de banque (100) étant en outre enregistrée dans la chaîne de blocs (148) pour la première paire de clés asymétriques (266, 268), laquelle est signée en utilisant une deuxième clé cryptographique privée (118) individuelle au billet de banque d'une deuxième paire de clés asymétriques (116, 118) individuelle au billet de banque du billet de banque (100),
le billet de banque (100) comprenant un élément de sécurité (102) avec un processeur (124) et une mémoire (120) avec des instructions de programme (128), un numéro d'identification (106) identifiant de manière univoque le billet de banque (100) étant stocké dans la mémoire (120), la deuxième clé cryptographique privée (118) étant stockée dans une zone de mémoire (122) protégée de la mémoire (120), la deuxième paire de clés asymétriques (116, 118) étant associée à une deuxième adresse de chaîne de blocs individuelle au billet de banque dans la chaîne de blocs (148),
le procédé comprenant, en utilisant un deuxième système informatique d'utilisateur (240) :
• l'envoi d'une demande de révocation pour la révocation de la première paire de clés asymétriques (266, 268) du deuxième système informatique d'utilisateur (240) au billet de banque (100),
• en réponse à la demande de révocation, la réception d'un premier cryptogramme signé en utilisant la deuxième clé cryptographique privée (118) du billet de banque (100) par le deuxième système informatique d'utilisateur (240), le premier cryptogramme comprenant le numéro d'identification (106) du billet de banque (100) et une confirmation de révocation du billet de banque (100),
• le transfert du premier cryptogramme signé par le deuxième système informatique d'utilisateur (240) à un serveur de chaîne de blocs (140 ; 141) de la chaîne de blocs (148) pour l'enregistrement de la confirmation de révocation du billet de banque (100) identifié par le numéro d'identification (106) dans la chaîne de blocs (148), la première paire de clés asymétriques (266, 268) étant révoquée par l'enregistrement de la confirmation de révocation et des enregistrements de transactions dans la chaîne de blocs (148) étant bloqués à la suite de la révocation, dont les autorisations sont basées sur une signature utilisant la première clé cryptographique privée (266) révoquée.

2. Procédé selon la revendication 1, la première adresse de chaîne de blocs étant la première clé cryptographique publique (268) ou une adresse de chaîne de blocs dérivée de la première clé cryptographique publique (268).

3. Procédé selon l'une quelconque des revendications précédentes, le numéro d'identification (106) étant un numéro de série du billet de banque (100) ou un numéro dérivé du numéro de série du billet de banque (100).

4. Procédé selon l'une quelconque des revendications précédentes, toutes les paires de clés asymétriques (266, 268) étant révoquées par l'enregistrement de la confirmation de révocation, pour la clé cryptographique publique (268) desquelles une association au billet de banque (100) est enregistrée dans la chaîne de blocs (148) au moment de l'enregistrement, laquelle est signée en utilisant la deuxième clé cryptographique privée (118) individuelle au billet de banque, des enregistrements de transactions dans la chaîne de blocs (148) étant bloqués à la suite des révocations, dont les autorisations sont basées sur une signature utilisant une clé cryptographique privée (266) de l'une des paires de clés asymétriques (266, 268) révoquées.

5. Procédé selon l'une quelconque des revendications 1 à 3, toutes les paires de clés asymétriques (266, 268) étant révoquées par l'enregistrement de la confirmation de révocation jusqu'à un nombre maximal prédéfini, pour la clé cryptographique publique (268) desquelles une association au billet de banque (100) est enregistrée dans la chaîne de blocs (148) au moment de l'enregistrement, laquelle est signée en utilisant la deuxième clé cryptographique privée (118) individuelle au billet de banque.

6. Procédé selon la revendication 5, la révocation étant effectuée jusqu'au nombre maximal prédéfini de paires de clés asymétriques (266, 268) dans un ordre croissant dans le temps en commençant par la paire de clés asymétriques (266, 268), pour la clé cryptographique publique (268) de laquelle une association la plus précoce dans le temps au billet de banque (100) est enregistrée dans la chaîne de blocs (148) et qui n'est pas révoquée, ou
la révocation étant effectuée jusqu'au nombre maximal prédéfini de paires de clés asymétriques (266, 268) dans un ordre décroissant dans le temps en commençant par la paire de clés asymétriques (266, 268), pour la clé cryptographique publique (268) de laquelle une association la plus tardive dans le temps est enregistrée dans la chaîne de blocs (148) et qui n'est pas révoquée.

7. Procédé selon l'une quelconque des revendications 1 à 3, la confirmation de révocation comprenant la première clé cryptographique publique (268), laquelle identifie la première paire de clés asymétriques (266, 268) révoquée.

8. Procédé selon la revendication 7, la demande de révocation comprenant la première clé cryptographique publique (268) pour l'identification de la première paire de clés asymétriques (266, 268) à révoquer par le billet de banque (100), et/ou
la première clé cryptographique publique (268) étant stockée dans la mémoire (120) du billet de banque (100),
une association de la première clé cryptographique publique (268) au premier système informatique d'utilisateur (260) étant en particulier stockée dans la mémoire (120) du billet de banque (100), l'association comprenant un identificateur du premier système informatique d'utilisateur (260), la demande de révocation comprenant en particulier l'identificateur du premier système informatique d'utilisateur (260) pour l'identification de la première paire de clés asymétriques (266, 268) à révoquer par le billet de banque (100).

9. Procédé selon l'une quelconque des revendications précédentes, le premier système informatique d'utilisateur (260) et le deuxième système informatique d'utilisateur (240) étant le même système informatique d'utilisateur, ou
le premier système informatique d'utilisateur (260) et le deuxième système informatique d'utilisateur (240) étant des systèmes informatiques d'utilisateur différents.

10. Procédé selon l'une quelconque des revendications précédentes, le premier système informatique d'utilisateur (260) étant un premier terminal portable mobile, et/ou
le deuxième système informatique d'utilisateur (240) étant un deuxième terminal portable mobile, et/ou
la chaîne de blocs (148) étant une chaîne de blocs (148) gérée par une banque centrale émettant le billet de banque (100), et/ou
une somme d'argent associée à la première adresse de chaîne de blocs au moment de la révocation de la première paire de clés asymétriques (266, 268) étant transférée à la deuxième adresse de chaîne de blocs du billet de banque (100), et/ou
le procédé comprenant en outre une fabrication du billet de banque (100), la fabrication comprenant :
• la réception du numéro d'identification (106) par le billet de banque (100),
• le stockage du numéro d'identification (106) dans la mémoire (120) du billet de banque (100),
• la génération de la deuxième paire de clés asymétriques (116, 118) par l'élément de sécurité (102) du billet de banque (100),
• le stockage de la deuxième clé cryptographique privée (118) dans la zone de mémoire (122) protégée de la mémoire (120) du billet de banque (100),
• le stockage de la deuxième clé cryptographique publique (116) dans la mémoire (120) du billet de banque (100),
• la génération d'une demande d'enregistrement signée en utilisant la deuxième clé cryptographique privée (118) par le billet de banque (100), la demande d'enregistrement comprenant le numéro d'identification (106) et la deuxième clé cryptographique publique (116) du billet de banque (100),
• en réponse à la réception du numéro d'identification (106), envoi de la demande d'enregistrement pour enregistrer le numéro d'identification (106) et la deuxième clé cryptographique publique (116) dans la chaîne de blocs (148) par un serveur de chaîne de blocs (140 ; 141),
un système informatique de fabricant d'un fabricant du billet de banque (100) envoyant en particulier le numéro d'identification (106) au billet de banque (100) et recevant la demande d'enregistrement en réponse à l'envoi du numéro d'identification (106), le système informatique de fabricant comprenant un processeur (214) et une mémoire (212) avec des instructions de programme (216), une troisième clé cryptographique privée d'une troisième paire de clés asymétriques associée à une troisième adresse de chaîne de blocs du fabricant dans une chaîne de blocs (148) est stockée dans une zone de mémoire protégée de la mémoire (212),
le procédé comprenant en particulier en outre :
• la signature de la demande d'enregistrement en utilisant la troisième clé cryptographique privée par le système informatique de fabricant,
• le transfert de la demande d'enregistrement signée par le système informatique de fabricant à un serveur de chaîne de blocs (140 ; 141) pour enregistrer le numéro d'identification (106) et la deuxième clé cryptographique publique (116) dans la chaîne de blocs (148).

11. Procédé selon l'une quelconque des revendications précédentes, le procédé comprenant en outre l'enregistrement de l'association de la première paire de clés asymétriques (266, 268) au billet de banque (100) dans la chaîne de blocs (148), l'enregistrement comprenant :
• la génération de la première paire de clés asymétriques (266, 268) par le premier système informatique d'utilisateur (260),
• le stockage de la première clé cryptographique privée (266) dans une zone de mémoire (264) protégée d'une mémoire (262) du premier système informatique d'utilisateur (260),
• le stockage de la première clé cryptographique publique (268) dans la mémoire (262) du premier système informatique d'utilisateur (260),
• l'envoi d'une demande de signature pour signer la première clé cryptographique publique (268) au billet de banque (100), la demande de signature comprenant la première clé cryptographique publique (268),
• en réponse à la demande de signature, la réception d'un deuxième cryptogramme avec la première clé cryptographique publique (268) signée et avec le numéro d'identification (106) du billet de banque (100), la première clé cryptographique publique (268) étant signée avec la deuxième clé cryptographique privée (118) du billet de banque (100),
• le transfert du deuxième cryptogramme à un serveur de chaîne de blocs (140 ; 141) de la chaîne de blocs (148) pour l'enregistrement, l'association de la première paire de clés asymétriques (266, 268) au numéro d'identification (106) du billet de banque (100) étant enregistrée dans la chaîne de blocs (148) par l'enregistrement du deuxième cryptogramme et des enregistrements de transactions dans la chaîne de blocs (148) étant rendus possibles à la suite de l'enregistrement, dont les autorisations sont basées sur une signature utilisant la première clé cryptographique privée (266) enregistrée, et/ou
un paiement d'un montant en utilisant la première clé cryptographique privée (266) du premier système informatique d'utilisateur (260) comprenant :
• l'établissement d'une autorisation de transaction par le premier système informatique d'utilisateur (260) pour une transaction du montant à payer de la première adresse de chaîne de blocs à une quatrième adresse de chaîne de blocs d'un bénéficiaire de paiement, l'autorisation de transaction comprenant la première adresse de chaîne de blocs à laquelle est associée la première clé cryptographique privée (266), la quatrième adresse de chaîne de blocs du bénéficiaire de paiement et le montant à payer,
• la signature de l'autorisation de transaction avec la première clé cryptographique privée (266) du premier système informatique d'utilisateur (260),
• l'envoi de l'autorisation de transaction signée à un serveur de chaîne de blocs (140 ; 141) de la chaîne de blocs (148), le montant à payer étant associé à la quatrième adresse de chaîne de blocs du bénéficiaire de paiement par l'enregistrement de la transaction.

12. Système informatique d'utilisateur (240) pour la révocation d'une première paire de clés asymétriques (266, 268) d'un autre système informatique d'utilisateur (260) en utilisant un billet de banque (100), la première paire de clés asymétriques (266, 268) comprenant une première clé cryptographique privée (266) et une première clé cryptographique publique (268), la première paire de clés asymétriques (266, 268) étant associée à une première adresse de chaîne de blocs dans une chaîne de blocs (148),
le système informatique d'utilisateur (240) comprenant un processeur (244) et une mémoire (242) avec des instructions de programme (246),
une association au billet de banque (100) étant en outre enregistrée dans la chaîne de blocs (148) pour la première paire de clés asymétriques (266, 268), laquelle est signée en utilisant une deuxième clé cryptographique privée (118) individuelle au billet de banque d'une deuxième paire de clés asymétriques (116, 118) individuelle au billet de banque du billet de banque (100),
le billet de banque (100) comprenant un élément de sécurité (102) avec un processeur (124) et une mémoire (120) avec des instructions de programme (128), un numéro d'identification (106) identifiant de manière univoque le billet de banque (100) étant stocké dans la mémoire (120), la deuxième clé cryptographique privée (118) étant stockée dans une zone de mémoire (122) protégée de la mémoire (120), la deuxième paire de clés asymétriques (116, 118) étant associée à une deuxième adresse de chaîne de blocs individuelle au billet de banque dans la chaîne de blocs (148),
une exécution des instructions de programme (246) du système informatique d'utilisateur (240) par le processeur amenant le processeur à commander le système informatique d'utilisateur (240) pour la révocation de la première paire de clés asymétriques (266, 268), la révocation comprenant :
• l'envoi d'une demande de révocation pour la révocation de la première paire de clés asymétriques (266, 268) du système informatique d'utilisateur (240) au billet de banque (100),
• en réponse à la demande de révocation, la réception d'un cryptogramme signé en utilisant la deuxième clé cryptographique privée (118) du billet de banque (100) par le système informatique d'utilisateur (240), le cryptogramme comprenant le numéro d'identification (106) du billet de banque (100) et une confirmation de révocation du billet de banque (100),
• le transfert du cryptogramme signé par le système informatique d'utilisateur (240) à un serveur de chaîne de blocs (140 ; 141) de la chaîne de blocs (148) pour l'enregistrement de la confirmation de révocation du billet de banque (100) identifié par le numéro d'identification (106) dans la chaîne de blocs (148), la première paire de clés asymétriques (266, 268) étant révoquée par l'enregistrement de la confirmation de révocation et des enregistrements de transactions dans la chaîne de blocs (148) étant bloqués à la suite de la révocation, dont les autorisations sont basées sur une signature utilisant la première clé cryptographique privée (266) révoquée.

13. Billet de banque (100) pour la révocation d'une première paire de clés asymétriques (266, 268) d'un premier système informatique d'utilisateur (260) en utilisant un deuxième système informatique d'utilisateur (240), la première paire de clés asymétriques (266, 268) comprenant une première clé cryptographique privée (266) et une première clé cryptographique publique (268), la première paire de clés asymétriques (266, 268) étant associée à une première adresse de chaîne de blocs dans une chaîne de blocs (148),
une association au billet de banque (100) étant en outre enregistrée dans la chaîne de blocs (148) pour la première paire de clés asymétriques (266, 268), laquelle est signée en utilisant une deuxième clé cryptographique privée (118) individuelle au billet de banque d'une deuxième paire de clés asymétriques (116, 118) individuelle au billet de banque du billet de banque (100),
le billet de banque (100) comprenant un élément de sécurité (102) avec un processeur (124) et une mémoire (120) avec des instructions de programme (128), un numéro d'identification (106) identifiant de manière univoque le billet de banque (100) étant stocké dans la mémoire (120), la deuxième clé cryptographique privée (118) étant stockée dans une zone de mémoire (122) protégée de la mémoire (120), la deuxième paire de clés asymétriques (116, 118) étant associée à une deuxième adresse de chaîne de blocs individuelle au billet de banque dans la chaîne de blocs (148),
une exécution des instructions de programme (128) du billet de banque (100) par le processeur amenant le processeur à commander le billet de banque (100) pour la révocation de la première paire de clés asymétriques (266, 268), la révocation comprenant :
• la réception d'une demande de révocation pour la révocation de la première paire de clés asymétriques (266, 268) du deuxième système informatique d'utilisateur (240) par le billet de banque (100),
• la génération d'un cryptogramme signé en utilisant la deuxième clé cryptographique privée (118) du billet de banque (100) par le billet de banque (100), le cryptogramme comprenant le numéro d'identification (106) du billet de banque (100) et une confirmation de révocation du billet de banque (100),
• en réponse à la demande de révocation, l'envoi du cryptogramme signé du billet de banque (100) au deuxième système informatique d'utilisateur (240) pour le transfert à un serveur de chaîne de blocs (140 ; 141) de la chaîne de blocs (148) pour l'enregistrement de la confirmation de révocation du billet de banque (100) identifié par le numéro d'identification (106) dans la chaîne de blocs (148), la première paire de clés asymétriques (266, 268) étant révoquée par l'enregistrement de la confirmation de révocation et des enregistrements de transactions dans la chaîne de blocs (148) étant bloqués à la suite de la révocation, dont les autorisations sont basées sur une signature utilisant la première clé cryptographique privée (266) révoquée.

14. Système (161) pour la révocation d'une première paire de clés asymétriques (266, 268) d'un premier système informatique d'utilisateur (260), le système (161) comprenant un deuxième système informatique d'utilisateur (240) selon la revendication 12 et un billet de banque (100) selon la revendication 13.

15. Système (161) selon la revendication 14, le système (161) comprenant en outre un serveur de chaîne de blocs (140 ; 141), le serveur de chaîne de blocs (140 ; 141) comprenant un processeur (142 ; 143) et une mémoire (146 ; 147) avec des instructions de programme (144), une exécution des instructions de programme (144) par le processeur (142 ; 143) amenant le processeur (142 ; 143) à commander le serveur de chaîne de blocs (140 ; 141) pour la révocation de la première paire de clés asymétriques (266, 268), la révocation comprenant :
• la réception du cryptogramme signé du deuxième système informatique d'utilisateur (240) par le serveur de chaîne de blocs (140 ; 141) pour l'enregistrement de la confirmation de révocation du billet de banque (100) identifié par le numéro d'identification (106) dans la chaîne de blocs (148),
• la vérification de la signature du cryptogramme par le serveur de chaîne de blocs (140 ; 141) en utilisant la deuxième clé cryptographique publique (116),
• lors d'une vérification réussie, l'enregistrement de la confirmation de révocation dans la chaîne de blocs (148), la première paire de clés asymétriques (266, 268) étant révoquée par l'enregistrement de la confirmation de révocation et des enregistrements de transactions dans la chaîne de blocs (148) étant bloqués à la suite de la révocation, dont les autorisations sont basées sur une signature utilisant la première clé cryptographique privée (266) révoquée, et/ou
le système (161) comprenant en outre le premier système informatique d'utilisateur (260).
